(19) **Europäisches Patentamt**
**European Patent Office**
**Office européen des brevets**

(11) **EP 4 440 036 A1**

(12) **EUROPÄISCHE PATENTANMELDUNG**

(43) Veröffentlichungstag:
02.10.2024 Patentblatt 2024/40

(21) Anmeldenummer: 24167176.7

(22) Anmeldetag: 28.03.2024

(51) Internationale Patentklassifikation (IPC):
*H04L 9/32* (2006.01) *H04L 9/00* (2022.01)

(52) Gemeinsame Patentklassifikation (CPC):
**H04L 9/3247; H04L 9/3236; H04L 9/3297;
H04L 9/50**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(30) Priorität: **29.03.2023 DE 102023108024**

(71) Anmelder: **Bundesdruckerei GmbH
10969 Berlin (DE)**

(72) Erfinder:
• **NGUYEN, Kim
10437 Berlin (DE)**
• **BYSZIO-WEGENER, FRANK
16348 Wandlitz (DE)**
• **KLAUßNER, Jan
10249 Berlin (DE)**
• **WIRTH, Klaus-Dieter
12683 Berlin (DE)**

(74) Vertreter: **Richardt Patentanwälte PartG mbB
Wilhelmstraße 7
65185 Wiesbaden (DE)**

(54) **VERFAHREN ZUR BLOCKCHAIN-BASIERTEN SICHERUNG VON DIGITALEN SIGNATUREN**

(57) Die Erfindung betrifft ein Verfahren zur blockchain-basierten Sicherung von digitalen Signaturen. Das Verfahren umfasst ein Bereitstellen einer Blockchain (110) und ein Empfangen einer Eintragungsanfrage zur Eintragung eines Hashwerts (136) einer mittels der Blockchain (110) zu sichernden digitalen Signatur (134). Ferner umfasst das Verfahren ein Erstellen eines zusätzlichen Blocks (106) für die Blockchain (110), in welchen der empfangene Hashwert (136) der zu sichernden Signatur (134) eingetragen wird, und ein Hinzufügen des zusätzlichen Blocks (106) mit dem empfangenen Hashwert (136) der zu sichernden Signatur (134) zu der Blockchain (110).

| | |
|---|---|
| Bereitstellen Blockchain | 200 |
| Empfangen Eintragungsanfrage mit Hashwert | 202 |
| Erstellen zusätzlicher Block mit Hashwert | 208 |
| Hinzufügen zusätzlicher Block | 210 |

Fig. 3

EP 4 440 036 A1

**Beschreibung**

Die Erfindung betrifft ein Verfahren zur blockchain-basierten Sicherung von digitalen Signaturen, einen Server zur blockchain-basierten Sicherung von digitalen Signaturen sowie eine Blockchain zur blockchain-basierten Sicherung von digitalen Signaturen.

Im Zuge der zunehmenden Digitalisierung, Automatisierung und Vernetzung in allen Lebens- und Arbeitsbereichen nehmen kryptographische Verfahren zur Absicherung der dabei verarbeiteten digitalen Daten eine zentrale Bedeutung ein. Ein wesentlicher Baustein dieser kryptographischen Verfahren sind digitale Signaturen. Dabei kommen digitale Signaturen in vielfältigen Bereichen zum Einsatz, wie beispielsweise im E-Government (E-Regierung), in der E-Justiz (elektronischer Rechtsverkehr), im E-Commerce (Onlinehandel) und ähnlichen Vertragsunterzeichnungen in der Privatwirtschaft. Digitale Signaturen können aber auch anderweitigem Datenaustauch und/oder zur Bestätigung von Daten in anderweitigem Kontext zum Einsatz kommen. E-Government bezeichnet eine Vereinfachung, Durchführung und Unterstützung von Prozessen zur Information, Kommunikation und Transaktion innerhalb und zwischen staatlichen, kommunalen und sonstigen behördlichen Institutionen sowie zwischen diesen Institutionen und Bürgern bzw. Unternehmen und Organisationen durch den Einsatz von digitalen Informations- und Kommunikationstechnologien. E-Justiz bezieht sich auf einen Einsatz von IT-Verfahren innerhalb der Justiz und zwischen Organen der Justiz, der öffentlichen Verwaltung und Privatpersonen. E-Justiz ist Teil des E-Governments. E-Commerce bezieht sich Kaufvorgänge und Verkaufsvorgänge, welche auf elektronischem Wegen insbesondere unter Verwendung des Internets, abgewickelt werden.

Digitale Signaturen bzw. die den entsprechenden Signaturen zugrundeliegenden kryptographischen Mittel sind darauf ausgelegt innerhalb eines Zeitraums ihrer technologischen Geltung eine ausreichende Sicherheit zu gewährleisten, ausgehend von den innerhalb des entsprechenden Zeitraums zur Verfügung stehenden technischen Mitteln. Allerdings kann sich bei Signaturen die Notwendigkeit ergeben, dass deren Vertrauenswürdigkeit über den Zeitraum ihrer technologischen Geltung hinaus sichergestellt werden muss. Dies kann etwa der Fall bei einer Signatur langfristig gültiger Daten, wie etwa einem Vertrag oder einem Zeugnis, sein. Ebenso ergibt sich eine Notwendigkeit einer Beweiswerterhaltung für digitale Signaturen. Es muss sich nachträglich sicher nachweisen lassen, dass eine valide Signatur zu einem früheren Zeitpunkt erstellt wurde. Wenn Signaturen nun nachträglich leicht gefälscht werden könnten, etwa infolge neuer technischer Mittel, könnte ein solcher Beweis nicht mehr erbracht werden. Eine Beweiswerterhaltung, etwa unter Verwendung eines Archivs erstellter Signaturen, stellt eine technische Herausforderung dar, da diese langlebig sein muss.

Aufgrund neuer oder verbesserter Methoden der Kryptoanalyse und immer leistungsfähigerer Rechner nimmt die Effizienz von Angriffen auf klassische digitale Signaturverfahren, beispielsweise basierend auf dem RSA(Rivest-Shamir-Adleman)-Schema oder auf Elliptischer-Kurven-Kryptographie ECC (engl. "Elliptic Curve Cryptography"/ECC), im Laufe der Zeit zu. Nicht vorhersehbare Entwicklungen wie die Entdeckung deutlich schnellerer Algorithmen oder gar der Einsatz eines leistungsfähigen Quantencomputers bergen zumindest für die mittel- und langfristige Sicherheit entsprechender Signaturen Risiken. Spätestens mit der Einführung effektiver Quantencomputer steht zu erwarten, dass diese Signaturverfahren ihre Sicherheit einbüßen. Mithin steht dann auch die Sicherheit entsprechender archivierter Signaturen zur Beweiswerterhaltung in Frage.

Der Erfindung liegt die Aufgabe zugrunde, ein Verfahren zur langfristigen Sicherung von digitalen Signaturen, insbesondere gegenüber einem Einsatz von Quantencomputern, zu schaffen.

Die der Erfindung zugrunde liegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein Verfahren zur blockchain-basierten Sicherung von digitalen Signaturen. Das Verfahren umfasst:

- Bereitstellen einer Blockchain,
- Empfangen einer Eintragungsanfrage zur Eintragung eines Hashwerts einer mittels der Blockchain zu sichernden digitalen Signatur,
- Erstellen eines zusätzlichen Blocks für die Blockchain, in welchen der empfangene Hashwert der zu sichernden Signatur eingetragen wird,
- Hinzufügen des zusätzlichen Blocks mit dem empfangenen Hashwert der zu sichernden Signatur zu der Blockchain.

Ausführungsformen können den Vorteil haben, dass ein Verfahren zur langfristigen Sicherung von digitalen Signaturen, insbesondere gegenüber einem Einsatz von Quantencomputern, bereitgestellt werden kann. Beispielsweise kann eine Blockchain infolge der hashbasierten Verknüpfungen zwischen den Blöcken sicherstellen, dass die Blockchain nicht nachträglich geändert werden kann. Dabei kann eine Verwendung von Hashfunktionen zur Sicherung der Blöcke, diese auch gegenüber einem Angriff unter Verwendung eines Quantencomputers schützen. Die resultierende kryptographisch verknüpfte Kette der Blöcke ist somit unveränderbar, fälschungs- und manipulationssicher. Bei den entsprechenden Hashfunktionen handelt es sich um kryptographische Hashfunktionen, insbesondere kollisionsresistente Hashfunktionen.

Bei der blockchain-basierten Sicherung von digitalen Signaturen handelt es sich beispielsweise um eine quantencomputersichere Sicherung der digitalen Signaturen. Bei der Blockchain handelt es sich beispielsweise um eine quantencomputersichere Blockchain.

Die Verwendung einer Blockchain zur Sicherung der digitalen Signatur ermöglicht beispielsweise eine quantensichere bzw. quantencomputersichere Sicherung der Signatur, unabhängig davon, ob es sich bei der mittels der Blockchain gesicherten Signatur selbst um eine quantensichere Signatur handelt oder nicht. Beispielsweise handelt es sich bei der mittels der Blockchain zu sichernden digitalen Signatur um eine Signatur, welche selbst nicht quantensicher ist und für welche eine Quantensicherung durch die Blockchain implementiert wird. Beispielsweise basiert die kryptographische Sicherung der entsprechenden Signatur selbst auf dem RSA-Schema oder auf ECC. Beispielsweise handelt es sich bei der mittels der Blockchain zu sichernden digitalen Signatur um eine Signatur, welche selbst quantensicher ist und deren Sicherheitsniveau gegenüber Angriffen mit einem oder mehreren Quantencomputer durch die von der Blockchain bereitgestellt zusätzliche Quantensicherung erhöht wird. Beispielsweise handelt es sich bei den entsprechenden quantensicheren Signaturen, deren kryptographische Sicherung gegen Angriffe mit Quantencomputern auf Hash-Funktionen beruht, wie etwa bei Merkle-Signaturen.

Für beide Arten von Signaturen, d.h. für nicht quantensichere Signaturen, wie auch für quantensichere Signaturen, ermöglicht die Blockchain beispielsweise eine quantensichere Archivierung der entsprechenden Signaturen. Mittels der Blockchain kann eine langfristige Beweiswerterhaltung für Signaturen implementiert werden mit einer kryptographischen Absicherung, welche selbst im Zeitalter von Quantencomputern einen effektiven Schutz der archivierten Signaturen sicherzustellen vermag. Für die in der Blockchain archivierten Signaturen kann somit beispielsweise langfristig in quantensicherer Weise anhand der entsprechenden Einträge in der Blockchain nachgewiesen werden, was von wem und gegebenenfalls wann signiert wurde.

Der empfangene Hashwert der zu sichernden Signatur, welcher in den zusätzlichen Block für die Blockchain eingetragen wird, ist zu unterscheiden von den Hashwerten, welche zur Sicherung der Blockchain bzw. zur Verknüpfung der Blöcke der Blockchain untereinander verwendet werden. So ist der empfangene Hashwert der zu sichernden Signatur insbesondere unabhängig von dem Inhalt eines dem zusätzlichen Block in der Blockchain unmittelbar vorangehenden Blocks. Der zusätzliche Block umfasst zusätzlich zu dem empfangenen Hashwert der zu sichernden Signatur beispielsweise einen Block-Hashwert des dem zusätzlichen Block in der Blockchain unmittelbar vorangehenden Blocks. Dieser Block-Hashwert wird beispielsweise in einen Block-Header des zusätzlichen Blocks eingetragen, während der empfangene Hashwert der zu sichernden Signatur als Teil des Payloads bzw. der Nutzdaten in den zusätzlichen Block eingetragen wird. Beispielsweise handelt es sich bei dem Block-Hashwert um einen direkt oder unter Verwendung eines Hashbaums gebildet Hashwerts des dem zusätzlichen Block in der Blockchain unmittelbar vorangehenden Blocks bzw. der von dem entsprechenden Block umfassten Daten. Beispielsweise handelt es sich bei dem Block-Hashwert um einen Hashwert des Block-Headers des dem zusätzlichen Block in der Blockchain unmittelbar vorangehenden Blocks. Ein Block-Header eines Blocks der Blockchain, wie etwa des zusätzlichen Blocks der Blockchain, umfasst beispielsweise einen Block-Hashwert, etwa einen Hashwert des Block-Headers des dem entsprechenden Block in der Blockchain unmittelbar vorangehenden Blocks, und einen Wurzel-Hashwert eines Hashbaums, welcher aus dem Payload bzw. den Nutzdaten des entsprechenden Blocks berechnet wird. Im Falle des zusätzlichen Blocks geht in die Berechnung des Hashbaums und damit des Wurzel-Hashwerts für den Block-Header des zusätzlichen Blocks beispielsweise auch der empfangene Hashwert der zu sichernden Signatur ein. Ferner umfasst ein Block-Header eines Blocks der Blockchain beispielsweise noch ein Nonce, welches so gewählt ist, dass ein für den entsprechenden Block-Header mit dem Nonce berechneter Block-Hashwert ein vordefiniertes Kriterium erfüllt, etwa eine vordefinierte Anzahl an inertialen Nullen aufweist.

Bei dem empfangenen Hashwert der zu sichernden Signatur, welcher in den zusätzlichen Block für die Blockchain eingetragen wird, handelt es sich beispielsweise um einen Teil des Payloads bzw. der Nutzdaten des zusätzlichen Blocks. Insbesondere handelt es sich bei dem Hashwert der zu sichernden Signatur um einen Hashwert einer einzelnen Signatur, d.h. der zu sichernden Signatur. Beispielsweise wird in den zusätzlichen Block für die Blockchain ferner ein Block-Hashwert des dem zusätzlichen Block in der Blockchain unmittelbar vorangehenden Blocks eingetragen. Bei einem für einen Block der Blockchain berechneten Block-Hashwert, etwa für den dem zusätzlichen Block in der Blockchain unmittelbar vorangehenden Block, handelt es sich nicht um einen Teil des Payloads bzw. der Nutzdaten des entsprechenden Blocks. Beispielsweise handelt es sich bei dem Block-Hashwert um einen Hashwert des gesamten Inhalts des entsprechenden Blocks. Wird zur Berechnung des Block-Hashwerts ein Hashbaum verwendet, so werden die in die Berechnung des Hashbaums eingehenden einzelnen Hashwerte in der Blockchain beispielsweise nicht gespeichert. Lediglich ein Wurzel-Hashwert des Hashbaums wird beispielsweise gespeichert. Dieser Wurzel-Hashwert bezieht sich jedoch auf das gesamte Payload bzw. die gesamten Nutzdaten eines Blocks, für welchen der Wurzel-Hashwert berechnet wird. Ein Block-Hashwerte wird beispielsweise direkt oder unter Verwendung eines Hashbaums gebildet. In beiden Fällen liegen am Ende keine Hashwerte einzelner Datenelemente des Payloads bzw. der Nutzdaten vor, sondern ein Block-Hashwert in Form eines Gesamthashwerts bzw. eines Wurzel-hashwerts des Payloads bzw. der Nutzdaten des entsprechenden Blocks. Der Block-Hash-wert ist beispielsweise ein Hashwert, welcher für einen Block-Header eines Blocks der Blockchain berechnet wird, wobei der Block-Header einen unter Verwendung des Payloads bzw. der Nutzdaten des entsprechenden Blocks berechneten Wurzelhashwert umfass. Damit beruht beispielsweise auch der Block-Hashwert auf einem Wurzel-Hashwert.

Bei dem empfangenen Hashwert der zu sichernden Signatur handelt es sich beispielsweise um einen unter Verwendung der entsprechenden Signatur berechneten Hashwert. Beispielsweise handelt es sich dabei insbesondere nicht um die entsprechende Signatur selbst und auch nicht um einen in die Berechnung der entsprechenden Signatur eingehenden Hashwert. Zum Berechnen des Hashwerts der zu sichernden Signatur muss beispielsweise die entsprechende Signatur vorliegen.

Eine Anwendung einer Hashfunktion auf eine zu sichernde Signatur hat beispielsweise den Vorteil, dass die entsprechende Signatur gegenüber Angriffen unter Verwendung eines Quantencomputers abgesichert werden kann, unabhängig davon, ob die entsprechende Signatur selbst bereits quantencomputersicher ist oder nicht.

Nach Ausführungsformen ist die zu sichernde digitale Signatur zusätzlich mittels einer Hashfunktion gesichert. Die Sicherung der Signatur mittels Hashfunktion umfasst eine Verwendung der Hashfunktion zur Erzeugung eines kryptographischen Schlüssels, welcher der zu sichernden Signatur zugeordnet ist. Beispielsweise wird für die Erstellung der Signatur ein privater kryptographischer Schlüssel eines asymmetrischen Schlüsselpaars als Signaturschlüssel verwendet. Der zugehörige öffentliche kryptographische Schlüssel des asymmetrischen Schlüsselpaars wird beispielsweise unter Verwendung der Hashfunktion erzeugt und dient als Verifikationsschlüssel zum Verifizieren der Signatur. Da der öffentliche kryptographische Schlüssel zu demselben asymmetrischen Schlüsselpaar, wie der private kryptographische Schlüssel gehört, und als Verifikationsschlüssel zum Verifizieren der Signatur dient, die unter Verwendung des privaten kryptographischen Schlüssels als Signaturschlüssel erzeugt wurde, ist der entsprechende öffentliche kryptographische Schlüssel der entsprechenden Signatur zugeordnet. Die Sicherheit der verwendeten kryptographischen Schlüssel, d.h. des privaten und des öffentlichen kryptographischen Schlüssels, und damit die Sicherheit der entsprechenden Signatur selbst basiert somit auf der verwendeten Hashfunktion. Um die Signatur kompromittieren zu können wird ein Zugriff auf den privaten kryptographischen Schlüssel benötigt. Der Zusammenhang zwischen privatem und öffentlichem kryptographischem Schlüssel ist aber beispielsweise durch die zur Erzeugung des öffentlichen kryptographischen Schlüssels verwendete Hashfunktion abgesichert. Somit lässt sich der private kryptographische Schlüssel nicht aus dem öffentlichen kryptographischen Schlüssel ableiten, ohne den Schutz der Hashfunktion zu überwinden.

Bei der sichernden digitalen Signatur handelt es sich beispielsweise um eine quantencomputersichere Signatur. Beispielsweise handelt es sich bei der in der Blockchain zu sichernden digitalen Signatur selbst bereits um eine quantensichere Signatur. Die Resistenz der Signatur selbst gegen Angriffe unter Verwendung eines Quantencomputers beruht in diesem Fall beispielsweise darauf, dass die kryptographische Sicherheit der entsprechenden Signatur auf der Existenz sicherer Hashfunktionen beruht. Eine solche Signatur ist mittels einer Hashfunktion gesichert. Die Sicherung der Signatur mittels Hashfunktion umfasst beispielsweise eine Verwendung der Hashfunktion zur Erzeugung eines kryptographischen Schlüssels, welcher der zu sichernden Signatur zugeordnet ist. Bei den entsprechenden Hashfunktionen handelt es sich um eine kryptographische Hashfunktion, insbesondere eine kollisionsresistente Hashfunktion. Beispielsweise wird für die Erstellung der Signatur ein privater kryptographischer Schlüssel eines asymmetrischen Schlüsselpaars verwendet. Der zugehörige öffentliche kryptographische Schlüssel des asymmetrischen Schlüsselpaars wird beispielsweise unter Verwendung der Hashfunktion erzeugt. Somit basiert die Sicherheit der verwendeten kryptographischen Schlüssel und damit die Sicherheit der Signatur auf der verwendeten Hashfunktion.

Im Zuge klassischer Signaturverfahren, deren Sicherheit beispielsweise aufs RSA oder ECC beruht, kommen ebenfalls Hashfunktionen zum Einsatz. In der Regel wird bei einer digitalen Signatur der private kryptographische Schlüssel nicht direkt auf die Nachricht angewendet, sondern auf deren Hash-Wert, der mittels einer Hashfunktion aus der Nachricht berechnet wird. Die Sicherheit dieser Signaturen beruht auf den verwendeten kryptographischen Schlüsseln, welche unabhängig von der Verwendung der Hashfunktion sowie der entsprechenden Hashfunktion selbst sind. In diesem Fall dient die verwendete Hashfunktion daher nicht der Sicherung der entsprechenden Signatur. Vielmehr hat die Verwendung der Hashfunktion in diesem Fall Effizienzgründe, Kompatibilitätsgründe und/oder Integritätsgründe. Ein Hash wird im Allgemeinen kürzer sein als die zu signierende Nachricht. Dadurch kann durch ein Hashen und anschließendes Signieren eine kürzere Signatur erstellt werden. Da ein Hashing in der Praxis im Allgemeinen schneller ist als ein Signieren, kann durch eine Hashen und anschließendes Signieren zudem Zeit gespart werden. So kann die Effizienz erhöht werden. Zu signierende Nachrichten sind in der Regel Bitzeichenfolgen. Einige Signaturschemata, wie etwa das RSA-Schema, funktionieren jedoch auf anderen Domänen. Eine Hashfunktion kann in diesem Fall verwendet werden, um eine beliebige Eingabe in das richtige Format zu konvertieren. So kann eine Kompatibilität sichergestellt werden. Ferner können Signaturschemata auf Nachrichten bestimmter Länge beschränkt sein. Somit kann es ohne Verwendung einer Hashfunktion, im Falle einer zu langen zu signierenden Nachricht, notwendig werden, die entsprechende Nachricht in Blöcke aufzuteilen, die klein genug sind, damit ein zu verwendendes Signaturschema direkt auf diese angewendet werden kann. Durch Verwendung der Hashfunktion kann eine Kompatibilität von Nachrichten beliebiger Länge mit einem gegebenen Signaturverfahren sichergestellt werden.

Die Sicherheit des RSA-Schemas beruht vielmehr der Schwierigkeit einer Primfaktorzerlegung, während Sicherheit des ECC-Schemas auf der Schwierigkeit einer Berechnung diskreter Logarithmen in der Gruppe der Punkte der elliptischen Kurve beruht. Beide Probleme, d.h. die Primfaktorzerlegung und die Berechnung diskreter Logarithmen, sind mit einem ausreichend leistungsstarken Quantencomputer theoretisch, beispielsweise unter Verwendung des Shor-Algorithmus zu lösen. Shors Algorithmus, ausgeführt auf einem Quantencomputer, ermöglicht das effektive Faktorisieren des öffentlichen kryptographischen Schlüssels des RSA-Schemas bzw. einen ähnlichen Angriff auf das ECC-Schema. Somit ist zu erwarten, dass die Sicherheit des RSA-Schemas und ECC-Schemas sowie der darauf basierenden Schlüsselaustausch-, PKI- und Signaturverfahren in der Ära der Quantencomputer und damit in ggf. absehbarer Zeit auf nahezu Null fallen wird.

Der Shor-Algorithmus ist für die Kryptographie von Bedeutung, da dieser Algorithmus es ermöglicht einen nichttrivialen Teiler essenziell schneller zu finden als klassische Algorithmen. Klassische Algorithmen benötigen hierfür eine subexponentielle, jedoch deutlich höher als polynomielle Laufzeit. Demgegenüber hat der Shor-Algorithmus nur polynomielle Laufzeit. Dies stellt beispielsweise eine Gefahr für das RSA-Schema dar, dessen Sicherheit auf der Annahme beruht, dass kein Faktorisierungsverfahren mit polynomieller Laufzeit zur Verfügung stehen.

Ausführungsformen unter Verwendung einer quantensicheren Signatur in Kombination mit einer Blockchain ermöglichen es daher beispielsweise eine doppelte Sicherung gegen Angriffe unter Verwendung von Quantencomputern zu implementieren. In diesem Fall ist einerseits die zu sichernde Signatur selbst auf Basis der zur Schlüsselerzeugung verwendeten Hashfunktion gegeben Angriffe unter Verwendung von Quantencomputern abgesichert. Andererseits ist die Speicherung der Signatur bzw. des Hashwerts der Signatur in der Blockchain, d.h. die langfristige Archivierung der Signatur, durch die zur Sicherung der Blockchain verwendete Hashfunktion gegen Angriffe unter Verwendung von Quantencomputern gesichert. Im Ergebnis kann so eine langfristige Beweiswerterhaltung für Signaturen selbst in der Ära der Quantencomputer sichergestellt werden.

Im alternativen Fall einer Verwendung einer nicht quantensicheren Signatur, welche mittels der Blockchain gesichert wird, ist die Speicherung der Signatur bzw. des Hashwerts der Signatur in der Blockchain, d.h. die langfristige Archivierung der Signatur, durch die zur Sicherung der Blockchain verwendete Hashfunktion gegen Angriffe unter Verwendung von Quantencomputern gesichert. Somit kann auch für eine an sich nicht quantensichere Signatur, eine Quantensicherung mittels der Blockhain implementiert werden.

Nach Ausführungsformen ist der kryptographische Schlüssel, welcher unter Verwendung der Hashfunktion erzeugt wird, ein öffentlicher kryptographischer Schlüssel, welcher aus einem privaten kryptographischen Schlüssel unter Verwendung der Hashfunktion erzeugt wird. Der private kryptographische Schlüssel wird zur Erzeugung der Signatur verwendet.

Beispielsweise wird zum Erstellen der zu sichernden Signatur ein asymmetrisches kryptographisches Schlüsselpaar unter Verwendung einer ersten Hashfunktion erzeugt. Zunächst wird ein privater kryptographischer Schlüssel erzeugt. Beispielsweise umfasst das Erzeugen des privaten kryptographischen Schlüssels ein Erzeugen ein oder mehrer Zufallszahlen. Beispielsweise wird aus dem privaten kryptographischen Schlüssel ein öffentlicher kryptographischer Schlüssel erzeugt unter Verwendung einer ersten Hashfunktion.

Beispielsweise wird zum Erzeugen der zu sichernden digitalen Signatur ein zu signierender Datensatz, wie ein Dokument oder eine Nachricht, unter Verwendung einer zweiten Hashfunktion gehasht und der resultierende Hashwert unter Verwendung des privaten kryptographischen Schlüssels signiert. Die daraus resultierende Signatur kann unter Verwendung des mittels der ersten Hashfunktion erzeugten öffentlichen kryptographischen Schlüssels verifiziert werden. Beispielsweise handelt es sich bei der ersten und der zweiten Hashfunktion um die gleichen Hashfunktionen. Beispielsweise handelt es sich bei der ersten und der zweiten Hashfunktion um unterschiedliche Hashfunktionen.

Zur Sicherung der Signatur in der Blockchain wird für die Signatur ein Hashwert unter Verwendung einer dritten Hashfunktion berechnet. Beispielsweise handelt es sich bei der dritten Hashfunktion um die gleiche Hashfunktion wie die erste und/oder zweite Hashfunktion. Beispielsweise handelt es sich bei der dritten Hashfunktion um eine Hashfunktion, welche sich von der ersten und/oder zweiten Hashfunktion unterscheidet.

Der Hashwert der Signatur wird zur Sicherung der Signatur in die Blockchain eingetragen. Hierzu wird der Hashwert der Signatur in einen zusätzlichen Block eingetragen, welcher zu der Blockchain hinzugefügt wird. Beispielsweise umfasst zur kryptographischen Sicherung der Inhalte der Blockchain jeder nachfolgende Block der Blockchain jeweils einen Hashwert des Inhalts eines unmittelbar vorangehenden Blocks der Blockchain. Diese Hashwerte der Inhalte der Blöcke der Blockchain werden unter Verwendung einer vierten Hashfunktion erzeugt. Beispielsweise handelt es sich bei der vierten Hashfunktion um die gleiche Hashfunktion wie die erste, zweite und/oder dritte Hashfunktion. Beispielsweise handelt es sich bei der vierten Hashfunktion um eine Hashfunktion, welche sich von der ersten, zweiten und/oder dritten Hashfunktion unterscheidet.

Eine digitale Signatur bzw. ein digitales Signaturverfahren bezeichnet ein asymmetrisches Kryptosystem, bei dem ein Sender unter Verwendung eines als Signaturschlüssel verwendeten privaten kryptographischen Schlüssels zu einer digitalen Nachricht, d.h. zu einem beliebigen Satz Daten, einen als digitale Signatur bezeichneten Wert berechnet. Dieser Wert ermöglicht es jedem Dritten, d.h. einem Empfänger der digitalen Signatur, welcher sich im Besitz eines Verifikationsschlüssels in Form eines zu dem privaten kryptographischen Schlüssel gehörenden öffentlichen kryptographischen Schlüssels oder eines aus diesem abgeleiteten kryptographischen Werts befindet, eine nicht abstreitbare Urheberschaft und Integrität der Nachricht unter Verwendung des entsprechenden Verifikationsschlüssels zu prüfen. Bei einer digitalen Signatur wird der Signaturschlüssel in der Regel nicht direkt auf die zu signierende Nachricht angewendet, sondern auf deren Hash-Wert, der mittels einer Hashfunktion aus der Nachricht berechnet wird. Dies erfolgt aus den oben beschriebenen Effizienz-, Kompatibilitäts- und/oder Integritätsgründen.

Eine Blockchain bezeichnet eine kontinuierlich erweiterbare Liste von Datensätzen in Form einzelner Blöcke. Neue Blöcke werden nach einem festgelegten Verfahren erstellt und mittels kryptographischer Verfahren an eine bestehende Kette aus Blöcken angehängt. Dabei enthält der neue Block jeweils einen kryptographisch sicheren Hashwert, d.h. Streuwert, zumindest der Daten des unmittelbar vorhergehenden Blocks in der Blockchain. Soll ein Block der Blockchain geändert bzw. manipuliert werden, so müssten hierfür auch die in allen nachfolgenden Blöcken jeweils gespeicherten Hashwerte, d.h. alle nachfolgenden Blöcke manipuliert werden. Somit kann durch das kryptographische Verkettungsverfahren, welches die Verwendung der Hashfunktion umfasst, sichergestellt werden, dass die Blockchain nicht nachträglich geändert werden kann. Die resultierende kryptographisch verknüpfte Kette der Blöcke ist somit unveränderbar, fälschungs- und manipulationssicher.

Bei der Blockchain kann es sich beispielsweise um eine öffentliche Blockchain, eine konsortiale Blockchain oder eine private Blockchain handeln. Eine öffentliche Blockchain ist öffentlich zugänglich und wird im Allgemeinen auf einem öffentlichen Netzwerk betrieben. Eine konsortiale Blockchain ist im Gegensatz dazu nur ausgewählten Entitäten zugänglich und wird im Allgemeinen auf einem Netzwerk betrieben, an welchem ausschließlich diese Entitäten beteiligt sind. Eine private Blockchain ist schließlich nur für eine Entität privat zugänglich und wird im Allgemeinen auf einem privaten Netzwerk der entsprechenden Entität betrieben. Neue Blöcke der Blockchain werden beispielsweise unter Verwendung eines Konsensverfahrens erstellt. Dieses Konsensverfahrens kann beispielsweise eines der folgenden Verfahren umfassen: einen Proof of Work, einen Proof of Stake, oder einen Proof of Authority.

Quantencomputer bedrohen klassische Mechanismen zur Absicherung von Signaturen. Auch ohne Quantencomputer verlieren Signaturen nach einigen Jahren ihren Beweiswert, etwa durch Weiterentwicklungen im Bereich der Hardware und/oder Software. Daher besteht ein Bedarf an einem Verfahren zur Erhaltung des Beweiswertes von Signaturen und zur langfristigen sowie sicheren Aufbewahrung von Signaturen oder entsprechenden Signaturen umfassende Zertifikate.

Die Beweiswerterhaltung in einem Archiv ist es, eine einfache Möglichkeit zu schaffen, im Nachhinein beweisen zu können, was von wem signiert wurde. Eine blockchain-basierte Sicherung von digitalen Signaturen ermöglicht es anhand der in der Blockchain manipulationssicher hinterlegten Hashwerten der digitalen Signaturen im Nachhinein nachzuweisen, dass eine bestimmte Signatur erstellt wurde. Somit kann auch nachgewiesen werden, was von wem signiert wurde. Wird die Signatur zudem mit einer vertrauenswürdigen Zeitangabe versehen, etwa einem qualifizierten elektronischen Zeitstempel, so kann zudem nachgewiesen werden wann eine Signatur (spätestens) erstellt wurde.

Hierzu werden Hashwert-Repräsentanten der entsprechenden Signaturen fortlaufend in einer Blockchain gesichert. Beispielsweise kann die entsprechende Signatur auch von einem Zertifikat umfasst sein, dessen Hashwert-Repräsentanten in der Blockchain gespeichert wird. Zusätzlichen können der Signatur zugeordnete öffentliche kryptographische Schlüssel und/oder Hashwert-Repräsentanten der entsprechenden öffentlichen kryptographischen Schlüssel in der Blockchain gespeichert werden. Eine Blockchain mit den zur Sicherung der in der Blockchain gespeicherten Daten verwendeten Hashalgorithmen ermöglicht eine langlebige Sicherung der entsprechenden Daten. Zudem ist die Sicherung resistent gegen Angriffe unter Verwendung eines Quantencomputers. Zusätzlich kann jeweils ein vertrauenswürdiger Zeitstempel, etwa ein qualifizierter elektronischer Zeitstempel, beispielsweise gemäß RFC 3161, in der Blockchain mitarchiviert werden. Beispielsweise erfolgt die Mitarchivierung von Zeit zu Zeit.

Eine Sicherung von reinen Hashwert-Repräsentanten der zu sichernden Daten, etwa einer Signatur, in der Blockchain hat den Vorteil, dass basierend auf den gespeicherten Hash-wert-Repräsentanten keine Rückschlüsse auf die zugrundeliegenden Daten gezogen werden können

Beispielsweise wird ein Computerprogramm zum Ausführen des Verfahrens zur blockchain-basierten Sicherung von digitalen Signaturen bereitgestellt. Das Computerprogramm umfasst Programminstruktionen, welche dazu konfiguriert sind, dass ein Ausführen der Programminstruktionen durch einen Prozessor eines Computersystems, etwa eines Servers, den Prozessor dazu veranlasst, das Computersystem so zu steuern, dass das Computersystem das Verfahren zur blockchain-basierten Sicherung von digitalen Signaturen ausführt. Das Computerprogramm wird beispielsweise in Form eines Smart Contract bereitgestellt. Ein Smart Contract ist ein Computerprogramm, das zusammen mit einer Blockchain bereitgestellt wird. Beispielsweise ist der Smart Contract in der Blockchain gespeichert. Der Smart Contract wird ausgeführt werden, wenn bestimmte Bedingungen erfüllt sind.

Ein Smart Contract definiert eine Reihe von Bedingungen, die in der Blockchain oder zusammen mit der Blockchain aufgezeichnet sind, und automatisierte, selbstausführende Aktionen auslösen, wenn zumindest einige dieser vordefinierten Bedingungen erfüllt sind. Der Smart Contract umfasst Programminstruktionen, welche die entsprechenden Bedingungen abbildet. Beispielsweise werden Änderungen des Smart Contracts protokolliert. Beispielsweise wird so eine vollständige Historie der Änderungen des Smart Contracts bereitgestellt.

Nach Ausführungsformen ist der Smart Contract dazu konfiguriert jede der hierin beschriebenen Ausführungsformen des Verfahrens zur blockchain-basierten Sicherung von digitalen Signaturen auszuführen.

Nach Ausführungsformen handelt es sich bei der mittels Hashfunktion gesicherten digitalen Signatur um eine Merkle-Signatur bzw. eine unter Verwendung des Merkle-Signaturverfahrens bereitgestellte Einmalsignatur. Ausführungsformen können den Vorteil haben, dass die Merkle-Signatur in effizienter Weise eine Mehrzahl von Einmalsignaturen bereitstellt, etwa in Form einer Mehrzahl von Lamport-Signaturen, bei welchen es sich jeweils um digitale Signaturen handelt, die mittels einer Hashfunktion gesichert sind. Die Sicherung der Signaturen mittels Hashfunktion umfasst eine Verwendung der Hashfunktion zur Erzeugung eines oder mehrerer öffentlicher kryptographischer Schlüssel.

Eine Merkle-Signatur ist eine digitale Signatur, welche unter Verwendung eines auf Merkle-Bäumen und Einmalsignaturen basierenden digitalen Signaturverfahrens erzeugt wird. Merkle-Signaturen haben den Vorteil, dass sie zu traditionellen digitalen Signaturen, wie etwa auf dem RSA-Schema basierenden Signaturen, resistent gegen Angriffe durch Quantencomputer sind. Grund hierfür ist, dass die Sicherheit einer Merkle-Signatur nur von der Existenz sicherer Hashfunktionen abhängt.

Ein Merkle-Baum ist ein Hashbaum, d.h. ein Baum von Hashwerten, wobei die Blätter des Baums Hashwerte von Datenblöcken sind. Knoten weiter oben im Baum sind Hashwerte ihrer Kinder. Ein Hashbaum kann beispielsweise in Form eines Binärbaums implementiert sein, d.h. jeder Knoten des Baums besitzt höchstens zwei Kindknoten. Ebenso sind aber auch Implementierungen mit höheren Ausgangsgraden möglich.

Bei den verwendeten Einmalsignaturen handelt es sich beispielsweise um Lamport-Einmalsignaturen.

Das Merkle-Signaturverfahren ermöglicht es eine große Anzahl von öffentlichen kryptographischen Schlüsseln für Einmalsignaturen zuverlässig an einen Empfänger weiterzugeben. In dem Fall von Einmalsignaturen kann jeder der Schlüssel nur genau einmal bzw. nur für genau eine Signatur verwendet werden.

Im Zuge des Merkle-Signaturverfahrens wird das gesamte öffentliche Schlüsselmaterial, d.h. alle öffentlichen kryptographischen Schlüssel, von $2^m$ Einmalsignaturen in einem mehrstufigen Hashverfahren zu einem einzigen Hashwert pub zusammengefasst, wobei m eine natürliche Zahl ist. Es muss somit nur pub veröffentlicht werden.

Die Signatur einer Nachricht umfasst dann einen der $2^m$ öffentlichen kryptographischen Einmalschlüssel sowie die mit dem zugehörigen privaten kryptographischen Einmalschlüssel signierte Nachricht. Ferner umfasst die Signatur einen Nachweis, dass es sich bei dem öffentlichen kryptographischen Einmalschlüssel um einen $2^m$ öffentlichen kryptographischen Einmalschlüssel handelt, aus denen der veröffentlichte Hashwert pub berechnet wurde.

Das Merkle-Signaturverfahren ermöglicht es eine begrenzte Anzahl von $M = 2^m$ Signaturen zu erstellen, wobei m eine natürliche Zahl ist.

Im Zuge einer Schlüsselerzeugung werden $2^m$ private kryptographische Schlüssel $X_i$ und $2^m$ zugehörige öffentliche kryptographische Schlüssel $Y_i$ erzeugt, welche es ermöglichen $2^m$ Einmalsignaturen, beispielsweise $2^m$ Lamport-Einmalsignaturen, zu erstellen. Für jeden der öffentlichen kryptographischen Schlüssel $Y_i$ mit $0 \leq i \leq 2^m-1$ wird ein Hashwert $h_i = H(Y_i)$ unter Verwendung der kryptographischen Hashfunktion H berechnet. Mit diesen Hashwerten $h_i$ wird ein Hashbaum aufgebaut.

Ein Knoten des Baums wird beispielsweise mit $a_{i,j}$ identifiziert, wobei j die Ebene des Knotens bezeichnet. Die Ebene eines Knotens ist über seinen Abstand zu den Blättern des Hashbaums definiert. Somit hat ein Blatt des Hashbaums beispielsweise die Ebene j=0 und die Wurzel des Hashbaums die Ebene j=m. Die Knoten jeder Ebene sind beispielsweise ferner von links nach rechts durchnummeriert, was mit dem Index i indiziert wird.

In einem solchen Merkle-Baum in Form eines Binärbaums sind die Hashwerte $h_i$ die Blätter des entsprechenden Binärbaums, sodass $h_i = a_{0,i}$. Die inneren Knoten des Hashbaums sind jeweils die Hashwerte der Konkatenationen der beiden Kinder des jeweiligen Knotens. Beispielsweise ist $a_{1,0} = H(a_{0,0}\|a_{0,1})$ und $a_{2,0} = H(a_{1,0}\|a_{1,1})$. Auf diese Weise wird ein Baum mit $2^m$ Blättern und $2^{m+1}-1$ Knoten aufgebaut. Die Wurzel des Hashbaums ist der veröffentlichte Hashwert pub des Merkle-Signaturverfahrens, welcher anstelle der öffentlichen kryptographischen Schüssel $Y_i$ des Merkle-Signaturverfahrens veröffentlicht wird.

Um eine Nachricht oder ein Dokument d mit dem Merkle-Signaturverfahren zu signieren, wird das Dokument d zunächst mit einem Einmalsignaturverfahren unter Verwendung eines der privaten kryptographischen Schlüssel $X_i$ signiert, wodurch eine Signatur s' erzeugt wird.

Der private kryptographische Schlüssel $X_i$ gehört zu einem asymmetrischen kryptographischen Schlüsselpaar $(X_i, Y_i)$, welches neben dem privaten kryptographischen Schlüssel $X_i$ den öffentlichen kryptographischen Schlüssel $Y_i$ umfasst. Das dem entsprechenden öffentlichen kryptographischen Einmalschlüssel $Y_i$ zugehörige Blatt des Hashbaums ist $a_{0,i} = H(Y_i)$. Der Pfad im Hashbaum von $a_{0,i}$ zur Wurzel $a_{m,0}$ des Hashbaums wird mit A bezeichnet. Der Pfad A besteht aus m+1 Knoten $A_0$, ..., $A_m$, wobei $A_0 = a_{0,i}$ das dem Hashwert des öffentlichen kryptographischen Schlüssels $Y_i$ entsprechende Blatt des Hashbaums ist und $A_m = a_{m,0} = $ pub die Wurzel des Hashbaums ist. Um diesen Pfad A zu berechnen, wird jedes Kind der Knoten $A_1$, ..., A, benötigt. $A_i$ ist ein Kind des Knoten $A_{i+1}$ des Pfades A. Um den Knoten $A_{i+1}$ des Pfades A zu berechnen, ist eine Kenntnis beider Kinder von $A_{i+1}$ notwendig. Daher wird der Bruder des Knoten $A_i$ benötigt, um den nächsten Knoten $A_{i+1}$ des Pfades A berechnen zu können. Dieser Bruderknoten wird beispielsweise

mit $auth_i$ bezeichnet, sodass $A_{i+1} = H(A_i\|auth_i)$. Somit werden m Knoten $auth_0$, ..., $auth_{m-1}$, d.h. die Bruderknoten der m Knoten $A_0$, ..., $A_{m-1}$ entlang des Pfades A unterhalb der Wurzel $A_m$, benötigt, um jeden Knoten des Pfades A zu berechnen. Diese benötigten Bruderknoten $auth_0$, ..., $auth_{m-1}$ werden beispielsweise berechnet und gespeichert. Sie bilden zusammen mit einer Einmalsignatur s' von d und dem für die Erstellung der Einmalsignatur s' verwendeten öffentlichen kryptographischen Schlüssel $Y_i$ die Signatur s = (s', $Y_i$, $auth_0$, $auth_1$, ..., $auth_{m-1}$) des Merkle-Signaturverfahrens.

Voraussetzung für eine Verifizierung einer Signatur s eines Dokuments d ist, dass der Verifizierer neben der Signatur s = (s', $Y_i$, $auth_0$, $auth_1$, ..., $auth_{m-1}$) das Dokument d sowie die veröffentlichte Wurzel pub des Hashbaums kennt. Hierzu verifiziert der Verifizierer zunächst die Einmalsignatur s' des Dokuments d unter Verwendung des öffentlichen kryptographischen Schlüssels $Y_i$. Falls s' eine gültige Signatur von Dokument d ist, berechnet der Verifizierer $A_0=H(Y_i)$, indem er den Hashwert $H(Y_i)$ des öffentlichen kryptographischen Schlüssels $Y_i$ der Einmalsignatur berechnet. Die zu verwendende Hashfunktion H ist dem Verifizierer hierzu ebenfalls bekannt. Beispielsweise wird eine ID der zu verwendenden Hashfunktion zusammen mit der Wurzel pub des Hashbaums veröffentlicht. Für j = 1, ..., m-1 werden die Knoten $A_j$ des Pfades A berechnet, mit $A_j = H(A_{j-1}\|auth_{j-1})$. Wenn $A_m$ der Wurzel des Hashbaums pub des Merkle-Signaturverfahrens entspricht, so ist die Signatur gültig.

Bei dem verwendeten Merkle-Signaturverfahren kann es sich beispielsweise um Varianten des klassischen Merkle-Signaturverfahrens handeln, wie etwa XMSS (eXtended Merkle Signature Scheme), das 2018 als RFC 8391 standardisiert wurde, LMS (Leighton-Micali Hash-Based Signatures), das 2019 als RFC 8554 standardisiert wurde, SPHINCS oder SPHINCS+.

Lamport-Einmalsignaturen bezeichnen Signaturen, welche auf dem Lamport-Einmal-Signaturverfahren (engl. "Lamport One-Time Signature Scheme", kurz OTS) beruhen. Das Lamport-Einmal-Signaturverfahren verwendet zwei Schlüssel, d.h. einen privaten Signaturschlüssel x und einen öffentlichen Verifikationsschlüssel y. Um eine mittels des Lamport-Einmal-Signaturverfahrens erstellte Signatur s eines Dokuments d mit dem öffentlichen Verifikationsschlüssel y zu verifizieren, ist neben der Kenntnis des entsprechenden Dokuments d, der Signatur s und des öffentlichen Verifikationsschlüssel y auch eine Kenntnis der zur Signaturerstellung verwendeten Hashfunktion H notwendig.

Bei einer Lamport-Einmalsignatur handelt es sich um eine beispielhafte mittels einer Hashfunktion gesicherten Signatur, bei welcher die Sicherung der Signatur mittels Hashfunktion eine Verwendung der Hashfunktion zur Erzeugung eines kryptographischen Schlüssels umfasst, welcher der zu sichernden Signatur, d.h., der Lamport-Einmalsignatur, zugeordnet ist. Die Hashfunktion wird zur Erzeugung des öffentlichen Verifikationsschlüssel y verwendet. Dabei wird als Hashfunktion H zum Beispiel eine kollisionsresistente Hashfunktion H: $\{0,1\}^k \rightarrow \{0,1\}^k$, $k \in \mathbb{N}$ verwendet.

Eine kryptographische Hashfunktion bzw. Streuwertfunktion ist eine Hashfunktion mit bestimmten, für die Kryptographie vorteilhaften Eigenschaften. Eine Hashfunktion erzeugt aus einem Eingabewert, wie beispielsweise einer Nachricht oder einer Datei, einen meist ganzzahligen Ausgabewert, genannt Hashwert, in einem gegebenen Wertebereich auf eine regellos erscheinende Weise. Eine Hashfunktion ist also eine Abbildung, die effizient eine Zeichenfolge beliebiger Länge, d.h. den Eingabewert, auf eine Zeichenfolge mit fester Länge, d.h. den Hashwert, abbildet. Daraus ergibt sich notwendigerweise, dass verschiedenen Eingabewerten derselbe Hashwert zugeordnet wird, die Abbildung ist also nicht injektiv. Es ist also grundsätzlich möglich, zwei Eingabewerte zu finden, die denselben Hashwert ergeben.

Kryptographisch ist eine Hashfunktion, wenn sie folgende Eigenschaften hat: Sie kann beliebige Bit- oder Bytefolge als Eingabewert verarbeiten und erzeugt daraus einen Hashwert von fester Länge. Sie ist eine Einwegfunktion, d.h. es ist praktisch nicht möglich, aus einem gegebenen Hashwert y einen Eingabewert x zu finden, den die Hashfunktion h auf y abbildet, d.h. h(x) = y. der einen vorgegebenen Hashwert ergibt. Mit anderen Worten ist es praktisch nicht möglich aus einem vorgegebenen Hashwert den zugrundeliegenden Eingabewert abzuleiten. Schließlich ist sie stark kollisionsresistent, d.h. es erfordert einen unrealistisch hohen Rechenaufwand, zwei unterschiedliche Eingabewerte x und x' zu finden, die den gleichen Hashwert ergeben.

Vorteilhafterweise können kryptographische Hashfunktionen beispielsweise zur Integritätsprüfung von Nachrichten oder Dateien eingesetzt werden. Dafür wird eine kryptographische Hashfunktion auf die zu prüfende Nachricht oder Datei angewendet und mit einem bekannten früher berechneten Hashwert verglichen. Stimmt der resultierende Hashwert mit dem früher berechneten Hashwert ist die als Eingangswerte verwendete Nachricht oder Datei identisch mit der als Eingangswerte zur Berechnung des früheren Hashwerts verwendete Nachricht oder Datei. Andernfalls weicht die als Eingangswerte für den neuen Hashwert verwendete Nachricht oder Datei ab, ist also beispielsweise verändert worden. Ferner können kryptographische Hashfunktionen vorteilhafterweise zur sicheren Speicherung beispielsweise von digitalen Signaturen verwendet werden. Wenn ein System eine Signatur prüft, vergleicht es den Hashwert der entsprechenden Signatur beispielweise mit einem gespeicherten Hashwert. Im vorliegenden Fall handelt es sich bei dem gespeicherten Hashwert beispielsweise um einen in einer Blockchain gespeicherten Hashwert. Stimmen beide Hashwerte überein, d.h. der Hashwert der zu prüfenden Signatur und der gespeicherte Hashwert, so stimmen auch die zugrundeliegenden Signaturen überein. Ist mit dem gespeicherten Hashwert zudem ein vertrauenswürdiger Zeitstempel verbunden, so kann der Signatur ein Mindestalter zugeordnet werden.

Bei einem Lamport-Schlüsselpaar handelt es sich um ein asymmetrisches kryptographisches Schlüsselpaar, d.h. einen privaten kryptographischen Schlüssel und einen zugehörigen öffentlichen kryptographischen Schlüssel. Die Schlüsselerzeugung erfolgt unter Verwendung einer Hashfunktion. Der private kryptographische Schlüssel x wird beispielsweise unter Verwendung eines Zufallszahlengenerators erstellt. Hierzu werden n Paare von k-bit Zufallszahlen erzeugt. Dabei ist n die Länge des zu signierenden Dokuments, d.h. dessen Bitzahl, und k eine beliebige natürliche Zahl:

$$x = \left( x(0,1), x(1,1), x(0,2), x(1,2), ..., x(0,n), x(1,n) \right) \in \left( \{0,1\}^k \right)^{2n}, k, n \in \mathbb{N}$$

Beispielsweise wird auf das zu signierende Dokument zunächst eine Hashfunktion angewendet und der resultierende Hashwert signiert. In diesem Fall ist n die Hashlänge, d.h. die Länge des Hashwerts des Dokuments. Dies kann beispielsweise vorteilhaft sein, falls das Dokument lang ist, z.B. länger als ein 256-Bit-Hashwert, oder wenn die Länge des Dokuments bei der Schlüsselerzeugung noch nicht bekannt ist. Es kann mithin eine Erzeugung allzu langer kryptographischer Schlüssel vermieden werden.

Beispielsweise wird k = n gewählt, sodass die Länge der verwendeten Zufallszahlen gleich der Länge des Hashwerts des Dokuments ist. Wird auf das Dokument beispielsweise mit einer 256-Bit-Hashfunktion, d.h. n = 256, angewendet und für k = 256 gewählt, ergibt sich für den privaten kryptographischen Schlüssel daraus beispielsweise eine Schlüssellänge von $2 \times 256 \times 256 = 128$ Kibit.

Ein dem privaten kryptographischen Schlüssel x zugeordneter öffentlicher kryptographischer Schlüssel y wird aus dem privaten kryptographischen Schlüssel x abgeleitet, indem eine Hashfunktion auf die n Zahlenpaare des privaten kryptographischen Schlüssels angewendet wird. Die entsprechenden 2n Zufallszahlen des privaten kryptographischen Schlüssels werden also gehasht:

$$y = \left( H\big(x(0,1)\big), H\big(x(1,1)\big), H\big(x(0,2)\big), H\big(x(1,2)\big), ..., H\big(x(0,n)\big), H\big(x(1,n)\big) \right) = \left( y(0,1), y(1,1), y(0,2), y(1,2), ..., y(0,n), y(1,n) \right).$$

In dem Fall des vorangehenden Beispiels unter Verwendung einer 256-Bit-Hashfunktion ergeben sich für den öffentlichen kryptographischen Schlüssel $2 \times 256$ Zufallszahlen mit einer Länge von jeweils 256 Bit. Damit hat der öffentliche kryptographische Schlüssel beispielsweise ebenfalls eine Schlüssellänge von $2 \times 256 \times 256 = 128$ Kibit.

Eine Signatur eines Dokuments $d = (d_1, ..., d_n) \in \{0,1\}^n$ oder eines Hashwerts des Dokuments $H(d) = (d_1, ..., d_n) \in \{0,1\}^n$ mit einer Länge n, d.h. n Bits, ist

$$s = (s_1, ..., s_n) = \left( x(d_1, 1), ..., x(d_n, n) \right).$$

Aus jedem der n Zufallspaaren des privaten kryptographischen Schlüssels x wird jeweils diejenige Zufallszahl ausgewählt, welche dem Bitwert des entsprechenden Bits des Dokuments bzw. des Hashwerts des Dokuments zugeordnet ist. Ist das w-te Bit 0, mit $w \in [1; n]$, wird beispielsweise die erste Zufallszahl des entsprechenden w-ten Zufallszahlenpaars gewählt. Ist das w-te Bit 1, wird die zweite Zufallszahl des entsprechenden w-ten Zufallszahlenpaars gewählt.

In dem Fall des vorangehenden Beispiels mit n=256 wird auf diese Weise eine Folge von 256 Zufallszahlen erzeugt. Da jede dieser 256 Zufallszahlen selbst eine Länge von 256 Bits aufweist, beträgt die Gesamtgröße der Signatur s $256 \times 256$ Bits = 65536 Bits = 64 Kibit, d.h. die Hälfte des privaten kryptographischen Schlüssels.

Zum Verifizieren einer Lamport-Signatur ist neben der Kenntnis der entsprechenden Signatur $s = (s_1, ..., s_n)$ und des Dokuments $d = (d_1, ..., d_n)$ eine Kenntnis der verwendeten Hashfunktion H sowie des als Verifikationsschlüssel dienenden öffentlichen kryptographischen Schlüssels y= (y(0,1), y(1,1), ..., y(0,n), y(1,n)) notwendig. Im Zuge des Verifizierens wird die Hashfunktion H auf die einzelnen Zufallszahlen der Signatur angewendet. Zudem wird aus jedem der n Zufallspaaren des öffentlichen kryptographischen Schlüssels y jeweils diejenige Zufallszahl ausgewählt, welche dem Bitwert des entsprechenden Bits des Dokuments bzw. des Hashwerts des Dokuments zugeordnet ist. Ist das w-te Bit 0, mit $w \in [1; n]$, wird beispielsweise die erste Zufallszahl des entsprechenden w-ten Zufallszahlenpaars gewählt. Ist das w-te Bit 1, wird die zweite Zufallszahl des entsprechenden w-ten Zufallszahlenpaars gewählt. Stimmt die so gehashte Signatur mit der Auswahl aus dem öffentlichen kryptographischen Schlüssel überein, ist die Signatur erfolgreich verifiziert:

$$\left( H(s_1), ..., H(s_n) \right) = \left( y(d_1, 1), ..., y(d_n, n) \right).$$

Die Sicherheit einer Lamport-Signatur basiert auf der Sicherheit der verwendeten kryptographischen Einweg-Hashfunktion und der Länge ihrer Ausgabewerte.

Für eine Hashfunktion, die einen n-Bit-Hashwert erzeugt, impliziert eine ideale Resistenz gegen einen Erstes-Urbild-Angriff (engl. first-preimage attack) sowie gegen einen Zweites-Urbild-Angriff (engl. second-preimage attack) bei einem einzelnen Hashfunktionsaufruf eine Größenordnung von $\mathcal{O}(2^N)$ Operationen, welche notwendig sind, um mittels eines klassischen Berechnungsmodells eine Kollision zu finden. Bei einem Erstes-Urbild-Angriff ist es das Ziel, zu einem gegebenen Hashwert ein Urbild, d.h. den zugrundeliegenden Eingangswert der Hashfunktion, zu finden. Für einen Hashwert h einer Hashfunktion H sollte es daher schwierig sein, einen Eingabewert m zu finden, so dass h = H(m). Bei einem Zweites-Urbild-Angriff ist das Ziel, zu einer Nachricht ein zweites Urbild zu finden, das auf denselben Wert gehasht wird. Für eine Hashfunktion H sollte es für einen ersten Eingabewert $m_1$ schwierig sein, einen zweiten Eingabewert $m_2$ zu finden, so dass $H(m_1) = H(m_2)$. Diese Eigenschaft wird manchmal als schwache Kollisionsresistenz bezeichnet.

Gemäß Grovers Algorithmus ist die obere Grenze für ein Finden einer Urbild-Kollision bei einem einzelnen Aufruf einer idealen Hashfunktion $\mathcal{O}(2^{N/2})$-Operationen unter Verwendung eines Quantencomputermodells. In Lamport-Signaturen basiert jedes Bit des öffentlichen kryptographischen Schlüssels und der Signatur auf Kurznachrichten, die nur einen einzigen Aufruf einer Hashfunktion erfordern.

Der Grover-Algorithmus ist ein Quantenalgorithmus zur Suche in einer unsortierten Datenbank mit N Einträgen in $\mathcal{O}(\sqrt{N})$ Schritten und mit $\mathcal{O}(\log N)$ Speicherbedarf. Auf einem klassischen Computer ist der prinzipiell schnellstmögliche Suchalgorithmus in einer solchen unsortierten Datenbank eine lineare Suche, die O(N) Rechenschritte erfordert. Der Grover-Algorithmus liefert damit im Vergleich zu einem auf einem klassischen Computer ausgeführten Algorithmus eine quadratische Beschleunigung, was für eine große Anzahl N eine erhebliche Beschleunigung darstellt. Der Grover-Algorithmus ist für die Kryptographie relevant, da die entsprechende Datenbanksuche auch als die Suche nach einem passenden Schlüssel betrachtet werden kann.

Für Paar aus einem privaten kryptographischen Schlüsselelement $x_{i,j}$, mit $1 \le i \le n$ und j E {0, 1}, und einem zugehörigen öffentlichen kryptographischen Schlüsselelement $y_{i,j}$ ist eine Länge des privaten kryptographischen Schlüsselelements so zu wählen, dass eine Durchführung eines Urbild-Angriffs auf die Länge der Eingabe nicht schneller ist als eine Durchführung eines Urbild-Angriffs auf die Länge der Ausgabe.

Basierend auf dem Grover-Algorithmus, sollte für ein quantensicheres System, die Länge der öffentlichen kryptographischen Schlüsselelemente $y_{i,j}$, der privaten kryptographischen Schlüsselelemente $x_{i,j}$ und der Signaturelemente $s_{i,j}$ nicht weniger als 2-mal größer sein als die Sicherheitsbewertung des entsprechenden Systems. Das heißt, ein sicheres 128-Bit-System sollte beispielsweise Elementlängen von nicht weniger als 256 Bit verwenden. Da die obigen idealistischen Arbeitsschätzungen allerdings von einer idealen Hashfunktion ausgehen und auf Angriffe beschränkt sind, die jeweils nur auf ein einzelnes Urbild abzielen, empfiehlt es sich zur Absicherung entsprechender Unbekannter größere Elementgrößen und stärkerer Hashfunktionen für eine größere Sicherheitsmarge zu verwenden.

Nach Ausführungsformen können verschiedene Optimierungen und Varianten des Lamport-Signaturverfahrens verwendet werden. Beispielsweise kann, anstatt alle Zufallszahlen des privaten kryptographischen Schlüssels zu erzeugen und zusammen zu speichern, eine einzelne Zufallszahl von ausreichender Größe erzeugt und gespeichert werden. Diese Zufallszahl hat beispielsweise die gleiche Größe wie eine der Zufallszahlen des zu erzeugenden privaten kryptographischen Schlüssels. Die einzelne Zufallszahl kann dann als Seed für einen kryptografisch sicheren Pseudozufallszahlengenerator (engl. "cryptographically secure pseudo-random number generator"/CSPRNG) verwendet werden, um bei Bedarf alle Zufallszahlen des privaten kryptographischen Schlüssels zu erstellen. Auf die gleiche Weise kann beispielsweise ein einzelner kryptographischer Schlüssel zusammen mit einem CSPRNG verwendet werden, um eine Mehrzahl von privaten kryptographischen Lamport-Schlüsseln zu erstellen, welche jeweils eine Mehrzahl von Zufallszahlen umfassen.

Beispielsweise kann eine Lamport-Signatur mit einer Hashliste kombiniert werden, so dass es möglich ist, nur den einzigen Top-Hash anstelle aller Hashes im öffentlichen kryptographischen Schlüssel zu veröffentlichen, d.h. anstelle der 2n Hashwerte bzw. Schlüsselelemente $y_{i,j}$ des öffentlichen kryptographischen Schlüssels. Eine Hashliste bezeichnet eine Liste von Hashwerten, beispielsweise die Hashwerte des öffentlichen kryptographischen Schlüssels. Von den Hashwerten der Hashliste wird ein zusätzlicher Hashwert erstellt, der sogenannte Top-Hash, auch Root-Hash oder Master-Hash genannt. Eine Hashliste stellt somit einen Teilbaum eines Merkle-Baums dar. Wenn der öffentliche kryptographische Schlüssel in Form des Top-Hashes veröffentlicht wird, kann dadurch die Länge der veröffentlichten Informationen deutlich verkürzt werden. In diesem Fall sind, wie im Fall des Merkle-Signaturverfahrens mit einem Merkle-Baum, für eine Verifikation einer Signatur unter Verwendung des Top-Hashes zusätzlich die für die Signaturerstellung nicht verwendeten Hashwerte der Hashliste nötig. Diese werden beispielsweise zusammen mit der Signatur zur Verfügung gestellt.

Alternativ zu dem Lamport-Einmalsignaturverfahren können auch andere hashbasierte Einmalsignaturverfahren (engl.: "one-time signature scheme"/OTS) verwendet werden, wie etwa beispielsweise das Merkle-Einmalsignaturverfahren (vgl. z.B. Ralph C. Merkle: "A certified digital signature", in CRYPTO, Band 435 of LNCS, Seiten 218 bis 238, Springer, 1989), das Winternitz-Einmalsignaturverfahren (vgl. z.B. Ralph C. Merkle: "A certified digital signature", in CRYPTO, Band 435 von LNCS, Seiten 218 bis 238, Springer, 1989, und Chris Dods et al.: "Hash based digital signature schemes" in Cryptography and Coding, Seiten 96 bis 115, Springer Verlag LNCS 3796, November 2005), das Bleichenbacher-Maurer-Einmalsignaturverfahren (vgl. z.B. Daniel Bleichenbacher und Ueli M. Maurer: "Directed acyclic graphs, one-way functions and digital signatures", in Advances in Cryptology - CRYPTO '94, Band 839 der Lecture Notes in Computer Science, Seiten 75 bis 82, 1994), das BiBa("Bins and Balls")-Einmalsignaturverfahren (vgl. z.B. Adrian Perrig: "The BiBa one-time signature and broadcast authentication protocol", in ACM Conference on Computer and Communications Security, Seiten 28 bis 37, 2001) oder das HORS-Schema ("Hash to Obtain Random Subset"; vgl. z.B. Leonid Reyzin und Natan Reyzin: "Better than BiBa: Short One-time Signatures with Fast Signing and Verifying", in Information Security and Privacy, Band 2384 der Lecture Notes in Computer Science, Seiten 1 bis 47. Springer Berlin/Heidelberg, 2002).

Beispielsweise handelt es sich bei dem Hashwert der zu sichernden digitalen Signatur um einen Hashwert der eigentlichen Signatur s', d.h. dem Ergebnis der Anwendung des Signaturschlüssels $X_i$ auf das zu signierende Dokument d: $H(s')$. Im Falle einer Lamport-Signatur wäre dies beispielsweise

$$H(s') = H(s'_1, ..., s'_n) = H(x(d_1,2), ..., x(d_n,n))$$

Beispielsweise umfasst der Hashwert der zu sichernden digitalen Signatur neben der eigentlichen Signatur s', d.h. dem Ergebnis der Anwendung des Signaturschlüssels $X_i$ auf das zu signierende Dokument d, ein oder mehrere Parameter. Beispielsweise umfasst der Hash-wert zusätzlich den öffentlichen kryptographischen Schlüssel $Y_i$ zur Verifikation der digitalen Signatur, z.B. $H(s', Y_i)$. Beispielsweise umfasst der Hashwert zusätzlich zu dem öffentlichen kryptographischen Schlüssel $Y_i$ ein oder mehrere Knoten eines Merkle-Baums zur Verifikation der digitalen Signatur, z.B. $H(s', Y_i, auth_0, auth_1, ..., auth_{m-1})$. Beispielsweise umfasst der Hashwert zusätzlich den öffentlichen kryptographischen Schlüssel $Y_i$ zur Verifikation der digitalen Signatur, z.B. $H(s', d)$. Ebenso sind Kombinationen der vorgenannten ein oder mehreren Parametern möglich.

Nach Ausführungsformen handelt es sich bei der mittels Hashfunktion gesicherten digitalen Signatur um eine Einmalsignatur. Nach Ausführungsformen handelt es sich bei der mittels Hashfunktion gesicherten digitalen Signatur um eine der folgenden Signaturen: Lamport-Einmalsignatur, Merkle-Einmalsignatur, Winternitz-Einmalsignatur, Bleichenbacher-Maurer-Einmalsignatur, BiBa-Einmalsignatur, HORS-Einmalsignatur.

Nach Ausführungsformen wird zusätzlich zu dem empfangenen Hashwert der zu sichernden Signatur ein qualifizierter elektronischer Zeitstempel eingetragen, welcher eine von einem Vertrauensdienstanbieter mit einem privaten kryptographischen Schlüssel des Vertrauensdienstanbieters signierte Zeitangabe umfasst.

Ausführungsformen können den Vorteil haben, dass eine sichere Zeitangabe zusammen mit der Signatur in der Blockchain gesichert wird. Somit kann der Sicherung der Signatur eine Zeit zugeordnet werden. An sich bildet eine Blockchain mit ihrer Abfolge von Blöcken eine zeitliche Abfolge der Eintragungen der in der Blockchain eingetragenen Daten dar. Diese zeitliche Abfolge ordnet an sich den einzelnen Blöcken keine konkrete Zeit zu. Hierzu ist eine zusätzliche Eintragung notwendig. Wird aber einfach nur eine Zeitangabe eingetragen, ist diese an sich noch nicht vertrauenswürdig, da es an einer kryptographischen Sicherung fehlt, welche dazu geeignet ist, Manipulationen zu verhindern. Eine solche kryptographisch gesicherte Zeitangabe kann in Form eines qualifizierten elektronischen Zeitstempels implementiert werden.

Zum Ausstellen eines qualifizierten elektronischen Zeitstempels stellt ein Vertrauensdienstanbieter einen Zeitstempelserver bereit. Dieser Zeitstempelserver ist dazu konfiguriert eine aktuelle Uhrzeit präzise festzustellen. Hierzu hat der Zeitstempelserver beispielsweise Zugriff auf eine präzise Zeitquelle. Beispielsweise verwendet der Zeitstempelserver eine Funkuhr und eine zusätzliche interne Zeitquelle. Der Zeitstempelserver empfängt eine Ausstellanfrage zum Ausstellen eines qualifizierten elektronischen Zeitstempels. Beispielsweise umfasst die Ausstellanfrage ein Element, welchem eine präzise Zeitangabe in kryptographisch gesicherter Form zugeordnet werden soll. Der Zeitstempelserver erstellt eine Zeitangabe der aktuellen Zeit und signiert diese Zeitangabe zusammen mit dem entsprechenden Element unter Verwendung eines privaten kryptographischen Schlüssels des Vertrauensdienstanbieters. Anschließend sendet der Zeitstempelserver den so erstellen qualifizierten elektronischen Zeitstempel in Antwort auf die Ausstellanfrage an ein anfragendes Computersystem. Beispielsweise wird der qualifizierte elektronische Zeitstempel zusammen mit Daten zum Verifizieren des entsprechenden qualifizierten elektronischen Zeitstempels gesendet. Die Daten zum Verifizieren des entsprechenden qualifizierten elektronischen Zeitstempels umfassen beispielsweise einen öffentlichen kryptographischen Schlüssel des Vertrauensdienstanbieters und/oder ein Zertifikat des Zeitstempelservers bzw. Vertrauensdienstanbieters.

Nach Ausführungsformen umfasst das Verfahren zum Eintragen des qualifizierten elektronischen Zeitstempels ferner:

- Senden einer Ausstellanfrage zum Ausstellen des qualifizierten elektronischen Zeitstempels an den Vertrauensdienstanbieter,
- in Antwort auf das Senden der Ausstellanfrage, Empfangen des qualifizierten elektronischen Zeitstempels zum Eintragen in der Blockchain von dem Vertrauensdienstanbieter.

Ausführungsformen können den Vorteil haben, dass der qualifizierte elektronische Zeitstempel im Zuge des Eintragens des Hashwerts der zu sichernden digitalen Signatur in die Blockchain, d.h. der Sicherung der Signatur in die Blockchain, erstellt wird. In diesem Fall bezieht sich die gesicherte Zeitangabe auf die Eintragung der Signatur in die Blockchain. Die Ausstellanfrage wird beispielsweise von einem die Blockchain bereitstellenden Blockchain-server an einen Zeitstempelserver des Vertrauensdienstanbieters gesendet. Bei dem Blockchainserver handelt es sich beispielsweise um einen Blockchainserver eines Blockchainnetzwerks. Die Ausstellanfrage wird beispielsweise über ein Netzwerk gesendet. Bei dem Netzwerk kann es sich beispielsweise um ein öffentliches Netzwerk, wie etwa das Internet, oder ein privates Netzwerk, wie etwa ein Intranet, handeln.

Nach Ausführungsformen umfasst der qualifizierte elektronische Zeitstempel zusätzlich zu der Zeitangabe ein ausgewähltes Element des zusätzlichen Blocks der Blockchain, welches mit der Ausstellanfrage an den Vertrauensdienstanbieter gesendet wird.

Ausführungsformen können den Vorteil haben, dass die von dem qualifizierten elektronischen Zeitstempel bereitgestellte Zeitangabe dem ausgewählten Element bzw. der Eintragung des ausgewählten Elements in die Blockchain zugeordnet wird.

Nach Ausführungsformen umfasst das ausgewählte Element den empfangenen Hashwert der zu sichernden Signatur.

Ausführungsformen können den Vorteil haben, dass die von dem qualifizierten elektronischen Zeitstempel bereitgestellte Zeitangabe dem Hashwert der zu sichernden Signatur bzw. der Eintragung des Hashwerts der zu sichernden Signatur in die Blockchain zugeordnet wird.

Nach Ausführungsformen umfasst der qualifizierte elektronische Zeitstempel zusätzlich zu der Zeitangabe ein unter Verwendung des Inhalts eines dem zusätzlichen Block in der Blockchain unmittelbar vorangehenden Blocks bereitgestelltes Element, welches mit der Ausstellanfrage an den Vertrauensdienstanbieter gesendet wird.

Ausführungsformen können den Vorteil haben, dass die von dem qualifizierten elektronischen Zeitstempel bereitgestellte Zeitangabe dem Block bzw. Inhalt des Blocks der Blockchain zugeordnet wird, welcher dem zusätzlichen Block in der Blockchain unmittelbar vorangeht. Da der qualifizierte elektronische Zeitstempel in den zusätzlich, d.h. den nachfolgenden Block, eingetragen und im Zuge von dessen Erstellung nachgefragt wird, bezieht sich die Zeitangabe selbst auf die Eintragungen in den zusätzlichen Block, wie etwa den Hashwert der zu sichernden Signatur.

Nach Ausführungsformen handelt es sich bei dem bereitgestellten Element um einen Hash-wert des Inhalts des dem zusätzlichen Block in der Blockchain unmittelbar vorangehenden Blocks. Der Hashwert des Inhalts des dem zusätzlichen Block in der Blockchain unmittelbar vorangehenden Blocks wird in den zusätzlichen Block der Blockchain eingetragen.

Ausführungsformen können den Vorteil haben, dass der qualifizierte elektronische Zeitstempel für den zur Verknüpfung der Blöcke der Blockchain verwendeten Hashwert erstellt und mit diesem in den zusätzlichen Block der Blockchain eingetragen wird. Somit wird die Verknüpfung zwischen den Blöcken selbst mit einer Zeitangabe versehen. Beispielsweise kann die Verknüpfung zwischen den Blöcken der Blockchain durch qualifizierte elektronische Zeitstempel implementiert werden, d.h. die Hashwerte des jeweils unmittelbar vorangehenden Blocks werden in dem jeweils unmittelbar nachfolgenden Block in Form eines qualifizierten elektronischen Zeitstempels eingetragen. Das Senden der Ausstellanfrage zum Ausstellen des qualifizierten elektronischen Zeitstempels ist in diesem Fall Bestandteil des Erstellens eines zusätzlichen Blocks für die Blockchain.

Nach Ausführungsformen wird der qualifizierte elektronische Zeitstempel mit der Eintragungsanfrage empfangen und umfasst zusätzlich zu der Zeitangabe den empfangenen Hashwert der zu sichernden Signatur.

Ausführungsformen können den Vorteil haben, dass der qualifizierte elektronische Zeitstempel zusammen mit dem Hashwert der zu sichernden Signatur empfangen wird. Beispielsweise wird die Ausstellanfrage zum Ausstellen des qualifizierten elektronischen Zeitstempels in diesem Fall von dem signierenden Computersystem, welches eine von ihm erstellte Signatur in der Blockchain sichern möchte, an den Vertrauensdienstleister gesendet.

Nach Ausführungsformen wird der empfangene Hashwert der zu sichernden Signatur in Form des qualifizierten elektronischen Zeitstempels empfangen.

Ausführungsformen können den Vorteil haben, dass der Hashwert der zu sichernden Signatur in Form des empfangenen qualifizierten elektronischen Zeitstempels in den zusätzlichen Block der Blockchain eingetragen werden kann. Somit wird die zu sichernde Signatur automatisch mit einer sicheren Zeitangabe in die Blockchain eingetragen.

Nach Ausführungsformen handelt es sich bei der Signatur des qualifizierten elektronischen Zeitstempels um eine selbst nicht quantensichere Signatur, deren Quantensicherung ebenfalls durch die Blockchain implementiert wird. Beispielsweise basiert die kryptographische Sicherung der entsprechenden Signatur selbst auf dem RSA-Schema oder auf ECC.

Nach Ausführungsformen handelt es sich bei der Signatur des qualifizierten elektronischen Zeitstempels um eine Signatur, welche selbst quantensicher ist. In diesem Fall wird das Sicherheitsniveau der entsprechenden Signatur gegenüber Angriffen mit einem oder mehreren Quantencomputer durch die von der Blockchain bereitgestellt zusätzliche Quantensicherung erhöht.

Nach Ausführungsformen handelt es sich bei der Signatur des qualifizierten elektronischen Zeitstempels um eine mittels einer weiteren Hashfunktion gesicherten digitalen Signatur.

Beispielsweise handelt es sich bei der Signatur des qualifizierten elektronischen Zeitstempels um eine weitere Merkle-Signatur bzw. eine unter Verwendung des Merkle-Signaturverfahrens bereitgestellte Einmalsignatur. Ausführungsformen können den Vorteil haben, dass die Merkle-Signatur in effizienter Weise eine Mehrzahl von Einmalsignaturen bereitstellt, etwa in Form einer Mehrzahl von Lamport-Signaturen, bei welchen es sich jeweils um digitale Signaturen handelt, die mittels einer Hashfunktion gesichert sind. Die Sicherung der Signaturen mittels Hashfunktion umfasst eine Verwendung der Hashfunktion zur Erzeugung eines oder mehrerer öffentlicher kryptographischer Schlüssel.

Nach Ausführungsformen handelt es sich bei der Signatur des qualifizierten elektronischen Zeitstempels um eine Einmalsignatur. Nach Ausführungsformen handelt es sich bei der Signatur des qualifizierten elektronischen Zeitstempels um eine der folgenden Signaturen: Lamport-Einmalsignatur, Merkle-Einmalsignatur, Winternitz-Einmalsignatur, Bleichenbacher-Maurer-Einmalsignatur, BiBa-Einmalsignatur, HORS-Einmalsignatur.

Ausführungsformen können den Vorteil haben, dass eine Signatur zur Erstellung des qualifizierten elektronischen Zeitstempels verwendet wird, die mittels einer Hashfunktion gesichert ist. Somit ist auch der Zeitstempel selbst durch die entsprechende Hashfunktion gesichert und damit gesichert gegen Angriffe unter Verwendung eines Quantencomputers.

Nach Ausführungsformen umfasst jeder Block der Blockchain zumindest einen qualifizierten elektronischen Zeitstempel.

Ausführungsformen können den Vorteil haben, dass jedem Block der Blockchain somit eine gesicherte Zeitangabe zugeordnet wird.

Nach Ausführungsformen umfasst jeder N-te Block der Blockchain jeweils einen qualifizierten elektronischen Zeitstempel. N ist eine natürliche Zahl größer 1. Bei dem zusätzlichen Block handelt es sich um einen N-ten Block der Blockchain.

Ausführungsformen können den Vorteil haben, dass jedem N-ten Block der Blockchain somit eine gesicherte Zeitangabe zugeordnet wird. Beispielsweise werden neue Blöcke der Blockchain innerhalb vordefinierter zeitlicher Intervalle erzeugt. Ein Einbringen eines qualifizierten elektronischen Zeitstempels in jeden N-ten Block kann durch Wahl der Zahl N in Abhängigkeit der entsprechenden Intervalle so gewählt werden, dass ein qualifizierter elektronischer Zeitstempel innerhalb größerer zeitlicher Intervalle in die Blockchain eingetragen wird. Beispielsweise erfolgt so eine Eintragung eines qualifizierten elektronischen Zeitstempels im Durchschnitt einmal pro Stunde, einmal alle zwei Stunden, einmal alle drei Stunden, einmal alle vier Stunden, einmal alle fünf Stunden, einmal alle sechs Stunden, einmal alle sieben Stunden, einmal alle acht Stunden, einmal alle neuen Stunden, einmal alle 10 Stunden, einmal alle 11 Stunden, einmal alle 12 Stunden, einmal alle 13 Stunden, einmal alle 14 Stunden, einmal alle 15 Stunden, einmal alle 16 Stunden, einmal alle 17 Stunden, einmal alle 18 Stunden, einmal alle 19 Stunden, einmal alle 20 Stunden, einmal alle 21 Stunden, einmal alle 22 Stunden oder einmal alle 23 Stunden. Beispielsweise erfolgt so eine Eintragung eines qualifizierten elektronischen Zeitstempels im Durchschnitt einmal pro Tag.

Nach Ausführungsformen wird von der zu sichernden Signatur ausschließlich der Hashwert empfangen und in die Blockchain eingetragen.

Ausführungsformen können den Vorteil haben, dass der Speicherbedarf zum Speichern der Blockchain geringgehalten werden kann. Zudem kann der Umfang der zur Eintragung an einen Blockchainserver zu sendenden Daten geringgehalten werden.

Nach Ausführungsformen wird zusätzlich zu dem empfangenen Hashwert der zu sichernden Signatur die entsprechende zu sichernde Signatur empfangen und in die Blockchain eingetragen.

Ausführungsformen können den Vorteil haben, dass die Blockchain zur Verifikation der Eintragung der Signatur nicht nur deren Hashwert, sondern auch die Signatur selbst bereitstellt.

Nach Ausführungsformen wird dem empfangenen Hashwert der zu sichernden Signatur eine Signatur-ID zugeordnet und in die Blockchain eingetragen. Auf das Hinzufügen des zusätzlichen Blocks zu der Blockchain wird eine die Signatur-ID umfassende Eintragungsbestätigung gesendet.

Ausführungsformen können den Vorteil haben, dass anhand der Signatur-ID der in der Blockchain gespeicherte Hashwert der zu sichernden Signatur einfach aufgefunden werden kann.

Nach Ausführungsformen wird dem zusätzlichen Block der Blockchain, in welchen der empfangene Hashwert der zu sichernden Signatur eingetragen wird, eine Block-ID zugeordnet und in die Blockchain eingetragen. Auf das Hinzufügen des zusätzlichen Blocks zu der Blockchain wird eine die Block-ID umfassende Eintragungsbestätigung gesendet.

Ausführungsformen können den Vorteil haben, dass anhand der Block-ID der Block in der Blockchain, welcher den gespeicherten Hashwert der zu sichernden Signatur umfasst, einfach aufgefunden werden kann.

Nach Ausführungsformen umfasst das Verfahren ferner:

- Empfangen einer Validierungsanfrage, ob der Hashwert der zu sichernden Signatur in der Blockchain eingetragen ist,
- auf den Empfang der Validierungsanfrage, Prüfen der Blockchain auf eine Eintragung des Hashwerts der zu sichernden Signatur,
- auf ein positives Prüfungsergebnis, Senden einer Validierungsbestätigung in Antwort auf die Validierungsanfrage, welche bestätigt, dass der Hashwert der zu sichernden Signatur in der Blockchain eingetragen ist.

Ausführungsformen können den Vorteil haben, dass unter Verwendung der Blockchain nachgewiesen werden kann, dass eine Signatur erstellt wurde. Beispielsweise ist dem Hash-wert der zu sichernden Signatur ein qualifizierter elektronischer Zeitstempel zugordnet. Beispielsweise umfasst die Validierungsbestätigung den entsprechenden qualifizierten elektronischen Zeitstempel. Somit kann der entsprechenden Signatur zudem eine Zeitangabe zugeordnet werden. Beispielsweise sind in der Blockchain zusätzlich zu dem Hashwert der zu sichernden Signatur weitere Daten zur Verifikation der Signatur, wie etwa öffentliche kryptographische Schlüssel, Knoten eines Merkle-Baums, die mit der Signatur signierten Daten und/oder Angaben zu einer zu verwendenden Hashfunktion gespeichert. Beispielsweise umfasst die Validierungsbestätigung ein oder mehrere der entsprechenden weiteren Daten zur Verifikation der Signatur. Somit kann eine Verifikation einer entsprechenden Signatur erleichtert und/oder langfristig sichergestellt werden.

Nach Ausführungsformen umfasst das Verfahren ferner:

- Empfangen einer Eintragungsanfrage zur Eintragung eines oder mehrerer öffentlicher kryptographischer Schlüssel, welche der zu sichernden Signatur, deren Hash-wert empfangen wird, zugeordnet sind,
- Eintragen der empfangenen ein oder mehreren öffentlichen kryptographischen Schlüssel in die Blockchain.

Ausführungsformen können den Vorteil haben, dass die Blockchain ein oder mehrere öffentliche kryptographische Schlüssel, welche der zu sichernden Signatur, deren Hashwert empfangen wird, zugeordnet sind, bereitstellt. Somit kann eine Verifikation einer entsprechenden Signatur erleichtert und/oder langfristig sichergestellt werden.

Nach Ausführungsformen umfasst das Verfahren ferner:

- Empfangen einer Eintragungsanfrage zur Eintragung eines oder mehrerer Hashwerte der ein oder mehreren öffentlichen kryptographischen Schlüssel, welche der zu sichernden Signatur, deren Hashwert empfangen wird, zugeordnet sind,
- Eintragen der empfangenen ein oder mehreren Hashwerte der ein oder mehreren öffentlichen kryptographischen Schlüssel in die Blockchain.

Ausführungsformen können den Vorteil haben, dass anhand der in der Blockchain hinterlegten ein oder mehreren Hashwerten die ein oder mehreren öffentlichen kryptographischen Schlüssel, welche der zu sichernden Signatur, deren Hashwert empfangen wird, zugeordnet sind, identifiziert werden können.

Nach Ausführungsformen umfasst das Verfahren ferner:

- Empfangen einer Eintragungsanfrage zur Eintragung eines Zertifikats, welches der zu sichernden Signatur, deren Hashwert empfangen wird, zugeordnet ist,
- Eintragen des empfangenen Zertifikats in die Blockchain.

Ausführungsformen können den Vorteil haben, dass die Blockchain ein Zertifikat, welches der zu sichernden Signatur, deren Hashwert empfangen wird, zugeordnet ist, bereitstellt. Somit kann eine Verifikation einer entsprechenden Signatur erleichtert und/oder langfristig sichergestellt werden.

Nach Ausführungsformen umfasst das Verfahren ferner:

- Empfangen einer Eintragungsanfrage zur Eintragung eines Hashwertes des Zertifikats, welches der zu sichernden Signatur, deren Hashwert empfangen wird, zugeordnet ist,
- Eintragen des empfangenen Hashwerts des Zertifikats in die Blockchain.

Ausführungsformen können den Vorteil haben, dass anhand des in der Blockchain hinterlegten Hashwertes das Zertifikat, welches der zu sichernden Signatur, deren Hashwert empfangen wird, zugeordnet ist, identifiziert werden kann.

Nach Ausführungsformen handelt es sich bei der zu sichernden Signatur, deren Hashwert empfangen wird, um eine Signatur eines zu sichernden Prüfberichts. Der Prüfbericht bestätigt eine erfolgreiche Prüfung von ein oder mehreren Nutzerattributen unter Verwendung eines ID-Dokuments.

Ausführungsformen können den Vorteil haben, dass durch die Signatur eine erfolgreiche Prüfung von ein oder mehreren Nutzerattributen unter Verwendung eines ID-Dokuments bestätigt wird. Die Prüfung kann beispielsweise vor Ort durch Vorlage des entsprechenden ID-Dokuments erfolgen, wie etwa im Zuge des Postident-Verfahrens oder vergleichbarer Verfahren. Hierbei werden die entsprechenden Nutzerattribute dem ID-Dokument entnommen, beispielsweise abgelesen, und dem Prüfbericht hinzugefügt. Beispielsweise umfasst der Prüfbericht zudem eine Bestätigung, dass der Inhaber des ID-Dokuments dieses persönlich vorgelegt hat. Beispielsweise umfasst der Prüfbericht zudem eine Angabe eines Verwendungszwecks bzw. eines Empfängers der Nutzerattribute. Beispielsweise kann eine Prüfung des ID-Dokuments auch über eine Videoverbindung, etwa in Zuge eines Videoident-Verfahrens, erfolgen. Beispielsweise handelt es sich bei dem ID-Dokument um ein ID-Token, aus welchem die Nutzerattribute elektronisch ausgelesen werden können. Beispielsweise erfolgt das Auslesen durch einen ID-Providerservice über ein Netzwerk. Der ID-Providerservice stellt in diesem Fall den entsprechenden Prüfbericht mit den ausgelesenen Nutzerattributen aus. Beispielsweise ist eine Voraussetzung für ein Auslesen der entsprechen Nutzerattribute eine erfolgreiche Authentifizierung des Inhabers des ID-Tokens durch den ID-Token.

Unter einem "ID-Token" wird hier ein tragbares elektronisches Gerät verstanden, zum Beispiel einen sogenannten USB-Stick, eine Chipkarte, oder ein ID-Dokument, auf welchem Attribute eines Nutzers gespeichert sind. Unter einem "ID-Dokument" wird insbesondere ein Ausweis-, Wert- oder Sicherheitsdokument verstanden, welches Attribute eines Nutzers umfasst, insbesondere ein hoheitliches Dokument, insbesondere ein papierbasiertes und/oder kunststoffbasiertes Dokument, wie zum Beispiel ein elektronisches Ausweisdokument, insbesondere Reisepass, Personalausweis, Visum, Führerschein, Fahrzeugschein, Fahrzeugbrief, Gesundheitskarte, oder einen Firmenausweis, oder eine anderes ID-Dokument, eine Chipkarte, Zahlungsmittel, insbesondere Banknote, Bankkarte oder Kreditkarte, Frachtbrief oder ein sonstiger Berechtigungsnachweis. Insbesondere kann es sich bei dem ID-Token um ein Machine-Readable Travel Document, wie beispielsweise von der Internationalen Luftfahrtbehörde (ICAO) und/oder dem Bundesamt für Sicherheit in der Informationstechnik (BSI) standardisiert, handeln.

Beispielsweise wird der entsprechende Prüfbericht ebenfalls in die Blockchain eingetragen.

Nach Ausführungsformen handelt es sich bei der zu sichernden Signatur, deren Hashwert empfangen wird, um eine Signatur eines zu sichernden Zertifikats.

Ausführungsformen können den Vorteil haben, dass durch die Eintragung der Signatur das entsprechende Zertifikat über die Blockchain abgesichert wird. Beispielsweise wird das entsprechende Zertifikat ebenfalls in die Blockchain eingetragen.

Unter einem "Zertifikat" wird hier ein digitales Zertifikat verstanden, beispielsweise ein Public-Key-Zertifikat (PKI-Zertifikat). Bei einem Zertifikat handelt es sich um strukturierte Daten, die dazu dienen, einen öffentlichen kryptographischen Schlüssel eines asymmetrischen Kryptosystems einer Identität, wie zum Beispiel einer Person, Institution oder einer Vorrichtung, zuzuordnen. Zur kryptographischen Sicherung und zum Nachweis der Authentizität der Daten des Zertifikates, sind diese von einem Zertifikatsaussteller signiert. Durch PKI-Zertifikate, welche auf asymmetrischen Schlüsselpaaren basieren, und bis auf ein Root- bzw. Wurzelzertifikat jeweils von einem Zertifikatsaussteller mit einem Signaturschlüssel signiert sind, dessen zugehöriger Signaturprüfschlüssel bzw. Verifikationsschlüssel zum Verifizieren der Signatur dem Zertifikatsaussteller durch ein PKI-Zertifikat des entsprechenden Zertifikataussstellers zugeordnet ist, wird eine so genannte Public Key Infrastructure (PKI) realisiert. Beispielsweise kann das Zertifikat dem Standard X.509 oder einem anderen Standard entsprechen. Beispielsweise handelt es sich bei dem Zertifikat um ein Card Verifiable Certificate (CVC). Beispielsweise handelt es sich bei dem Zertifikat um ein Berechtigungszertifikat. Ein Berechtigungszertifikat umfasst strukturierte Daten, welche zusätzlich Rechte der Identität definieren.

Ausführungsformen umfassen ferner einen Server zur blockchain-basierten Sicherung von digitalen Signaturen mit einem Prozessor und einem Speicher. In dem Speicher sind Programminstruktionen gespeichert. Der Server umfasst ferner eine Kommunikationsschnittstelle zur Kommunikation über ein Netzwerk. Ein Ausführen der Programminstruktionen durch den Prozessor veranlasst den Prozessor dazu den Server so zu steuern, dass der Server ein Verfahren zur blockchain-basierten Sicherung von digitalen Signaturen ausführt. Das Verfahren umfasst:

- Bereitstellen einer Blockchain,
- Empfangen einer Eintragungsanfrage zur Eintragung eines Hashwerts einer mittels der Blockchain zu sichernden digitalen Signatur über das Netzwerk,
- Erstellen eines zusätzlichen Blocks für die Blockchain, in welchen der empfangene Hashwert der Signatur eingetragen wird,
- Hinzufügen des zusätzlichen Blocks mit dem empfangenen Hashwert der Signatur zu der Blockchain.

Nach Ausführungsformen ist der Server dazu konfiguriert jede der zuvor beschriebenen Ausführungsformen des Verfahrens zur blockchain-basierten Sicherung von digitalen Signaturen auszuführen.

Nach Ausführungsformen ist die zu sichernde digitale Signatur zusätzlich mittels einer Hashfunktion gesichert. Die Sicherung der Signatur mittels Hashfunktion umfasst eine Verwendung der Hashfunktion zur Erzeugung eines kryptographischen Schlüssels, welcher der zu sichernden Signatur zugeordnet ist. Bei der mittels Hashfunktion gesicherten digitalen Signatur handelt es sich beispielsweise um eine Merkle-Signatur.

Unter einem "Prozessor" wird hier eine Logikschaltung verstanden, die zur Ausführung von Programminstruktionen dient. Die Logikschaltung kann auf einem oder mehreren diskreten Bauelementen implementiert sein, insbesondere auf einem oder mehreren Chips. Insbesondere wird unter einem "Prozessor" ein Mikroprozessor oder ein Mikroprozessorsystem aus mehreren Prozessorkernen und/oder mehreren Mikroprozessoren verstanden.

Unter einem "Programm" bzw. "Programminstruktionen" wird hier ohne Einschränkung jede Art von Computerprogramm verstanden, welches maschinenlesbare Instruktionen zur Steuerung einer Funktionalität des Computers umfasst.

Unter einem "Speicher" werden hier sowohl flüchtige als auch nicht flüchtige Speicher, insbesondere elektronische Speicher bzw. digitale Speichermedien verstanden.

Unter einem "nichtflüchtigen Speicher" wird hier ein elektronischer Speicher zur dauerhaften Speicherung von Daten verstanden. Ein nichtflüchtiger Speicher kann als nichtänderbarere Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einem "flüchtigen Speicher" wird hier ein elektronischer Speicher zur vorübergehenden Speicherung von Daten verstanden, welcher dadurch gekennzeichnet ist, dass gespeicherte Daten nach dem Abschalten der Energieversorgung verloren gehe. Insbesondere kann es sich hierbei um einen flüchtigen Direktzugriffsspeicher, der auch als Random-Access Memory (RAM) bezeichnet wird, oder einen flüchtigen Arbeitsspeicher des Prozessors handeln.

Unter einem "geschützten Speicherbereich" wird hier ein Bereich eines elektronischen Speichers verstanden, auf den ein Zugriff, das heißt ein Lesezugriff oder ein Schreibzugriff, nur über einen Prozessor des entsprechenden elektronischen Geräts möglich ist. Nach Ausführungsformen ist der Zugriff von dem mit dem Speicher gekoppelten Prozessor nur dann möglich, wenn eine hierzu erforderliche Bedingung erfüllt ist. Hierbei kann es sich zum Beispiel um eine kryptografische Bedingung, insbesondere eine erfolgreiche Authentifizierung und/oder eine erfolgreiche Berechtigungsprüfung einer Zugriffsanfrage, handeln.

Unter einer "Kommunikationsschnittstelle" wird hier eine Schnittstelle verstanden, über die Daten empfangen und gesendet werden können, wobei die Kommunikationsschnittstelle kontaktbehaftet oder kontaktlos konfiguriert sein kann. Bei der Kommunikationsschnittstelle kann es sich um eine interne Schnittstelle oder um eine externe Schnittstelle handeln, welche beispielsweise mittels eines Kabels oder kabellos mit einem zugeordneten Gerät verbunden ist.

Eine Kommunikation kann beispielsweise über ein Netzwerk erfolgen. Unter einem "Netzwerk" wird hier jedes Übertragungsmedium mit einer Anbindung zur Kommunikation verstanden, insbesondere eine lokale Verbindung oder ein lokales Netzwerk, insbesondere ein Local Area Network (LAN), ein privates Netzwerk, insbesondere ein Intranet, oder ein virtuelles privates Netzwerk (Virtual Private Network - VPN). Beispielsweise kann ein Computersystem eine Standardfunkschnittstelle zur Anbindung an ein WLAN aufweisen. Ferner kann es sich um ein öffentliches Netzwerk, wie beispielsweise das Internet handeln. Je nach Ausführungsform kann diese Verbindung auch über ein Mobilfunknetzwerk hergestellt werden.

Unter einem "Mobilfunknetzwerk" wird hier und im Folgenden ein digitales zellulares Mobilfunknetzwerk verstanden, welches nach einem Mobilfunkstandard wie zum Beispiel GSM, UMTS, LTE, CDMA oder einem anderen Standard aufgebaut sein kann.

Ausführungsformen umfassen ferner eine Blockchain zur blockchain-basierten Sicherung von digitalen Signaturen, welche durch ein Verfahren zur blockchain-basierten Sicherung von digitalen Signaturen erzeugbar ist. Das Verfahren umfasst:

- Empfangen einer Eintragungsanfrage zur Eintragung eines Hashwerts einer mittels der Blockchain zu sichernden digitalen Signatur,
- Erstellen eines zusätzlichen Blocks für die Blockchain, in welchen der empfangene Hashwert der zu sichernden Signatur eingetragen wird,
- Hinzufügen des zusätzlichen Blocks mit dem empfangenen Hashwert der zu sichernden Signatur zu der Blockchain.

Nach Ausführungsformen wird die Blockchain durch eine der zuvor beschriebenen Ausführungsformen des Verfahrens zur blockchain-basierten Sicherung von digitalen Signaturen erzeugt.

Nach Ausführungsformen ist die zu sichernde digitale Signatur zusätzlich mittels einer Hashfunktion gesichert. Die Sicherung der Signatur mittels Hashfunktion umfasst eine Verwendung der Hashfunktion zur Erzeugung eines kryptographischen Schlüssels, welcher der zu sichernden Signatur zugeordnet ist. Bei der mittels Hashfunktion gesicherten digitalen Signatur handelt es sich beispielsweise um eine Merkle-Signatur.

Beispielsweise werden ein oder mehrere initiale Ursprungsknoten der Blockchain bereitgestellt. Ausgehend von diesen ein oder mehreren initialen Ursprungsknoten wird die Blockchain sukzessive durch ein Hinzufügen zusätzlicher Blöcke vergrößert. Beispielsweise umfasst jeder hinzugefügte zusätzliche Block der Blockchain jeweils einen Hashwert eines Inhalts eines dem zusätzlichen Block der Blockchain unmittelbar vorangehenden Blocks der Blockchain. Beispielsweise umfasst jeder nachfolgende Block der Blockchain jeweils einen Hashwert des Inhalts eines unmittelbar vorangehenden Blocks der Blockchain.

Ausführungsformen umfassen ferner eine Blockchain zur blockchain-basierten Sicherung von digitalen Signaturen. Die Blockchain umfasst eine Mehrzahl von Blöcken. Jeder nachfolgende Block der Blockchain umfasst jeweils einen Hashwert des Inhalts eines unmittelbar vorangehenden Blocks der Blockchain. In den Blöcken der Blockchain ist eine Mehrzahl von Hashwerten der mittels der Blockchain zu sichernden digitalen Signaturen eingetragen.

Nach Ausführungsformen kann die Blockchain zu jeder der zuvor beschriebenen Ausführungsformen des Verfahrens zur blockchain-basierten Sicherung von digitalen Signaturen verwendet werden. Nach Ausführungsformen wird die Blockchain durch eine der zuvor beschriebenen Ausführungsformen des Verfahrens zur blockchain-basierten Sicherung von digitalen Signaturen erzeugt.

Nach Ausführungsformen sind die zu sichernden digitalen Signaturen jeweils zusätzlich mittels einer Hashfunktion gesichert. Die Sicherung der Signaturen mittels Hashfunktion umfasst eine Verwendung der Hashfunktion zur Erzeugung kryptographischer Schlüssel, welche den zu sichernden Signaturen zugeordnet sind. Bei den mittels Hashfunktion gesicherten digitalen Signaturen handelt es sich beispielsweise um Merkle-Signaturen.

Im Weiteren werden Ausführungsformen der Erfindung mit Bezugnahme auf die Zeichnungen näher erläutert. Es zeigen:

Figur 1    ein schematisches Diagramm eines exemplarischen Systems zur blockchain-basierten Sicherung von digitalen Signaturen,

Figur 2    ein schematisches Diagramm eines weiteren exemplarischen Systems zur blockchain-basierten Sicherung von digitalen Signaturen,

Figur 3    ein Flussdiagramm eines exemplarischen Verfahrens zur blockchain-basierten Sicherung von digitalen Signaturen,

Figur 4    ein Flussdiagramm eines exemplarischen Verfahrens zur blockchain-basierten Sicherung von digitalen Signaturen mit einem qualifizierten elektronischen Zeitstempel,

Figur 5    ein Flussdiagramm eines exemplarischen Verfahrens zum Validieren einer Blockchain zur Sicherung digitaler Signaturen,

Figur 6    ein Flussdiagramm eines exemplarischen Verfahrens zur blockchain-basierten Sicherung von öffentlichen kryptographischen Schlüsseln,

Figur 7    ein Flussdiagramm eines exemplarischen Verfahrens zur blockchain-basierten Sicherung von öffentlichen kryptographischen Schlüsseln,

Figur 8    ein Flussdiagramm eines exemplarischen Verfahrens zur blockchain-basierten Sicherung eines Zertifikats,

Figur 9    ein Flussdiagramm eines exemplarischen Verfahrens zur blockchain-basierten Sicherung eines Zertifikats,

Figur 10    ein Flussdiagramm eines exemplarischen Verfahrens zur blockchain-basierten Sicherung einer digitalen Signatur eines Prüfberichts eines ID-Dokuments,

Figur 11    ein Flussdiagramm eines exemplarischen Verfahrens zur blockchain-basierten Sicherung einer digitalen Signatur eines Zertifikats,

Figur 12    einen exemplarischen Merkle-Baum mit acht Blättern für acht öffentliche kryptographische Schlüssel,

Figur 13    den exemplarischen Merkle-Baum aus Figur 12 mit gekennzeichnetem Authentifizierungspfad,

Figur 14    eine exemplarische Blockchain zur blockchain-basierten Sicherung von digitalen Signaturen und

Figur 15    eine exemplarische Blockchain zur blockchain-basierten Sicherung von digitalen Signaturen.

Elemente der nachfolgenden Ausführungsformen, die einander entsprechen, werden mit denselben Bezugszeichen gekennzeichnet.

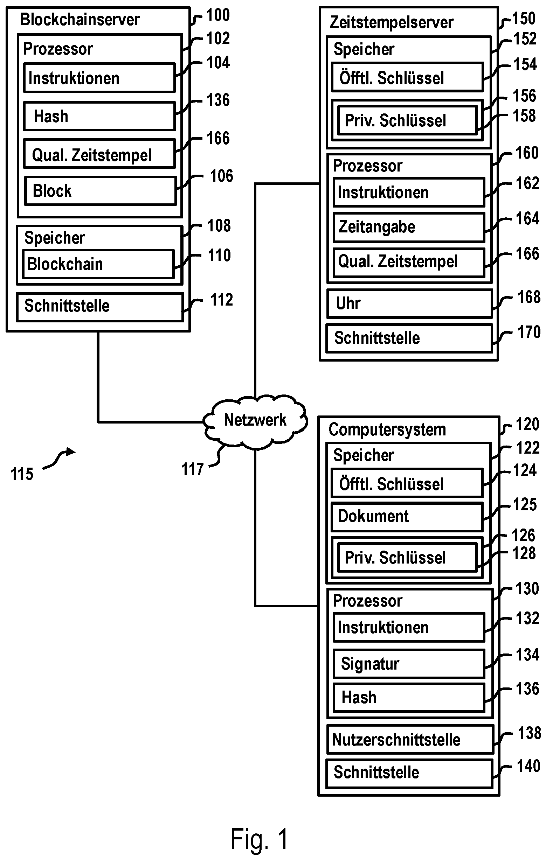

Figur 1 zeigt ein exemplarisches System 115 zur blockchain-basierten Sicherung von digitalen Signaturen. Das System 115 umfasst einen Blockchainserver 100 mit einem Prozessor 102 und einem Speicher 108. Ferner umfasst der Blockchainserver 100 eine Kommunikationsschnittstelle 112 zur Kommunikation über ein Netzwerk 117. In dem Speicher 108 ist eine Blockchain 110 gespeichert. Bei dieser Blockchain 110 kann es sich beispielsweise um eine öffentliche Blockchain, eine konsortiale Blockchain oder eine private Blockchain handeln. Ferner stellt der Speicher 108 Programminstruktionen 104 bereit. Diese Programminstruktionen 104 werden von dem Prozessor 102 ausgeführt. Ein Ausführen der Programminstruktionen 104 durch den Prozessor 102 veranlasst den Prozessor 102 dazu den Blockchainserver 100 so zu steuern, dass der Blockchainserver 100 ein Verfahren zur blockchain-basierten Sicherung von digitalen Signaturen ausführt. Beispielsweise werden die Programminstruktionen 104 in Form eines Computerprogramms, etwa in Form eines Anwendungsprogramms, bereitgestellt. Beispielsweise werden die Programminstruktionen 104 in Form eines Smart Contract bereitgestellt. Beispielsweise ist der Smart Contract in der Blockchain gespeichert. Der Smart Contract wird ausgeführt werden, wenn bestimmte in dem Smart Contract definierte Bedingungen erfüllt sind.

Ferner umfasst das System 115 ein Computersystem bzw. Computergerät 120, welches eine zu sichernde Signatur 134 erstellt. Das Computersystem 120 umfasst einen Prozessor 130 und einen Speicher 122. Ferner umfasst das Computersystem 120 eine Kommunikationsschnittstelle 130 zur Kommunikation mit dem Blockchainserver 100 über das Netzwerk 117. Schließlich umfasst das Computersystem 120 eine Nutzerschnittstelle 138, welche es einem Nutzer des Computersystems 120 ermöglicht, das Computersystem 120 und insbesondere das Erstellen der Signatur 134 zu steuern. Beispielsweise umfasst die Nutzerschnittstelle 138 Eingabevorrichtungen, wie etwa eine Tastatur, eine Maus und/oder ein berührungssensitives Display. Ferner umfasst die Nutzerschnittstelle 138 beispielsweise Ausgabevorrichtungen, wie etwa ein Display. Der Speicher 122 stellt dem Prozessor 130 Programminstruktionen 132 bereit. Diese Programminstruktionen 132 werden von dem Prozessor 130 ausgeführt. Ein Ausführen der Programminstruktionen 132 durch den Prozessor 130 veranlasst den Prozessor 130 dazu das Computersystem 120 so zu steuern, dass das Computersystem 120 beispielsweise die digitale Signatur 134 erstellt und eine blockchain-basierten Sicherung der Signatur 134 ausführt. Beispielsweise werden die Programminstruktionen 104 in Form eines Computerprogramms, etwa in Form eines Anwendungsprogramms, bereitgestellt.

In dem Speicher 122 des Computersystems 120 wird ein asymmetrisches kryptographisches Schlüsselpaar bereitgestellt, welches einen privaten kryptographischen Schlüssel 128 und einen zugehörigen öffentlichen kryptographischen Schlüssel 124 umfasst. Dieses asymmetrische kryptographische Schlüsselpaar ist dazu konfiguriert, eine digitale Signatur wie die Signatur 134 zu erstellen. Bei der Signatur 134 handelt es sich beispielsweise um eine Signatur, deren kryptographische Sicherung selbst nicht quantensicher ist. Beispielsweise basiert die kryptographische Sicherung der entsprechenden Signatur selbst auf dem RSA-Schema oder auf ECC. Beispielsweise handelt es sich bei der Signatur 134 um eine Signatur, deren kryptographische Sicherung selbst quantensicher ist. Beispielsweise ist die Signatur 134 mittels einer Hashfunktion in einer Weise gesichert, welche die Signatur effektiv gegen Angriffe mit Quantencomputer schützt. Die Sicherung der Signatur 134 mittels Hashfunktion umfasst beispielsweise eine Verwendung der Hashfunktion zur Erzeugung eines der kryptographischen Schlüssel des asymmetrischen kryptographischen Schlüsselpaars. Beispielsweise wird der öffentliche kryptographische Schlüssel 124 aus dem privaten kryptographischen Schlüssel 128 unter Verwendung der Hashfunktion erzeugt. Der private kryptographische Schlüssel 128 ist beispielsweise in einem geschützten Speicherbereich 126 des Speichers 122 gespeichert.

Im Zuge des Verfahrens wird von dem Computersystem 120 die Signatur 134 des Dokuments 125 erzeugt. Beispielsweise handelt es sich bei der Signatur 134, im Falle einer quantensicheren Signatur, um eine Einmalsignatur. Beispielsweise handelt es sich bei der entsprechenden Einmalsignatur um eine der folgenden Signaturen: Lamport-Einmalsignatur, Merkle-Einmalsignatur, Winternitz-Einmalsignatur, Bleichenbacher-Maurer-Einmalsignatur, BiBa-Einmalsignatur, HORS-Einmalsignatur. Beispielsweise wird die Einmalsignatur als Teil einer Merkle-Signatur verwendet. In diesem Fall wird die digitale Signatur 134 unter Verwendung eines auf Merkle-Bäumen und Einmalsignaturen basierenden digitalen Signaturverfahren erzeugt. Zum Erzeugen der Signatur 134 wird beispielsweise ein Hashwert des Dokuments 125 berechnet, auf welchen der private kryptographische Schlüssel 128 angewendet wird. Auf die resultierende Signatur 134 wird eine kryptographische Hashfunktion angewendet, sodass der Hashwert 136 der Signatur 134 bereitgestellt wird.

Zum Sichern der Signatur 134 in der von dem Blockchainserver 100 bereitgestellten Blockchain 110 wird von dem Computersystem 120 eine Eintragungsanfrage zur Eintragung des Hashwerts 136 der zu sichernden Signatur 134 erstellt. Die Eintragungsanfrage mit dem Hashwerts 136 wird unter Verwendung der Kommunikationsschnittstelle 140 über das Netzwerk 117 an den Blockchainserver 100 gesendet. Der Blockchainserver 100 empfängt die Eintragungsanfrage unter Verwendung der Kommunikationsschnittstelle 108. Auf den Empfang der Eintragungsanfrage hin, erstellt der Blockchainserver 100 einen zusätzlichen Block 106 für die Blockchain 110, in welchen der empfangene Hashwert 136 der zu sichernden Signatur 134 eingetragen wird. Anschließend wird der zusätzliche Block 106 mit dem empfangenen Hashwert 136 der zu sichernden Signatur 134 zu der Blockchain 110 hinzugefügt.

Fakultativ kann das Verfahren ferner ein Eintragen eines qualifizierten elektronischen Zeitstempels 166 umfassen. In diesem Fall umfasst das System 115 beispielsweise ferner einen Zeitstempelserver 150 eines Vertrauensdienstanbieters, welcher dazu konfiguriert ist, den qualifizierten elektronischen Zeitstempel 166 zu erstellen. Der Zeitstempelserver 150 umfasst einen Prozessor 160 und einen Speicher 152. Ferner umfasst der Zeitstempelserver 150 eine Kommunikationsschnittstelle 170 zur Kommunikation über das Netzwerk 117. Der Speicher 152 stellt dem Prozessor 160 Programminstruktionen 162 bereit. Diese Programminstruktionen 162 werden von dem Prozessor 160 ausgeführt. Ein Ausführen der Programminstruktionen 162 durch den Prozessor 160 veranlasst den Prozessor 160 dazu den Zeitstempelserver 150 so zu steuern, dass der Zeitstempelserver 150 den qualifizierten elektronischen Zeitstempel 166 erstellt. Beispielsweise werden die Programminstruktionen 162 in Form eines Computerprogramms bereitgestellt.

In dem Speicher 160 des Zeitstempelservers 150 wird ein asymmetrisches kryptographisches Schlüsselpaar bereitgestellt, welches einen privaten kryptographischen Schlüssel 158 und einen zugehörigen öffentlichen kryptographischen Schlüssel 154 umfasst. Dieses asymmetrische kryptographische Schlüsselpaar ist dazu konfiguriert, einen qualifizierten elektronischen Zeitstempel wie den qualifizierten elektronischen Zeitstempel 166 zu erstellen. Bei dem qualifizierten elektronischen Zeitstempel 166 handelt es sich beispielsweise um einen qualifizierten elektronischen Zeitstempel 166, dessen kryptographische Sicherung selbst nicht quantensicher ist. Beispielsweise basiert die kryptographische Sicherung einer Signatur des Zeitstempels 166 und damit des Zeitstempels 166 selbst auf dem RSA-Schema oder auf ECC. Beispielsweise handelt es sich bei dem qualifizierten elektronischen Zeitstempel 166 um einen qualifizierten elektronischen Zeitstempel 166, dessen kryptographische Sicherung selbst quantensicher ist. Beispielsweise ist kryptographische Sicherung einer Signatur des Zeitstempels 166 und des Zeitstempels 166 selbst quantensicher. Beispielsweise ist der qualifizierte elektronische Zeitstempel 166 mittels einer Hashfunktion gesichert ist, indem er mit einer Signatur signiert ist, welche mittels der entsprechenden Hashfunktion gesichert ist. Die Sicherung der Signatur mittels Hashfunktion umfasst beispielsweise eine Verwendung der Hashfunktion zur Erzeugung eines der kryptographischen Schlüssel des asymmetrischen kryptographischen Schlüsselpaars. Beispielsweise wird der öffentliche kryptographische Schlüssel 154 aus dem privaten kryptographischen Schlüssel 158 unter Verwendung der Hashfunktion erzeugt. Der private kryptographische Schlüssel 158 ist beispielsweise in einem geschützten Speicherbereich 156 des Speichers 152 gespeichert.

Der Zeitstempelserver 150 ist dazu konfiguriert eine aktuelle Uhrzeit präzise festzustellen. Hierzu hat der Zeitstempelserver 150 beispielsweise Zugriff auf eine präzise Zeitquelle. Beispielsweise verwendet der Zeitstempelserver 150 eine Funkuhr, auf welche er über das Netzwerk 117 zugreifen kann, sowie eine zusätzliche interne Zeitquelle in Form der Uhr 168. Der Zeitstempelserver 150 empfängt über das Netzwerk 117 eine Ausstellanfrage zum Ausstellen eines qualifizierten elektronischen Zeitstempels 166. Beispielsweise umfasst die Ausstellanfrage ein Element, welchem eine präzise Zeitangabe 164 in kryptographisch gesicherter Form zugeordnet werden soll. Der Zeitstempelserver 150 erstellt eine Zeitangabe 164 der aktuellen Zeit unter Verwendung der Uhr 168 und gegebenenfalls unter Verwendung eines von der Funkuhr über das Netzwerk 117 empfangenen Zeitsignals. Der Zeitstempelserver 150 signiert diese Zeitangabe 164 zusammen mit dem entsprechenden Element unter Verwendung eines privaten kryptographischen Schlüssels 158 des Vertrauensdienstanbieters. Anschließend sendet der Zeitstempelserver 150 den so erstellen qualifizierten elektronischen Zeitstempel 166 in Antwort auf die Ausstellanfrage an ein anfragendes Computersystem. Beispielsweise wird der qualifizierte elektronische Zeitstempel zusammen mit Daten zum Verifizieren des entsprechenden qualifizierten elektronischen Zeitstempels 166 gesendet. Die Daten zum Verifizieren des entsprechenden qualifizierten elektronischen Zeitstempels 166 umfassen beispielsweise den öffentlichen kryptographischen Schlüssel 154 des Vertrauensdienstanbieters und/oder ein Zertifikat des Zeitstempelservers 150 bzw. Vertrauensdienstanbieters.

Beispielsweise fragt der Blockchainserver 100 das Erstellen eines qualifizierten elektronischen Zeitstempels 166 über das Netzwerk 117 an. Hierzu erstellt der Blockchainserver 100 die Ausstellanfrage zum Ausstellen des qualifizierten elektronischen Zeitstempels 166 und sendet diese über das Netzwerk 117 den an den Zeitstempelserver 150 des Vertrauensdienstanbieters. In Antwort auf das Senden der Ausstellanfrage, empfängt der Blockchain-server 100 den qualifizierten elektronischen Zeitstempel 166 zum Eintragen in der Blockchain 110 über das Netzwerk 117 von dem Zeitstempelserver 150 des Vertrauensdienstanbieters. Der empfangene qualifizierten elektronischen Zeitstempel 166 wird dann zusätzlich zu dem Hashwert 136 in den zusätzlichen Block 106 der Blockchain 110 eingetragen. Beispielsweise wird zur Erstellung des qualifizierten elektronischen Zeitstempels 166 der Hash-wert 136 verwendet und der Hashwert 136 in Form des qualifizierten elektronischen Zeitstempels 166 in den zusätzlichen Block 106 der Blockchain 110 eingetragen.

Alternativerweise kann der qualifizierte elektronische Zeitstempel 166 von dem Computersystem 120 im Zuge der Erstellung der Signatur 134 bei dem Zeitstempelserver 150 angefragt werden. Der resultierende qualifizierte elektronische Zeitstempel 166 wird von dem Computersystem 120 beispielsweise an den Blockchainserver 100 zur Sicherung des Hashwerts 136 in der Blockchain 110 weitergeleitet. Beispielsweise empfängt der Blockchainserver 100 den qualifizierten elektronischen Zeitstempel 166 mit der Eintragungsanfrage empfangen und der qualifizierte elektronische Zeitstempel 166 umfasst beispielsweise zusätzlich zu der Zeitangabe 164 den empfangenen Hashwert 136 der zu sichernden Signatur134. Beispielsweise wird der erstellte qualifizierte elektronische Zeitstempel 166 von dem Computersystem 120 bei dem Zeitstempelserver 150 angefragt und nach seiner Erstellung von dem Zeitstempelserver 150 an den Blockchainserver 100 gesendet.

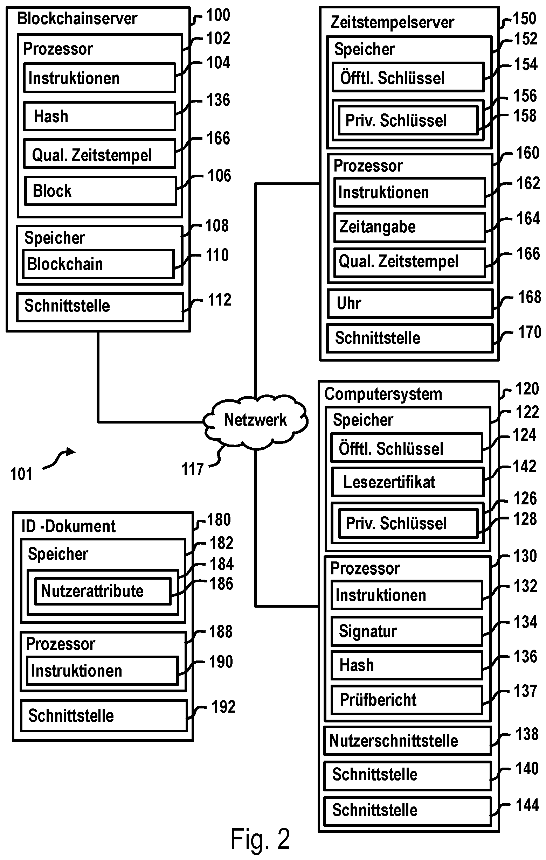

Figur 2 zeigt ein weiteres exemplarisches System 115 zur blockchain-basierten Sicherung von digitalen Signaturen. Das System 115 in Figur 2 entspricht dem System 115 in Figur 1, wobei das signierende Computersystem 120 zusätzlich zum Auslesen von Nutzerattributen aus einem ID-Dokument 180, bei welchem es sich um ein ID-Token handelt, konfiguriert ist. Hierzu umfasst das Computersystem 120 beispielsweise eine weitere Kommunikationsschnittstelle 144 zum kontaktlosen oder kontaktbasierten Auslesen des ID-Dokuments 180. Alternativerweise kann das Computersystem 120 das ID-Dokument 180 unter Verwendung der Kommunikationsschnittstelle 140 über das Netzwerk 117 und ein weiteres lokales Computersystem auslesen, welches eine lokale kontaktlose oder kontaktbasierte Verbindung zu dem ID-Dokument 180 bereitstellt. Das ID-Dokument 180 umfasst einen Prozessor 188 und einen Speicher 182. Ferner umfasst das ID-Dokument 180 eine Kommunikationsschnittstelle 192 zur kontaktlosen oder kontaktbasierten Kommunikation mit dem Computersystem 120 oder einem weiteren lokalen Computersystem, welches mit dem Computersystem 120 über das Netzwerk 117 kommuniziert. Der Speicher 182 stellt dem Prozessor 188 Programminstruktionen 190 bereit. Diese Programminstruktionen 190 werden von dem Prozessor 188 ausgeführt. Ein Ausführen der Programminstruktionen 190 durch den Prozessor 188 veranlasst den Prozessor 188 dazu das ID-Dokument 180 so zu steuern, dass es auf einen gültigen Berechtigungsnachweis hin ein Auslesen von Nutzerattributen 186 aus dem Speicher 184 durch das Computersystem 120 ermöglicht. Die Nutzerattributen 186 sind in einem geschützten Speicherbereich 184 des Speichers 182 gespeichert.

Eine Leseberechtigung zum Auslesen der Nutzerattribute 186 weist das Computersystem 120 beispielsweise mit einem Lesezertifikat 142 nach. Das Computersystem 120 baut beispielsweise einen verschlüsselten Kommunikationskanal zu dem ID-Dokument 180 auf. Beispielsweise ist der Kommunikationskanal mittels Ende-zu-Ende-Verschlüsselung verschlüsselt. Auf einen erfolgreichen Nachweis der Leseberechtigung unter Verwendung des Lesezertifikat 142 erhält das Computersystem 120 einen Lesezugriff auf das ID-Dokument 180 zum Auslesen der Nutzerattribute 186.

Das Auslesen der Nutzerattribute 186 erfolgt beispielsweise im Zuge einer Prüfung bzw. eines Nachweises der Nutzerattribute 186. Beispielsweise handelt es sich bei dem Computersystem 120 um ein Computersystem eines ID-Providerservices. Bei der Signatur 134 handelt es sich beispielsweise um eine Signatur eines zu sichernden Prüfberichts 137. Der Prüfbericht 137 bestätigt eine erfolgreiche Prüfung von ein oder mehreren Nutzerattributen 186 unter Verwendung eines ID-Dokuments 180. Die Prüfung kann beispielsweise vor Ort durch Vorlage des entsprechenden ID-Dokuments 180 erfolgen oder über das Netzwerk 117. Die Nutzerattribute 186 werden ausgelesen und dem Prüfbericht 137 hinzugefügt. Beispielsweise umfasst der Prüfbericht 137 zudem eine Bestätigung, dass der Inhaber des ID-Dokuments 180 dieses persönlich vorgelegt hat. Beispielsweise ist eine Voraussetzung für ein Auslesen der entsprechen Nutzerattribute 186 eine erfolgreiche Authentifizierung des Inhabers des ID-Dokuments 180 durch das ID-Dokument 180. Beispielsweise umfasst der Prüfbericht 137 zudem eine Angabe eines Verwendungszwecks bzw. eines Empfängers der Nutzerattribute 186. Bei dem Hashwert 136 der Signatur 134 handelt es sich mithin um einen Hashwert der Signatur des Prüfberichts 137.

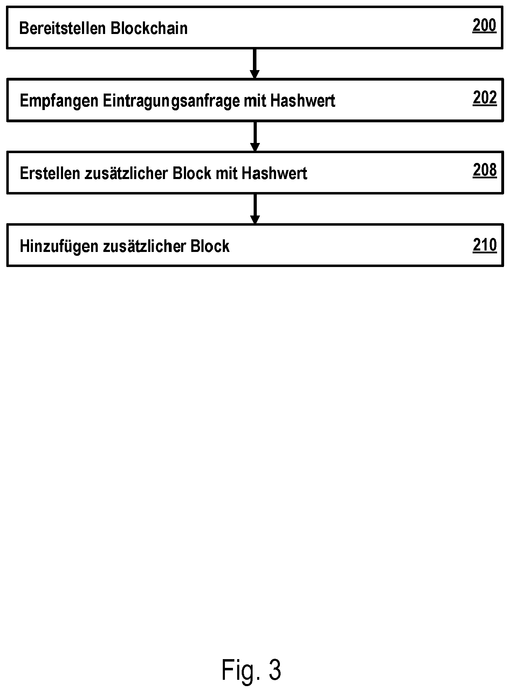

Figur 3 zeigt ein Verfahren zur blockchain-basierten Sicherung von digitalen Signaturen. In Block 200 wird eine Blockchain bereitgestellt. Bei dieser bereitgestellten Blockchain kann es sich beispielsweise um eine öffentliche Blockchain, eine konsortiale Blockchain oder eine private Blockchain handeln. Die Blockchain wird beispielsweise von ein oder mehreren Blockchainservern verwaltet. Beispielsweise wird ein Computerprogramm zum Ausführen des Verfahrens zur blockchain-basierten Sicherung von digitalen Signaturen bereitgestellt. Das Computerprogramm umfasst Programminstruktionen, welche dazu konfiguriert sind, dass ein Ausführen der Programminstruktionen durch einen Prozessor eines Computersystems, etwa eines Servers, den Prozessor dazu veranlasst, das Computersystem so zu steuern, dass das Computersystem das Verfahren zur blockchain-basierten Sicherung von digitalen Signaturen ausführt. Das Computerprogramm wird beispielsweise in Form eines Smart Contracts bereitgestellt. Ein Smart Contract ist ein Computerprogramm, das zusammen mit einer Blockchain bereitgestellt wird. Beispielsweise ist der Smart Contract in der Blockchain gespeichert. Der Smart Contract wird ausgeführt werden, wenn bestimmte Bedingungen erfüllt sind.

In Block 202 wird eine Eintragungsanfrage zur Eintragung eines Hashwerts einer mittels der Blockchain zu sichernden digitalen Signatur empfangen. Bei der mittels der Blockchain zu sichernden digitalen Signatur handelt es sich beispielsweise um eine selbst nicht quantensichere Signatur, wie etwa eine Signatur, deren kryptographische Sicherung auf dem RSA-Schema oder auf ECC beruht. Eine Sicherung dieser Signatur wird mittels der Blockchain implementiert. Bei der mittels der Blockchain zu sichernden digitalen Signatur handelt es sich beispielsweise um eine Signatur, deren kryptographische Sicherung selbst quantensicher ist. Die Quantensicherung wird beispielsweise durch eine kryptographische Sicherung mittels einer Hashfunktion implementiert. Die Sicherung der Signatur mittels Hashfunktion umfasst beispielsweise eine Verwendung der Hashfunktion zur Erzeugung eines kryptographischen Schlüssels, welcher der zu sichernden Signatur zugeordnet ist. Beispielsweise handelt es sich bei der mittels Hashfunktion gesicherten digitalen Signatur um eine Einmalsignatur. Beispielsweise handelt es sich bei der entsprechenden Einmalsignatur um eine der folgenden Signaturen: Lamport-Einmalsignatur, Merkle-Einmalsignatur, Winternitz-Einmalsignatur, Bleichenbacher-Maurer-Einmalsignatur, BiBa-Einmalsignatur, HORS-Einmalsignatur. Beispielsweise wird die Einmalsignatur als Teil einer Merkle-Signatur verwendet, d.h. einer digitalen Signatur, welche unter Verwendung eines auf Merkle-Bäumen und Einmalsignaturen basierenden digitalen Signaturverfahren erzeugt wird.

In Block 208 wird ein zusätzlicher Block für die Blockchain erstellt, in welchen der empfangene Hashwert der zu sichernden Signatur eingetragen wird. Beispielsweise handelt es sich bei dem Hashwert der zu sichernden digitalen Signatur um einen Hashwert der eigentlichen Signatur s', d.h. dem Ergebnis der Anwendung des Signaturschlüssels $X_i$ auf das zu signierende Dokument d: H(s'). Im Falle einer Lamport-Signatur wäre dies beispielsweise

$$H(s^{'}) = H\left(s^{'}_1, ..., s^{'}_n\right) = H\left(x(d_1,1), ..., x(d_n,n)\right)$$ .

Beispielsweise umfasst Hashwert der zu sichernden digitalen Signatur neben der eigentlichen Signatur s', d.h. dem Ergebnis der Anwendung des Signaturschlüssels $X_i$ auf das zu signierende Dokument d, ein oder mehrere Parameter. Beispielsweise umfasst der Hashwert zusätzlich den öffentlichen kryptographischen Schlüssel $Y_i$ zur Verifikation der digitalen Signatur, z.B. H(s', $Y_i$). Beispielsweise umfasst der Hashwert zusätzlich zu dem öffentlichen kryptographischen Schlüssel $Y_i$ ein oder mehrere Knoten eines Merkle-Baums zur Verifikation der digitalen Signatur, z.B. H(s', $Y_i$, $auth_0$, $auth_1$, ..., $auth_{m-1}$). Beispielsweise umfasst der Hashwert zusätzlich den öffentlichen kryptographischen Schlüssel $Y_i$ zur Verifikation der digitalen Signatur, z.B. H(s', d). Ebenso sind Kombinationen der vorgenannten ein oder mehreren Parameter möglich.

In Block 210 wird der zusätzliche Block mit dem empfangenen Hashwert der zu sichernden Signatur zu der Blockchain hinzugefügt. Beispielsweise wird hierzu der zusätzliche Block der Blockchain mit dem bisher letzten Block der Blockchain verknüpft, etwa indem ein Hash des Inhalts des bisher letzten Blocks der Blockchain in dem zusätzlichen Block der Blockchain ergänzt wird. Ferner kann beispielsweise die Forderung bestehen, dass der zusätzliche Block der Blockchain ein oder mehrere Bedingungen erfüllt. Eine Bedingung kann beispielsweise darin bestehen, dass ein Hashwert des Inhalts des zusätzlichen Blocks der Blockchain ein vordefiniertes Kriterium erfüllt. Beispielsweise besteht ein solches vordefiniertes Kriterium darin, dass eine bestimmte Anzahl an ersten Ziffern des Hashwerts jeweils bestimmte Werte annehmen. Beispielsweise besteht das Kriterium darin, dass eine bestimmte Anzahl an ersten Ziffern des Hashwerts jeweils 0 sind.

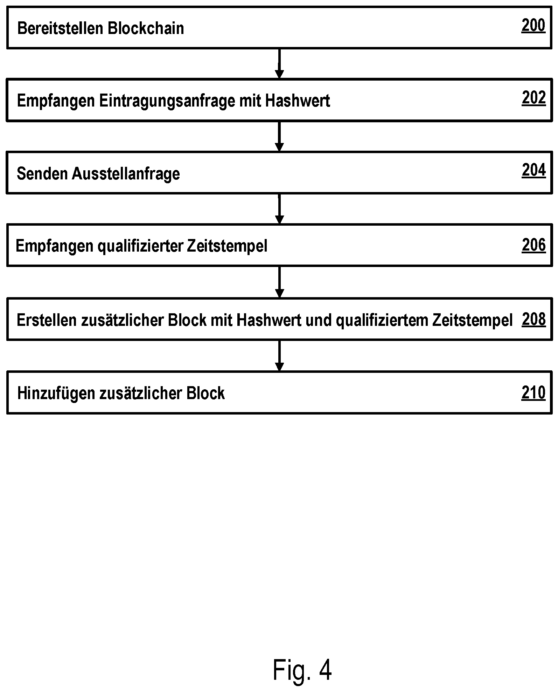

Figur 4 zeigt ein Verfahren zur blockchain-basierten Sicherung von digitalen Signaturen mit einem qualifizierten elektronischen Zeitstempel. Die Blöcke 200 und 202 der Figur 4 entsprechen den Blöcken 200 und 202 der Figur 3. In Block 204 wird eine Ausstellanfrage zum Ausstellen des qualifizierten elektronischen Zeitstempels an den Vertrauensdienstanbieter gesendet. Zum Ausstellen eines qualifizierten elektronischen Zeitstempels stellt der Vertrauensdienstanbieter beispielsweise einen Zeitstempelserver bereit. Dieser Zeitstempelserver ist dazu konfiguriert eine aktuelle Uhrzeit präzise festzustellen. Hierzu hat der Zeitstempelserver beispielsweise Zugriff auf eine präzise Zeitquelle. Beispielsweise verwendet der Zeitstempelserver eine Funkuhr und eine zusätzliche interne Zeitquelle. Der Zeitstempelserver empfängt eine Ausstellanfrage zum Ausstellen eines qualifizierten elektronischen Zeitstempels. Beispielsweise umfasst die Ausstellanfrage ein Element, welchem eine präzise Zeitangabe in kryptographisch gesicherter Form zugeordnet werden soll. Der Zeitstempelserver erstellt eine Zeitangabe der aktuellen Zeit und signiert diese Zeitangabe zusammen mit dem entsprechenden Element unter Verwendung eines privaten kryptographischen Schlüssels des Vertrauensdienstanbieters. Anschließend sendet der Zeitstempelserver den so erstellten qualifizierten elektronischen Zeitstempel in Antwort auf die Ausstellanfrage an ein anfragendes Computersystem, etwa einen Blockchainserver.

In Block 206 wird in Antwort auf das Senden der Ausstellanfrage der qualifizierte elektronische Zeitstempel zum Eintragen in der Blockchain von dem Vertrauensdienstanbieter empfangen. Beispielsweise kann der qualifizierte elektronische Zeitstempel zusammen mit Daten zum Verifizieren des entsprechenden qualifizierten elektronischen Zeitstempels empfangen werden. Die Daten zum Verifizieren des entsprechenden qualifizierten elektronischen Zeitstempels umfassen beispielsweise einen öffentlichen kryptographischen Schlüssel des Vertrauensdienstanbieters und/oder ein Zertifikat des Zeitstempelservers bzw. Vertrauensdienstanbieters. In Block 208 wird ein zusätzlicher Block für die Blockchain erstellt, in welchen der empfangene Hashwert der zu sichernden Signatur sowie der empfangene qualifizierte elektronische Zeitstempel eingetragen werden. In Block 210 wird der zusätzliche Block mit dem empfangenen Hashwert der zu sichernden Signatur zu der Blockchain hinzugefügt.

Alternativerweise kann der qualifizierte elektronische Zeitstempel in Block 202 mit der Eintragungsanfrage, d.h. zusammen mit dem Hashwert der zu sichernden Signatur, empfangen werden. In diesem Fall kann das Verfahren nach Schritt 202 mit den Schritten 208 und 210 gemäß Figur 3 vorgesetzt werden.

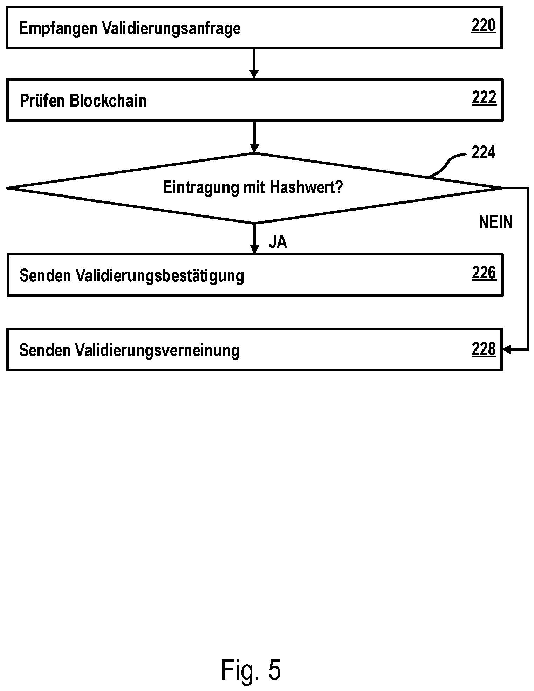

Figur 5 zeigt ein Verfahren zum Validieren einer Blockchain zur Sicherung digitaler Signaturen. In Block 220 wird eine Validierungsanfrage empfangen, ob der Hashwert der zu sichernden Signatur in der Blockchain eingetragen ist. In Block 222 wird auf den Empfang der Validierungsanfrage die Blockchain auf eine Eintragung des Hashwerts der zu sichernden Signatur geprüft. Ergibt die Prüfung in Block 224, dass die Blockchain einen Eintrag mit dem entsprechenden Hashwert der zu sichernden Signatur umfasst, wird das Verfahren mit Block 226 fortgesetzt. In Block 226 wird auf das positive Prüfungsergebnis hin eine Validierungsbestätigung in Antwort auf die Validierungsanfrage gesendet, welche bestätigt, dass der Hashwert der zu sichernden Signatur in der Blockchain eingetragen ist.

Ergibt die Prüfung in Block 224, dass die Blockchain keinen Eintrag mit dem entsprechenden Hashwert der zu sichernden Signatur umfasst, wird das Verfahren mit Block 228 fortgesetzt. In Block 226 wird auf das positive Prüfungsergebnis hin eine Validierungsverneinung bzw. Fehlermeldung in Antwort auf die Validierungsanfrage gesendet, welche anzeigt, dass die Blockchain keinen Eintrag mit dem Hashwert der zu sichernden Signatur umfasst.

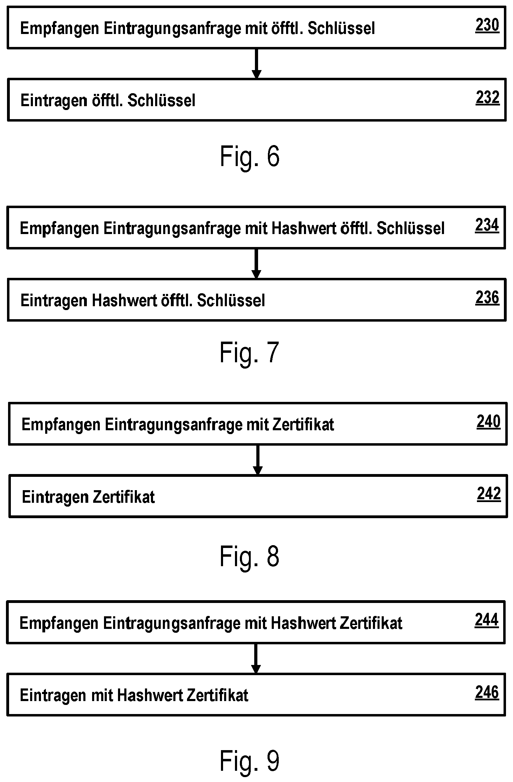

Figur 6 zeigt ein Verfahren zur blockchain-basierten Sicherung von öffentlichen kryptographischen Schlüsseln. In Block 230 wird eine Eintragungsanfrage zur Eintragung eines oder mehrerer öffentlicher kryptographischer Schlüssel empfangen. Diese ein oder mehreren öffentlichen kryptographischen Schlüssel lassen sich ein oder mehreren Signaturen zuordnen, deren Hashwerte in der Blockchain gesichert werden können. In Block 232 werden die empfangenen ein oder mehreren öffentlichen kryptographischen Schlüssel in die Blockchain eingetragen. Dadurch kann die Blockchain ein oder mehrere öffentliche kryptographische Schlüssel, welche der zu sichernden Signatur, deren Hashwert empfangen wird, zugeordnet sind, bereitstellen. Somit kann eine Verifikation einer entsprechenden Signatur erleichtert und/oder langfristig sichergestellt werden.

Figur 7 zeigt ein Verfahren zur blockchain-basierten Sicherung von öffentlichen kryptographischen Schlüsseln. In Block 234 wird eine Eintragungsanfrage zur Eintragung eines oder mehrerer Hashwerte von einem oder mehreren öffentlichen kryptographischen Schlüsseln empfangen. Diese ein oder mehreren öffentlichen kryptographischen Schlüssel lassen sich ein oder mehreren Signaturen zuordnen, deren Hashwerte in der Blockchain gesichert werden können. In Block 236 werden die empfangenen ein oder mehreren Hashwerte der ein oder mehreren öffentlichen kryptographischen Schlüssel in die Blockchain eingetragen. Somit können anhand der in der Blockchain hinterlegten ein oder mehreren Hashwerten die ein oder mehreren öffentlichen kryptographischen Schlüssel, welche der zu sichernden Signatur, deren Hashwert empfangen wird, zugeordnet sind, identifiziert werden.

Figur 8 zeigt ein Verfahren zur blockchain-basierten Sicherung eines Zertifikats. In Block 240 wird eine Eintragungsanfrage zur Eintragung eines Zertifikats empfangen. Dieses Zertifikat lässt sich ein oder mehreren Signaturen zuordnen, deren Hashwerte in der Blockchain gesichert werden können. In Block 242 wird das empfangene Zertifikat in die Blockchain eingetragen. Dadurch kann die Blockchain ein Zertifikat, welches der zu sichernden Signatur, deren Hashwert empfangen wird, zugeordnet ist, bereitstellen. Somit kann eine Verifikation einer entsprechenden Signatur erleichtert und/oder langfristig sichergestellt werden.

Figur 9 zeigt ein Verfahren zur blockchain-basierten Sicherung eines Zertifikats. In Block 244 wird eine Eintragungsanfrage zur Eintragung eines Hashwerts eines Zertifikats empfangen. Dieses Zertifikat lässt sich ein oder mehreren Signaturen zuordnen, deren Hashwerte in der Blockchain gesichert werden können. In Block 246 wird der empfangene Hashwert des Zertifikats in die Blockchain eingetragen. Anhand des in der Blockchain hinterlegten Hashwertes kann das Zertifikat, welches der zu sichernden Signatur, deren Hashwert empfangen wird, zugeordnet ist, identifiziert werden.

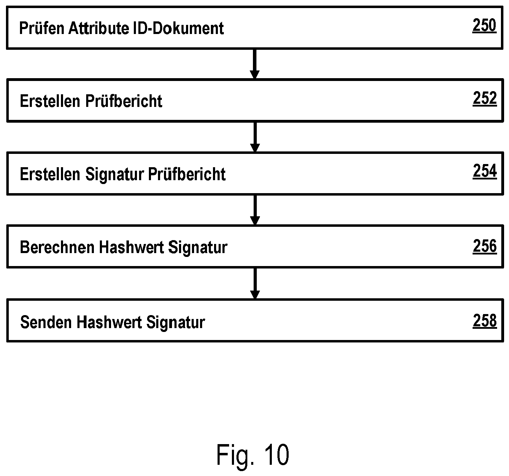

Figur 10 zeigt ein Verfahren zur blockchain-basierten Sicherung einer digitalen Signatur eines Prüfberichts eines ID-Dokuments. Bei der zu sichernden Signatur, welche mittels Eintragung des Hashwerts in der Blockchain gesichert wird, handelt es sich beispielsweise um eine Signatur eines zu sichernden Prüfberichts. Dieser Prüfbericht bestätigt beispielsweise eine erfolgreiche Prüfung von ein oder mehreren Attributen eines ID-Dokuments. In Block 250 werden unter Verwendung des ID-Dokuments Nutzerattribute eines Inhabers des entsprechenden ID-Dokuments geprüft. In Block 252 wird auf eine erfolgreiche Prüfung der Nutzerattribute unter Verwendung des ID-Dokuments ein Prüfbericht erstellt, welche die erfolgreiche Prüfung bestätigt. Die Prüfung kann beispielsweise vor Ort durch Vorlage des entsprechenden ID-Dokuments erfolgen, wie etwa im Zuge des Postident-Verfahrens oder vergleichbarer Verfahren. Hierbei werden die entsprechenden Nutzerattribute dem ID-Dokument entnommen, beispielsweise abgelesen, und dem Prüfbericht hinzugefügt. Beispielsweise umfasst der Prüfbericht zudem eine Bestätigung, dass der Inhaber des ID-Dokuments dieses persönlich vorgelegt hat. Beispielsweise umfasst der Prüfbericht zudem eine Angabe eines Verwendungszwecks bzw. eines Empfängers der Nutzerattribute. Beispielsweise kann eine Prüfung des ID-Dokuments auch über eine Videoverbindung, etwa in Zuge eines Videoident-Verfahrens, erfolgen. Beispielsweise handelt es sich bei dem ID-Dokument um ein ID-Token, aus welchem die Nutzerattribute elektronisch ausgelesen werden können. Beispielsweise erfolgt das Auslesen durch einen ID-Providerservice über ein Netzwerk. Der ID-Providerservice stellt in diesem Fall den entsprechenden Prüfbericht mit den ausgelesenen Nutzerattributen aus. Beispielsweise ist eine Voraussetzung für ein Auslesen der entsprechen Nutzerattribute eine erfolgreiche Authentifizierung des Inhabers des ID-Tokens.

In Block 254 wird eine Signatur des Prüfberichts erstellt. Bei dieser Signatur handelt es sich beispielsweise um eine nicht quantensichere Signatur, deren kryptographische Sicherung beispielsweise auf dem RSA-Schema oder auf ECC beruht. Beispielsweise handelt es sich bei dieser Signatur um eine Signatur, deren kryptographische Sicherung selbst quantensicher ist. In letzterem Fall handelt es sich bei dieser Signatur beispielsweise um eine mittels einer Hashfunktion gesicherte digitale Signatur. Die Sicherung einer solchen Signatur mittels Hashfunktion umfasst eine Verwendung der Hashfunktion zur Erzeugung eines kryptographischen Schlüssels, welcher der zu sichernden Signatur zugeordnet ist. Beispielsweise handelt es sich bei der entsprechenden Signatur um eine Einmalsignatur. Beispielsweise handelt es sich bei der entsprechenden Einmalsignatur um eine der folgenden Signaturen: Lamport-Einmalsignatur, Merkle-Einmalsignatur, Winternitz-Einmalsignatur, Bleichenbacher-Maurer-Einmalsignatur, BiBa-Einmalsignatur, HORS-Einmalsignatur. Beispielsweise wird die Einmalsignatur als Teil einer Merkle-Signatur verwendet, d.h. einer digitalen Signatur, welche unter Verwendung eines auf Merkle-Bäumen und Einmalsignaturen basierenden digitalen Signaturverfahren erzeugt wird.

In Block 256 wird ein Hashwert der Signatur berechnet und in Block 258 über ein Netzwerk an einen Server, z.B. einen Blockchain-Server, gesendet zur blockchain-basierten Sicherung der gehashten Signatur.

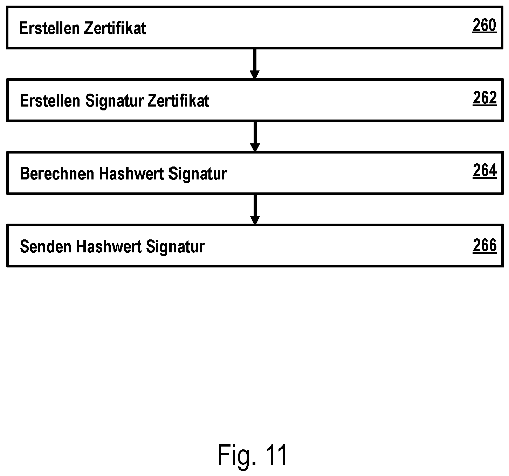

Figur 11 zeigt ein Verfahren zur blockchain-basierten Sicherung einer digitalen Signatur eines Zertifikats. Bei der zu sichernden Signatur, welche mittels Eintragung des Hashwerts in der Blockchain gesichert wird, handelt es sich beispielsweise um eine Signatur eines zu sichernden Zertifikats. In Block 260 wird ein digitales Zertifikat erstellt. In Block 262 wird eine Signatur des Zertifikats erstellt. Bei dieser Signatur handelt es sich beispielsweise um eine nicht quantensichere Signatur, deren kryptographische Sicherung beispielsweise auf dem RSA-Schema oder auf ECC beruht. Beispielsweise handelt es sich bei dieser Signatur um eine Signatur, deren kryptographische Sicherung selbst quantensicher ist. In letzterem Fall handelt es sich bei dieser Signatur beispielsweise um eine mittels einer Hashfunktion gesicherte digitale Signatur. Die Sicherung einer solchen Signatur mittels Hashfunktion umfasst eine Verwendung der Hashfunktion zur Erzeugung eines kryptographischen Schlüssels, welcher der zu sichernden Signatur zugeordnet ist. Beispielsweise handelt es sich bei der entsprechenden Signatur um eine Einmalsignatur. Beispielsweise handelt es sich bei der entsprechenden Einmalsignatur um eine der folgenden Signaturen: Lamport-Einmalsignatur, Merkle-Einmalsignatur, Winternitz-Einmalsignatur, Bleichenbacher-Maurer-Einmalsignatur, BiBa-Einmalsignatur, HORS-Einmalsignatur. Beispielsweise wird die Einmalsignatur als Teil einer Merkle-Signatur verwendet, d.h. einer digitalen Signatur, welche unter Verwendung eines auf Merkle-Bäumen und Einmalsignaturen basierenden digitalen Signaturverfahren erzeugt wird. In Block 264 wird ein Hashwert der Signatur berechnet und in Block 266 über ein Netzwerk an einen Server, z.B. einen Blockchain-Server, gesendet zur blockchain-basierten Sicherung der gehashten Signatur.

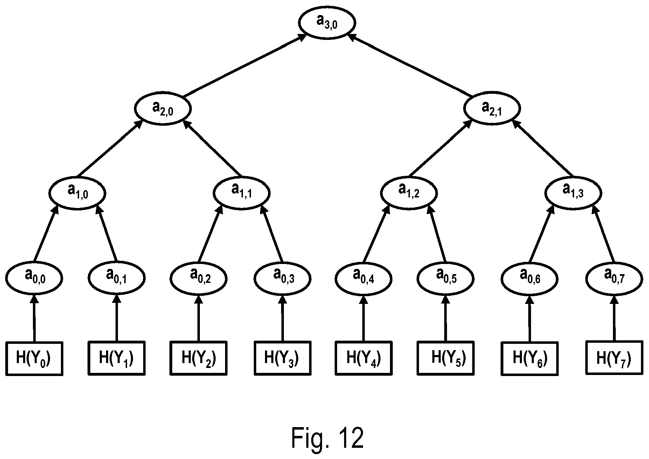

Figur 12 zeigt einen exemplarischen Merkle-Baum. Bei diesem exemplarischen Merkle-Baum handelt sich um einen Merkle-Baum mit acht Blättern für acht öffentliche kryptographische Schlüssel $Y_i$ mit i = 0, ..., 7. Im Zuge einer Schlüsselerzeugung werden $2^m$ private kryptographische Schlüssel $X_i$ und $2^m$ zugehörige öffentliche kryptographische Schlüssel $Y_i$ erzeugt, welche es ermöglichen $2^m$ Einmalsignaturen, beispielsweise $2^m$ Lamport-Einmalsignaturen, zu erstellen. Im vorliegenden Fall ist m = 3. Für jeden der öffentlichen kryptographischen Schlüssel $Y_i$ mit $0 \leq i \leq 2^m$-1 wird ein Hashwert $h_i = H(Y_i)$ unter Verwendung der kryptographischen Hashfunktion H berechnet. Im vorliegenden Fall sind es acht öffentliche kryptographische Schlüssel. Mit diesen Hashwerten $h_i$ wird ein Hashbaum, wie der in Figur 12 gezeigte Merkle-Baum, aufgebaut.

Ein Knoten des Baums wird beispielsweise mit $a_{j,i}$ identifiziert, wobei j die Ebene des Knotens bezeichnet. Die Ebene eines Knotens ist über seinen Abstand zu den Blättern des Hashbaums definiert. Somit hat ein Blatt des Hashbaums beispielsweise die Ebene j=0 und die Wurzel des Hashbaums die Ebene j=m. Die Knoten jeder Ebene sind beispielsweise ferner von links nach rechts durchnummeriert, was mit dem Index i indiziert wird.

In einem solchen Merkle-Baum in Form eines Binärbaums sind die Hashwerte $h_i$ die Blätter des entsprechenden Binärbaums, sodass $H(Y_i) = a_{0,i}$. Die inneren Knoten des Hashbaums sind jeweils die Hashwerte der Konkatenationen der beiden Kinder des jeweiligen Knotens. Beispielsweise sind im vorliegenden Fall $a_{1,0} = H(a_{0,0}\|a_{0,1})$, $a_{1,1} = H(a_{0,2}\|a_{0,3})$, $a_{1,2} = H(a_{0,4}\|a_{0,5})$, $a_{1,3} = H(a_{0,6}\|a_{0,7})$, $a_{2,0} = H(a_{1,0}\|a_{1,1})$, $a_{2,1} = H(a_{1,2}\|a_{1,4})$ und $a_{3,0} = H(a_{2,0}\|a_{2,1})$ = pub. Auf diese Weise wird ein Baum mit $2^m$ Blättern und $2^{m+1}$-1 Knoten aufgebaut, d.h. im vorliegenden Fall mit 8 Blättern und 15 Knoten. Das gesamte öffentliche Schlüsselmaterial, d.h. alle öffentlichen kryptographischen Schlüssel, von $2^m$ Einmalsignaturen werden somit in einem mehrstufigen Hashverfahren zu einem einzigen Hashwert pub zusammengefasst, mit $a_{m,0}$ = pub. Im vorliegenden Fall gilt $a_{3,0}$ = pub.

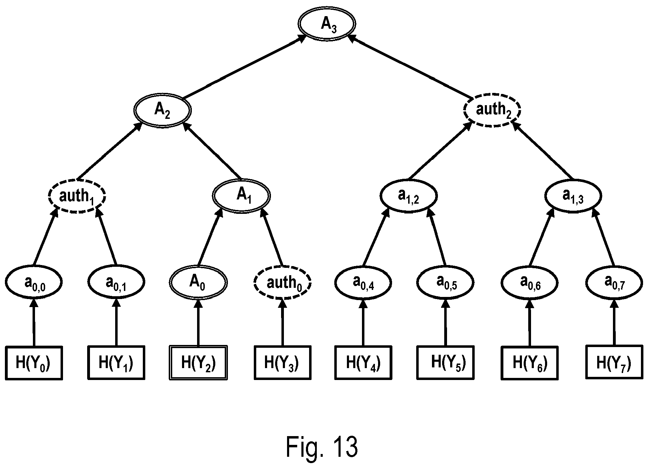

Figur 13 zeigt den exemplarischen Merkle-Baum aus Figur 12 mit einem gekennzeichneten Authentifizierungspfad. Um eine Nachricht oder ein Dokument d mit dem Merkle-Signaturverfahren zu signieren, wird das Dokument d zunächst mit einem Einmalsignaturverfahren, etwa dem Lamport-einmalsignaturverfahren, unter Verwendung eines privaten kryptographischen Schlüssel $X_i$ signiert, wodurch eine Signatur s' erzeugt wird.

Der private kryptographische Schlüssel $X_i$ gehört zu einem asymmetrischen kryptographischen Schlüsselpaar $(X_i, Y_i)$, welches neben dem privaten kryptographischen Schlüssel $X_i$ den öffentlichen kryptographischen Schlüssel $Y_i$ umfasst. Im vorliegenden Fall wird exemplarisch eine Signatur mit dem privaten kryptographischen Schlüssel $X_2$ betrachtet. Der zugehörige öffentlichen kryptographischen Einmalschlüssel ist $Y_2$. Das dem entsprechenden öffentlichen kryptographischen Einmalschlüssel $Y_2$ zugehörige Blatt des Hashbaums ist $a_{0,2} = H(Y_2)$. Der Pfad im Hashbaum von $a_{0,2}$ zur Wurzel $a_{3,0}$ des Hashbaums wird mit A bezeichnet. Der Pfad A besteht aus 3+1 = 4 Knoten $A_0$, $A_1$, $A_2$, $A_3$, wobei $A_0 = a_{0,2}$ das dem Hashwert des öffentlichen kryptographischen Schlüssels $Y_2$ entsprechende Blatt des Hashbaums ist und $A_3 = a_{3,0}$ = pub die Wurzel des Hashbaums ist. Um diesen Pfad A zu berechnen, wird jedes Kind der Knoten $A_1$, $A_2$, $A_3$ benötigt. $A_i$ ist ein Kind des Knotens $A_{i+1}$ des Pfades A. Um den Knoten $A_{i+1}$ des Pfades A zu berechnen, ist eine Kenntnis beider Kinder von $A_{i+1}$ notwendig. Daher wird der Bruder des Knoten $A_i$ benötigt, um den nächsten Knoten $A_{i+1}$ des Pfades A berechnen zu können. Dieser Bruderknoten wird beispielsweise mit $auth_i$ bezeichnet, sodass $A_{i+1} = H(A_i\|auth_i)$. Somit werden im vorliegenden Fall 3 Knoten $auth_0$, $auth_1$, $auth_2$, d.h. die Bruderknoten der 3 Knoten $A_0$, $A_1$, $A_2$ entlang des Pfades A unterhalb der Wurzel $A_3$, benötigt, um jeden Knoten des Pfades A zu berechnen. Diese benötigten Bruderknoten $auth_0$, $auth_1$, $auth_2$, werden beispielsweise berechnet und gespeichert. Sie bilden zusammen mit einer Einmalsignatur s' von d und dem für die Erstellung der Einmalsignatur s' verwendeten öffentlichen kryptographischen Schlüssel $Y_2$ die Signatur s = (s', $Y_2$, $auth_0$, $auth_1$, $auth_2$) des Merkle-Signaturverfahrens.

Voraussetzung für eine Verifizierung einer Signatur s eines Dokuments d ist, dass der Verifizierer neben der Signatur s = (s', $Y_2$, $auth_0$, $auth_1$, $auth_2$) das Dokument d sowie die veröffentlichte Wurzel pub des Hashbaums kennt. Hierzu verifiziert der Verifizierer zunächst die Einmalsignatur s' des Dokuments d unter Verwendung des öffentlichen kryptographischen Schlüssels $Y_2$. Falls s' eine gültige Signatur von Dokument d ist, berechnet der Verifizierer $A_0 = H(Y_2)$, indem er den Hashwert $H(Y_2)$ des öffentlichen kryptographischen Schlüssels $Y_2$ der Einmalsignatur berechnet. Die zu verwendende Hashfunktion H ist dem Verifizierer hierzu ebenfalls bekannt. Beispielsweise wird eine ID der zu verwendenden Hashfunktion zusammen mit der Wurzel pub des Hashbaums veröffentlicht. Für j = 1, 2, 3 werden die Knoten $A_j$ des Pfades A berechnet, mit $A_j = H(A_{j-1}\|auth_{j-1})$. Wenn $A_3$ der Wurzel des Hashbaums pub des Merkle-Signaturverfahrens entspricht, so ist die Signatur gültig.

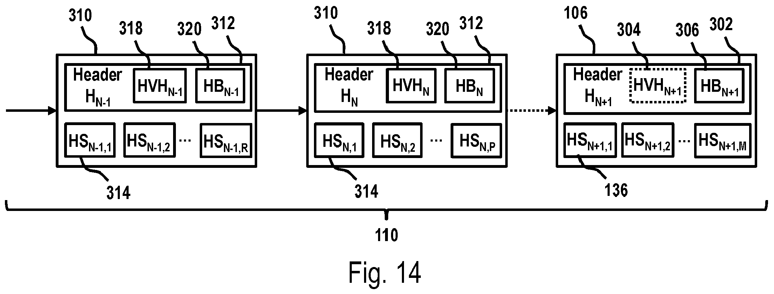

Figur 14 zeigt eine exemplarische Blockchain 110 zur blockchain-basierten Sicherung von digitalen Signaturen 136, 314. Beispielsweise wurde Blockchain110 durch eine der zuvor beschriebenen Ausführungsformen des Verfahrens zur blockchain-basierten Sicherung von digitalen Signaturen erzeugt. Die Blockchain 110 umfasst eine Mehrzahl von Blöcken 310. In den Blöcken 310 sind beispielsweise jeweils Hashwerte 314 von Signaturen. Beispielsweise umfasst die Blockchain 110 N E N Blöcke 310, etwa 3 oder mehr Blöcke 310. In einem letzten Block 310, beispielsweise einem N-ten Block der Blockchain 110, ist beispielsweise eine Mehrzahl von $P \in \mathbb{N}$ P Hashwerten 314, d.h. $HS_{N,1}$, $HS_{N,2}$, ..., $HS_{N,P}$, gespeichert. In einem dem letzten Block unmittelbar vorangehenden Block 310, beispielsweise einem (N-1)-ten Block der Blockchain 110, ist beispielsweise eine Mehrzahl von R E N Hashwerten 314, d.h. $HS_{N-1,1}$, $HS_{N-1,2}$, ..., $HS_{N-1,P}$, gespeichert.

Bei den Signaturen, deren Hashwerte 314 in der Blockchain 110 gespeichert sind handelt es sich beispielsweise um nicht quantensichere und/oder quantensichere Signaturen. Im Falle einer nicht quantensicheren Signatur beruht deren kryptographische Sicherung beispielsweise auf dem RSA-Schema oder auf ECC. Im Falle einer quantensicheren Signatur ist deren kryptographische Sicherung selbst quantensicher ist. Beispielsweise handelt es sich bei dieser quantensicheren Signatur um eine mittels einer Hashfunktion gesicherte digitale Signatur. Die Sicherung einer solchen Signatur mittels Hashfunktion umfasst eine Verwendung der Hashfunktion zur Erzeugung eines kryptographischen Schlüssels, welcher der zu sichernden Signatur zugeordnet ist. Beispielsweise handelt es sich bei der entsprechenden Signatur um eine Einmalsignatur. Beispielsweise handelt es sich bei der entsprechenden Einmalsignatur um eine der folgenden Signaturen: Lamport-Einmalsignatur, Merkle-Einmalsignatur, Winternitz-Einmalsignatur, Bleichenbacher-Maurer-Einmalsignatur, BiBa-Einmalsignatur, HORS-Einmalsignatur. Beispielsweise wird die Einmalsignatur als Teil einer Merkle-Signatur verwendet, d.h. einer digitalen Signatur, welche unter Verwendung eines auf Merkle-Bäumen und Einmalsignaturen basierenden digitalen Signaturverfahren erzeugt wird.

Die Blöcke 310 der Blockchain 110 sind kryptographisch miteinander verknüpft. Dabei umfasst, abgesehen von einem ersten Block, jeder Block 310 der Blockchain jeweils einen kryptographisch sicheren Hashwert 318 zumindest der Daten des jeweils unmittelbar vorhergehenden Blocks in der Blockchain 110. Soll ein Block 310 der Blockchain 110 geändert bzw. manipuliert werden, so müssten hierfür auch die in allen nachfolgenden Blöcken 310 jeweils gespeicherten Hashwerte 318, d.h. alle nachfolgenden Blöcke 310 manipuliert werden. Somit kann durch das kryptographische Verkettungsverfahren, welches die Verwendung der Hashfunktion umfasst, sichergestellt werden, dass die Blockchain 110 nicht nachträglich geändert werden kann. Die resultierende kryptographisch verknüpfte Kette der Blöcke 310 ist somit unveränderbar, fälschungs- und manipulationssicher.

Beispielsweise umfasst jeder der Blöcke 310 jeweils einen Header 312, welcher einen Hash-wert 320 der in dem entsprechenden Block 310 gespeicherten Hashwerte 314 von Signaturen sowie einen Hashwert 318 des Headers 312 des unmittelbar vorangehenden Blocks 310 der Blockchain 110 umfasst. Beispielsweise umfasst der N-te Block einen Header $H_N$ mit einem Hashwert $HB_N$ der in dem N-ten Block gespeicherten Hashwerte $HS_{N,1}$, $HS_{N,2}$, ..., $HS_{N,P}$ von Signaturen. Ferner umfasst der Header $H_N$ beispielsweise einen Hashwert $HVH_N$ des Headers $H_{N-1}$ des unmittelbar vorangehenden (N-1)-ten Blocks der Blockchain 110. Der unmittelbar vorangehenden (N-1)-te Block umfasst wiederum einen Header $H_{N-1}$ mit einem Hashwert $HB_{N-1}$ der in dem (N-1)-ten Block gespeicherten Hashwerte $HS_{N-1,1}$, $HS_{N-1,2}$, ..., $HS_{N-1,P}$ von Signaturen. Ferner umfasst der Header $H_{N-1}$ beispielsweise einen Hashwert $HVH_{N-1}$ des Headers $H_{N-2}$ des unmittelbar vorangehenden (N-2)-ten Blocks der Blockchain 110.

Sollen neue Signaturen mittels Eintragung des Hashwerts in der Blockchain 110 gesichert werden, werden Hashwerte $HS_{N+1,1}$, $HS_{N+1,2}$, ..., $HS_{N+1,M}$ dieser Signaturen erzeugt und in einen zusätzlichen Block 106 für die Blockchain 110 eingetragen. Bei diesen Signaturen handelt es sich beispielsweise um nicht quantensichere Signaturen, deren kryptographische Sicherung beispielsweise auf dem RSA-Schema oder auf ECC beruht. Beispielsweise handelt es sich bei diesen Signaturen um Signaturen, deren kryptographische Sicherung selbst quantensicher ist. In letzterem Fall handelt es sich bei diesen Signaturen beispielsweise um mittels Hashfunktionen gesicherte digitale Signaturen. Die Sicherung einer solchen Signatur mittels Hashfunktion umfasst eine Verwendung der Hashfunktion zur Erzeugung eines kryptographischen Schlüssels, welcher der zu sichernden Signatur zugeordnet ist. Beispielsweise handelt es sich bei der entsprechenden Signatur um eine Einmalsignatur. Beispielsweise handelt es sich bei der entsprechenden Einmalsignatur um eine der folgenden Signaturen: Lamport-Einmalsignatur, Merkle-Einmalsignatur, Winternitz-Einmalsignatur, Bleichenbacher-Maurer-Einmalsignatur, BiBa-Einmalsignatur, HORS-Einmalsignatur. Beispielsweise wird die Einmalsignatur als Teil einer Merkle-Signatur verwendet, d.h. einer digitalen Signatur, welche unter Verwendung eines auf Merkle-Bäumen und Einmalsignaturen basierenden digitalen Signaturverfahren erzeugt wird.

Der zusätzliche Block 106 umfasst zudem einen Header $H_{N+1}$ 302, welcher beispielsweise ein Hashwert $HB_{N+1}$ 306 der in den Block 106 eingetragenen Hashwerte $HS_{N+1,1}$, $HS_{N+1,2}$, ..., $HS_{N+1,M}$ umfasst. Dieser Hashwert $HB_{N+1}$ 306 wird beispielsweise im Zuge der Eintragung der Hashwerte $HS_{N+1,1}$, $HS_{N+1,2}$, ..., $HS_{N+1,M}$ in den zusätzlichen Block 106 berechnet. Zur kryptographischen Verknüpfung des zusätzlichen Blocks 106 mit der Blockchain 110 wird zudem der Hashwert HVH$_{N+1}$ 304 des Header H$_N$ des bisher letzten Blocks 310, d.h. des N-ten Blocks, der Blockchain 110 in den Header H$_{N+1}$ 302 eingetragen. Damit wird der zusätzliche Block 106 zum neuen letzten Block der Blockchain 110.

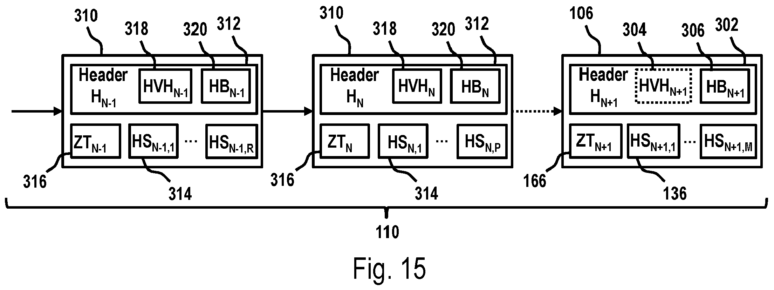

Figur 15 zeigt eine exemplarische Blockchain 110 zur blockchain-basierten Sicherung von digitalen Signaturen 136, 314. Beispielsweise wurde Blockchain110 durch eine der zuvor beschriebenen Ausführungsformen des Verfahrens zur blockchain-basierten Sicherung von digitalen Signaturen erzeugt. Die Blockchain 110 umfasst eine Mehrzahl von Blöcken 310. In den Blöcken 310 sind beispielsweise jeweils Hashwerte 314 von Signaturen. Beispielsweise umfasst die Blockchain 110 N E N Blöcke 310, etwa 3 oder mehr Blöcke 310. In einem letzten Block 310, beispielsweise einem N-ten Block der Blockchain 110, ist beispielsweise eine Mehrzahl von $P \in \mathbb{N}$ P Hashwerten 314, d.h. HS$_{N,1}$, ..., HS$_{N,P}$, gespeichert. In einem dem letzten Block unmittelbar vorangehenden Block 310, beispielsweise einem (N-1)-ten Block der Blockchain 110, ist beispielsweise eine Mehrzahl von R E N Hashwerten 314, d.h. HS$_{N-1,1}$, ..., HS$_{N-1,P}$, gespeichert.

Bei den Signaturen, deren Hashwerte 314 in der Blockchain 110 gespeichert sind handelt es sich beispielsweise um nicht quantensichere und/oder quantensichere Signaturen. Im Falle einer nicht quantensicheren Signatur beruht deren kryptographische Sicherung beispielsweise auf dem RSA-Schema oder auf ECC. Im Falle einer quantensicheren Signatur ist deren kryptographische Sicherung selbst quantensicher ist. Beispielsweise handelt es sich bei dieser quantensicheren Signatur um eine mittels einer Hashfunktion gesicherten digitalen Signatur. Die Sicherung einer solchen Signatur mittels Hashfunktion umfasst eine Verwendung der Hashfunktion zur Erzeugung eines kryptographischen Schlüssels, welcher der zu sichernden Signatur zugeordnet ist. Beispielsweise handelt es sich bei der entsprechenden Signatur um eine Einmalsignatur. Beispielsweise handelt es sich bei der entsprechenden Einmalsignatur um eine der folgenden Signaturen: Lamport-Einmalsignatur, Merkle-Einmalsignatur, Winternitz-Einmalsignatur, Bleichenbacher-Maurer-Einmalsignatur, BiBa-Einmalsignatur, HORS-Einmalsignatur. Beispielsweise wird die Einmalsignatur als Teil einer Merkle-Signatur verwendet, d.h. einer digitalen Signatur, welche unter Verwendung eines auf Merkle-Bäumen und Einmalsignaturen basierenden digitalen Signaturverfahren erzeugt wird.

Zusätzlich umfassen ein oder mehrere der Blöcke 310 jeweils eine Eintragung eines qualifizierten elektronischen Zeitstempels 316, welcher eine von einem Vertrauensdienstanbieter mit einem privaten kryptographischen Schlüssel des Vertrauensdienstanbieters signierte Zeitangabe umfasst. Der N-te Block umfasst beispielsweise den qualifizierten elektronischen Zeitstempel ZT$_N$. Der (N-1)-te Block umfasst beispielsweise den qualifizierten elektronischen Zeitstempel ZT$_{N-1}$. Durch Eintragung der qualifizierten elektronischen Zeitstempel 316 werden sichere und vertrauenswürdige Zeitangabe zusammen mit der Signatur 314 in der Blockchain 110 gesichert. Somit kann der Sicherung der Signaturen 314 in der Blockchain 110 eine Zeit zugeordnet werden. Diese qualifizierten elektronischen Zeitstempel 316 werden beispielsweise zusätzlich zu einfachen Zeitstempeln, wie sie etwa Header 312 der Blöcke 310 umfassen können und welche nicht von Vertrauensdienstanbietern stammen, in der Blockchain 110 gespeichert.

Die Blöcke 310 der Blockchain 110 sind kryptographisch miteinander verknüpft. Dabei umfasst, abgesehen von einem ersten Block, jeder Block 310 der Blockchain jeweils einen kryptographisch sicheren Hashwert 318 zumindest der Daten des jeweils unmittelbar vorhergehenden Blocks in der Blockchain 110. Soll ein Block 310 der Blockchain 110 geändert bzw. manipuliert werden, so müssten hierfür auch die in allen nachfolgenden Blöcken 310 jeweils gespeicherten Hashwerte 318, d.h. alle nachfolgenden Blöcke 310 manipuliert werden. Somit kann durch das kryptographische Verkettungsverfahren, welches die Verwendung der Hashfunktion umfasst, sichergestellt werden, dass die Blockchain 110 nicht nachträglich geändert werden kann. Die resultierende kryptographisch verknüpfte Kette der Blöcke 310 ist somit unveränderbar, fälschungs- und manipulationssicher.

Beispielsweise umfasst jeder der Blöcke 310 jeweils einen Header 312, welcher einen Hash-wert 320 der in dem entsprechenden Block 310 gespeicherten Hashwerte 314 von Signaturen sowie einen Hashwert 318 des Headers 312 des unmittelbar vorangehenden Blocks 310 der Blockchain 110 umfasst. Beispielsweise umfasst der N-te Block einen Header H$_N$ mit einem Hashwert HB$_N$ der in dem N-ten Block gespeicherten Hashwerte HS$_{N,1}$, ..., HS$_{N,P}$ von Signaturen und des qualifizierten elektronischen Zeitstempels ZT$_N$. Ferner umfasst der Header H$_N$ beispielsweise einen Hashwert HVH$_N$ des Headers H$_{N-1}$ des unmittelbar vorangehenden (N-1)-ten Blocks der Blockchain 110. Der unmittelbar vorangehenden (N-1)-te Block umfasst wiederum einen Header H$_{N-1}$ mit einem Hashwert HB$_{N-1}$ der in dem (N-1)-ten Block gespeicherten Hashwerte HS$_{N-1,1}$, ..., HS$_{N-1,P}$ von Signaturen und des qualifizierten elektronischen Zeitstempels ZT$_{N-1}$. Ferner umfasst der Header H$_{N-1}$ beispielsweise einen Hashwert HVH$_{N-1}$ des Headers H$_{N-2}$ des unmittelbar vorangehenden (N-2)-ten Blocks der Blockchain 110.

Sollen neue Signaturen mittels Eintragung des Hashwerts in der Blockchain 110 gesichert werden, werden Hashwerte HS$_{N+1,1}$, ..., HS$_{N+1,M}$ dieser Signaturen erzeugt und in einen zusätzlichen Block 106 für die Blockchain 110 eingetragen. Zusätzlich wird beispielsweise ein qualifizierter elektronischer Zeitstempel ZT$_{N+1}$ in den zusätzlichen Block 106 eingetragen. Bei den Signaturen handelt es sich beispielsweise um nicht quantensichere Signaturen, deren kryptographische Sicherung beispielsweise auf dem RSA-Schema oder auf ECC beruht. Beispielsweise handelt es sich bei diesen Signaturen um Signaturen, deren kryptographische Sicherung selbst quantensicher ist. In letzterem Fall handelt es sich bei diesen Signaturen beispielsweise um mittels Hashfunktionen gesicherte digitale Signaturen. Die Sicherung einer solchen Signatur mittels Hashfunktion umfasst eine Verwendung der Hashfunktion zur Erzeugung eines kryptographischen Schlüssels, welcher der zu sichernden Signatur zugeordnet ist. Beispielsweise handelt es sich bei der entsprechenden Signatur um eine Einmalsignatur. Beispielsweise handelt es sich bei der entsprechenden Einmalsignatur um eine der folgenden Signaturen: Lamport-Einmalsignatur, Merkle-Einmalsignatur, Winternitz-Einmalsignatur, Bleichenbacher-Maurer-Einmalsignatur, BiBa-Einmalsignatur, HORS-Einmalsignatur. Beispielsweise wird die Einmalsignatur als Teil einer Merkle-Signatur verwendet, d.h. einer digitalen Signatur, welche unter Verwendung eines auf Merkle-Bäumen und Einmalsignaturen basierenden digitalen Signaturverfahren erzeugt wird.

Der zusätzliche Block 106 umfasst zudem einen Header $H_{N+1}$ 302, welcher beispielsweise ein Hashwert $HB_{N+1}$ 306 der in den Block 106 eingetragenen Hashwerte $HS_{N+1,1}$, ..., $HS_{N+1,M}$ und des qualifizierten elektronischen Zeitstempels $ZT_{N+1}$ umfasst. Dieser Hashwert $HB_{N+1}$ 306 wird beispielsweise im Zuge der Eintragung der Hashwerte $HS_{N+1,1}$, ..., $HS_{N+1,M}$ in den zusätzlichen Block 106 berechnet. Zur kryptographischen Verknüpfung des zusätzlichen Blocks 106 mit der Blockchain 110 wird zudem der Hashwert $HVH_{N+1}$ 304 des Header $H_N$ des bisher letzten Blocks 310, d.h. des N-ten Blocks, der Blockchain 110 in den Header $H_{N+1}$ 302 eingetragen. Damit wird der zusätzliche Block 106 zum neuen letzten Block der Blockchain 110.

Beispiele können ferner folgende Merkmalskombinationen umfassen:

1. Verfahren zur blockchain-basierten Sicherung von digitalen Signaturen, wobei das Verfahren umfasst:

- Bereitstellen einer Blockchain,
- Empfangen einer Eintragungsanfrage zur Eintragung eines Hashwerts einer mittels der Blockchain zu sichernden digitalen Signatur,
- Erstellen eines zusätzlichen Blocks für die Blockchain, in welchen der empfangene Hashwert der zu sichernden Signatur eingetragen wird,
- Hinzufügen des zusätzlichen Blocks mit dem empfangenen Hashwert der zu sichernden Signatur zu der Blockchain.

2. Verfahren nach Merkmalskombination 1, wobei die zu sichernde digitale Signatur zusätzlich mittels einer Hashfunktion gesichert ist, wobei die Sicherung der Signatur mittels Hashfunktion eine Verwendung der Hashfunktion zur Erzeugung eines kryptographischen Schlüssels umfasst, welcher der zu sichernden Signatur zugeordnet ist.

3. Verfahren nach Merkmalskombination 2, wobei der kryptographischen Schlüssel, welcher unter Verwendung der Hashfunktion erzeugt wird, ein öffentlicher kryptographischer Schlüssel ist, welcher aus einem privaten kryptographischen Schlüssel unter Verwendung der Hashfunktion erzeugt wird, und der private kryptographische Schlüssel zur Erzeugung der Signatur verwendet wird.

4. Verfahren nach einer der Merkmalskombinationen 2 bis 3, wobei es sich bei der mittels Hashfunktion gesicherten digitalen Signatur um eine Merkle-Signatur handelt.

5. Verfahren nach einer der vorangehenden Merkmalskombinationen, wobei zusätzlich zu dem empfangenen Hashwert der zu sichernden Signatur ein qualifizierter elektronischer Zeitstempel eingetragen wird, welcher eine von einem Vertrauensdienstanbieter mit einem privaten kryptographischen Schlüssel des Vertrauensdienstanbieters signierte Zeitangabe umfasst.

6. Verfahren nach Merkmalskombination 5, wobei das Verfahren zum Eintragen des qualifizierten elektronischen Zeitstempels ferner umfasst:

- Senden einer Ausstellanfrage zum Ausstellen des qualifizierten elektronischen Zeitstempels an den Vertrauensdienstanbieter,
- in Antwort auf das Senden der Ausstellanfrage, Empfangen des qualifizierten elektronischen Zeitstempels zum Eintragen in der Blockchain von dem Vertrauensdienstanbieter.

7. Verfahren nach einer der Merkmalskombinationen 5 bis 6, wobei der qualifizierte elektronische Zeitstempel zusätzlich zu der Zeitangabe ein ausgewähltes Element des zusätzlichen Blocks der Blockchain umfasst, welches mit der Ausstellanfrage an den Vertrauensdienstanbieter gesendet wird.

8. Verfahren nach Merkmalskombination 7, wobei das ausgewählte Element den empfangenen Hashwert der zu sichernden Signatur umfasst.

9. Verfahren nach einer der Merkmalskombinationen 5 bis 7, wobei der qualifizierte elektronische Zeitstempel zusätzlich zu der Zeitangabe ein unter Verwendung des Inhalts eines dem zusätzlichen Block in der Blockchain unmittelbar vorangehenden Blocks bereitgestelltes Element umfasst, welches mit der Ausstellanfrage an den Vertrauensdienstanbieter gesendet wird.

10. Verfahren nach Merkmalskombination 9, wobei es sich bei dem bereitgestellten Element um einen Hashwert des Inhalts des dem zusätzlichen Block in der Blockchain unmittelbar vorangehenden Blocks handelt, wobei der Hashwert des Inhalts des dem zusätzlichen Block in der Blockchain unmittelbar vorangehenden Blocks in den zusätzlichen Block der Blockchain eingetragen wird.

11. Verfahren nach einer der Merkmalskombination 5, wobei der qualifizierte elektronische Zeitstempel mit der Eintragungsanfrage empfangen wird und zusätzlich zu der Zeitangabe den empfangenen Hashwert der zu sichernden Signatur umfasst.

12. Verfahren nach Merkmalskombination 11, wobei der empfangene Hashwert der zu sichernden Signatur in Form des qualifizierten elektronischen Zeitstempels empfangen wird.

13. Verfahren nach einer der Merkmalskombinationen 5 bis 12, wobei es sich bei der Signatur des qualifizierten elektronischen Zeitstempels um eine mittels einer weiteren Hashfunktion gesicherten digitalen Signatur handelt, beispielsweise um eine weitere Merkle-Signatur.

14. Verfahren nach einer der Merkmalskombinationen 5 bis 13, wobei jeder Block der Blockchain zumindest einen qualifizierten elektronischen Zeitstempel umfasst.

15. Verfahren nach einer der Merkmalskombinationen 5 bis 13, wobei jeder N-te Block der Blockchain jeweils einen qualifizierten elektronischen Zeitstempel umfasst, wobei N eine natürliche Zahl größer 1 ist, wobei es sich bei dem zusätzlichen Block um einen N-ten Block der Blockchain handelt.

16. Verfahren nach einer der vorangehenden Merkmalskombinationen, wobei von der zu sichernden Signatur ausschließlich der Hashwert empfangen und in die Blockchain eingetragen wird.

17. Verfahren nach einer der Merkmalskombinationen 1 bis 15, wobei zusätzlich zu dem empfangenen Hashwert der zu sichernden Signatur die entsprechende zu sichernde Signatur empfangen und in die Blockchain eingetragen wird.

18. Verfahren nach einer der vorangehenden Merkmalskombinationen, wobei dem empfangenen Hashwert der zu sichernden Signatur eine Signatur-ID zugeordnet und in die Blockchain eingetragen wird, wobei auf das Hinzufügen des zusätzlichen Blocks zu der Blockchain eine die Signatur-ID umfassende Eintragungsbestätigung gesendet wird.

19. Verfahren nach einer der vorangehenden Merkmalskombinationen, wobei das Verfahren ferner umfasst:

- Empfangen einer Validierungsanfrage, ob der Hashwert der zu sichernden Signatur in der Blockchain eingetragen ist,
- auf den Empfang der Validierungsanfrage, Prüfen der Blockchain auf eine Eintragung des Hashwerts der zu sichernden Signatur,
- auf ein positives Prüfungsergebnis, Senden einer Validierungsbestätigung in Antwort auf die Validierungsanfrage, welche bestätigt, dass der Hashwert der zu sichernden Signatur in der Blockchain eingetragen ist.

20. Verfahren nach einer der vorangehenden Merkmalskombinationen, wobei das Verfahren ferner umfasst:

- Empfangen einer Eintragungsanfrage zur Eintragung eines oder mehrerer öffentlicher kryptographischer Schlüssel, welche der zu sichernden Signatur, deren Hashwert empfangen wird, zugeordnet sind,
- Eintragen der empfangenen ein oder mehreren öffentlichen kryptographischen Schlüssel in die Blockchain.

21. Verfahren nach einer der vorangehenden Merkmalskombinationen, wobei das Verfahren ferner umfasst:

- Empfangen einer Eintragungsanfrage zur Eintragung eines oder mehrerer Hashwerte der ein oder mehreren öffentlichen kryptographischen Schlüssel, welche der zu sichernden Signatur, deren Hashwert empfangen wird, zugeordnet sind,

- Eintragen der empfangenen ein oder mehreren Hashwerte der ein oder mehreren öffentlichen kryptographischen Schlüssel in die Blockchain.

22. Verfahren nach einer der vorangehenden Merkmalskombinationen, wobei das Verfahren ferner umfasst:

- Empfangen einer Eintragungsanfrage zur Eintragung eines Zertifikats, welches der zu sichernden Signatur, deren Hashwert empfangen wird, zugeordnet ist,
- Eintragen des empfangenen Zertifikats in die Blockchain.

23. Verfahren nach einer der vorangehenden Merkmalskombinationen, wobei das Verfahren ferner umfasst:

- Empfangen einer Eintragungsanfrage zur Eintragung eines Hashwertes des Zertifikats, welches der zu sichernden Signatur, deren Hashwert empfangen wird, zugeordnet ist,
- Eintragen des empfangenen Hashwerts des Zertifikats in die Blockchain.

24. Verfahren nach einer der vorangehenden Merkmalskombinationen, wobei es sich bei der zu sichernden Signatur, deren Hashwert empfangen wird, um eine Signatur eines zu sichernden Prüfberichts handelt, welcher eine erfolgreiche Prüfung von ein oder mehreren Nutzerattributen unter Verwendung eines ID-Dokuments bestätigt.

25. Verfahren nach einer der Merkmalskombinationen 1 bis 23, wobei es sich bei der zu sichernden Signatur, deren Hashwert empfangen wird, um eine Signatur eines zu sichernden Zertifikats handelt.

26. Server zur blockchain-basierten Sicherung von digitalen Signaturen mit einem Prozessor und einem Speicher, wobei in dem Speicher Programminstruktionen gespeichert sind, wobei der Server ferner eine Kommunikationsschnittstelle zur Kommunikation über ein Netzwerk umfasst, wobei ein Ausführen der Programminstruktionen durch den Prozessor den Prozessor dazu veranlasst den Server so zu steuern, dass der Server ein Verfahren zur blockchain-basierten Sicherung von digitalen Signaturen ausführt, wobei das Verfahren umfasst:

- Bereitstellen einer Blockchain,
- Empfangen einer Eintragungsanfrage zur Eintragung eines Hashwerts einer mittels der Blockchain zu sichernden digitalen Signatur über das Netzwerk,
- Erstellen eines zusätzlichen Blocks für die Blockchain, in welchen der empfangene Hashwert der Signatur eingetragen wird,
- Hinzufügen des zusätzlichen Blocks mit dem empfangenen Hashwert der Signatur zu der Blockchain.

27. Server nach Merkmalskombination 26, wobei die zu sichernde digitale Signatur zusätzlich mittels einer Hashfunktion gesichert ist, wobei die Sicherung der Signatur mittels Hashfunktion eine Verwendung der Hashfunktion zur Erzeugung eines kryptographischen Schlüssels umfasst, welcher der zu sichernden Signatur zugeordnet ist, wobei es sich bei der mittels Hashfunktion gesicherten digitalen Signatur um eine Merkle-Signatur handelt.

28. Blockchain zur blockchain-basierten Sicherung von digitalen Signaturen, wobei die Blockchain durch ein Verfahren zur blockchain-basierten Sicherung von digitalen Signaturen erzeugbar ist, wobei das Verfahren umfasst:

- Empfangen einer Eintragungsanfrage zur Eintragung eines Hashwerts einer mittels der Blockchain zu sichernden digitalen Signatur,
- Erstellen eines zusätzlichen Blocks für die Blockchain, in welchen der empfangene Hashwert der zu sichernden Signatur eingetragen wird,
- Hinzufügen des zusätzlichen Blocks mit dem empfangenen Hashwert der zu sichernden Signatur zu der Blockchain.

29. Blockchain nach Merkmalskombination 28, wobei die zu sichernde digitale Signatur zusätzlich mittels einer Hashfunktion gesichert ist, wobei die Sicherung der Signatur mittels Hashfunktion eine Verwendung der Hashfunktion zur Erzeugung eines kryptographischen Schlüssels umfasst, welcher der zu sichernden Signatur zugeordnet ist, wobei es sich bei der zusätzlich mittels Hashfunktion gesicherten digitalen Signatur um eine Merkle-Signatur handelt.

30. Blockchain zur blockchain-basierten Sicherung von digitalen Signaturen, wobei die Blockchain eine Mehrzahl von Blöcken umfasst, wobei jeder nachfolgende Block der Blockchain jeweils einen Hashwert des Inhalts eines unmittelbar vorangehenden Blocks der Blockchain umfasst, wobei in den Blöcken der Blockchain eine Mehrzahl von Hashwerten der mittels der Blockchain zu sichernden digitalen Signaturen eingetragen ist.

31. Blockchain nach Merkmalskombination 30, wobei die zu sichernden digitalen Signaturen jeweils zusätzlich mittels einer Hashfunktion gesichert sind, wobei die Sicherung der Signaturen mittels Hashfunktion eine Verwendung der Hashfunktion zur Erzeugung kryptographischer Schlüssel umfasst, welche den zu sichernden Signaturen zugeordnet sind, wobei es sich bei den mittels Hashfunktion gesicherten digitalen Signaturen beispielsweise um Merkle-Signaturen handelt.

**Bezugszeichenliste**

| | |
|---|---|
| 100 | Server |
| 102 | Prozessor |
| 104 | Programminstruktionen |
| 106 | zusätzlicher Block |
| 108 | Speicher |
| 110 | Blockchain |
| 112 | Kommunikationsschnittstelle |
| 115 | System |
| 117 | Netzwerk |
| 120 | Computersystem |
| 122 | Speicher |
| 124 | öffentliche kryptographische Schlüssel |
| 125 | Dokument |
| 126 | geschützter Speicherbereich |
| 128 | private kryptographische Schlüssel |
| 130 | Prozessor |
| 132 | Programminstruktionen |
| 134 | Signatur |
| 136 | Hashwert der Signatur |
| 137 | Prüfbericht |
| 138 | Nutzerschnittstelle |
| 140 | Kommunikationsschnittstelle |
| 142 | Lesezertifikat |
| 144 | Kommunikationsschnittstelle |
| 150 | Zeitstempelserver |
| 152 | Speicher |
| 154 | öffentliche kryptographische Schlüssel |
| 156 | geschützter Speicherbereich |
| 158 | private kryptographische Schlüssel |
| 160 | Prozessor |
| 162 | Programminstruktionen |
| 164 | Zeitangabe |
| 166 | qualifizierter Zeitstempel |
| 168 | Uhr |
| 170 | Kommunikationsschnittstelle |
| 180 | ID-Dokument |
| 182 | Speicher |
| 184 | geschützter Speicherbereich |
| 186 | Nutzerattribute |
| 188 | Prozessor |
| 190 | Programminstruktionen |
| 192 | Kommunikationsschnittstelle |
| 302 | Header |
| 304 | Hashwert |
| 306 | Hashwert |

310 Block
312 Header
314 Signatur
316 qualifizierter Zeitstempel
318 Hashwert
320 Hashwert

**Patentansprüche**

1. Verfahren zur blockchain-basierten Sicherung von digitalen Signaturen, wobei das Verfahren umfasst:

   • Bereitstellen einer Blockchain (110),
   • Empfangen einer Eintragungsanfrage zur Eintragung eines Hashwerts (136) einer mittels der Blockchain (110) zu sichernden digitalen Signatur (134),
   • Erstellen eines zusätzlichen Blocks (106) für die Blockchain (110), in welchen der empfangene Hashwert (136) der zu sichernden Signatur (134) eingetragen wird,
   • Hinzufügen des zusätzlichen Blocks (106) mit dem empfangenen Hashwert (136) der zu sichernden Signatur (134) zu der Blockchain (110).

2. Verfahren nach Anspruch 1, wobei die zu sichernde digitale Signatur (134) zusätzlich mittels einer Hashfunktion gesichert ist, wobei die Sicherung der Signatur (134) mittels Hashfunktion eine Verwendung der Hashfunktion zur Erzeugung eines kryptographischen Schlüssels (124) umfasst, welcher der zu sichernden Signatur (134) zugeordnet ist.

3. Verfahren nach Anspruch 2, wobei der kryptographischen Schlüssel (124), welcher unter Verwendung der Hashfunktion erzeugt wird, ein öffentlicher kryptographischer Schlüssel (124) ist, welcher aus einem privaten kryptographischen Schlüssel (128) unter Verwendung der Hashfunktion erzeugt wird, und der private kryptographische Schlüssel (128) zur Erzeugung der Signatur (134) verwendet wird, und/oder wobei es sich bei der mittels Hashfunktion gesicherten digitalen Signatur (134) um eine Merkle-Signatur handelt.

4. Verfahren nach einem der vorangehenden Ansprüche, wobei zusätzlich zu dem empfangenen Hashwert (136) der zu sichernden Signatur (134) ein qualifizierter elektronischer Zeitstempel (150) eingetragen wird, welcher eine von einem Vertrauensdienstanbieter (150) mit einem privaten kryptographischen Schlüssel (154) des Vertrauensdienstanbieters (150) signierte Zeitangabe (164) umfasst.

5. Verfahren nach Anspruch 4, wobei das Verfahren zum Eintragen des qualifizierten elektronischen Zeitstempels (166) ferner umfasst:

   • Senden einer Ausstellanfrage zum Ausstellen des qualifizierten elektronischen Zeitstempels (166) an den Vertrauensdienstanbieter (150),
   • in Antwort auf das Senden der Ausstellanfrage, Empfangen des qualifizierten elektronischen Zeitstempels (166) zum Eintragen in der Blockchain (110) von dem Vertrauensdienstanbieter (150), und/oder

   wobei der qualifizierte elektronische Zeitstempel (166) zusätzlich zu der Zeitangabe (164) ein ausgewähltes Element des zusätzlichen Blocks (106) der Blockchain (110) umfasst, welches mit der Ausstellanfrage an den Vertrauensdienstanbieter (150) gesendet wird, und/oder wobei der qualifizierte elektronische Zeitstempel (166) zusätzlich zu der Zeitangabe (164) ein unter Verwendung des Inhalts eines dem zusätzlichen Block (106) in der Blockchain (110) unmittelbar vorangehenden Blocks bereitgestelltes Element umfasst, welches mit der Ausstellanfrage an den Vertrauensdienstanbieter (150) gesendet wird.

6. Verfahren nach einem der Anspruch 4, wobei der qualifizierte elektronische Zeitstempel (166) mit der Eintragungsanfrage empfangen wird und zusätzlich zu der Zeitangabe (164) den empfangenen Hashwert (136) der zu sichernden Signatur (134) umfasst, wobei der empfangene Hashwert (136) der zu sichernden Signatur (134) beispielsweise in Form des qualifizierten elektronischen Zeitstempels (166) empfangen wird.

7. Verfahren nach einem der Ansprüche 4 bis 6, wobei es sich bei der Signatur des qualifizierten elektronischen

30

Zeitstempels (166) um eine mittels einer weiteren Hashfunktion gesicherten digitalen Signatur handelt, beispielsweise um eine weitere Merkle-Signatur, und/oder

wobei jeder Block der Blockchain (110) zumindest einen qualifizierten elektronischen Zeitstempel (166) umfasst, und/oder

wobei jeder N-te Block der Blockchain (110) jeweils einen qualifizierten elektronischen Zeitstempel (166) umfasst, wobei N eine natürliche Zahl größer 1 ist, wobei es sich bei dem zusätzlichen Block (106) um einen N-ten Block der Blockchain (110) handelt.

8. Verfahren nach einem der vorangehenden Ansprüche, wobei von der zu sichernden Signatur (134) ausschließlich der Hashwert (136) empfangen und in die Blockchain (110) eingetragen wird, oder wobei zusätzlich zu dem empfangenen Hashwert (136) der zu sichernden Signatur (134) die entsprechende zu sichernde Signatur (134) empfangen und in die Blockchain (110) eingetragen wird.

9. Verfahren nach einem der vorangehenden Ansprüche, wobei dem empfangenen Hashwert (136) der zu sichernden Signatur (134) eine Signatur-ID zugeordnet und in die Blockchain (110) eingetragen wird, wobei auf das Hinzufügen des zusätzlichen Blocks (106) zu der Blockchain (110) eine die Signatur-ID umfassende Eintragungsbestätigung gesendet wird, und/oder

wobei das Verfahren ferner umfasst:

• Empfangen einer Validierungsanfrage, ob der Hashwert (136) der zu sichernden Signatur (134) in der Blockchain (110) eingetragen ist,
• auf den Empfang der Validierungsanfrage, Prüfen der Blockchain (110) auf eine Eintragung des Hashwerts (136) der zu sichernden Signatur (134),
• auf ein positives Prüfungsergebnis, Senden einer Validierungsbestätigung in Antwort auf die Validierungsanfrage, welche bestätigt, dass der Hashwert (136) der zu sichernden Signatur (134) in der Blockchain (110) eingetragen ist, und/oder

wobei das Verfahren ferner umfasst:

• Empfangen einer Eintragungsanfrage zur Eintragung eines oder mehrerer öffentlicher kryptographischer Schlüssel (124), welche der zu sichernden Signatur (134), deren Hashwert (136) empfangen wird, zugeordnet sind,
• Eintragen der empfangenen ein oder mehreren öffentlichen kryptographischen Schlüssel (124) in die Blockchain (110), und/oder

wobei das Verfahren ferner umfasst:

• Empfangen einer Eintragungsanfrage zur Eintragung eines oder mehrerer Hashwerte der ein oder mehreren öffentlichen kryptographischen Schlüssel (124), welche der zu sichernden Signatur (134), deren Hashwert (136) empfangen wird, zugeordnet sind,
• Eintragen der empfangenen ein oder mehreren Hashwerte der ein oder mehreren öffentlichen kryptographischen Schlüssel (124) in die Blockchain (110), und/oder

wobei das Verfahren ferner umfasst:

• Empfangen einer Eintragungsanfrage zur Eintragung eines Zertifikats, welches der zu sichernden Signatur (134), deren Hashwert (136) empfangen wird, zugeordnet ist,
• Eintragen des empfangenen Zertifikats in die Blockchain (110), und/oder

wobei das Verfahren ferner umfasst:

• Empfangen einer Eintragungsanfrage zur Eintragung eines Hashwertes des Zertifikats, welches der zu sichernden Signatur (134), deren Hashwert (136) empfangen wird, zugeordnet ist,
• Eintragen des empfangenen Hashwerts des Zertifikats in die Blockchain (110).

10. Verfahren nach einem der vorangehenden Ansprüche, wobei es sich bei der zu sichernden Signatur (134), deren Hashwert (136) empfangen wird, um eine Signatur eines zu sichernden Prüfberichts (137) handelt, welcher eine erfolgreiche Prüfung von ein oder mehreren Nutzerattributen (186) unter Verwendung eines ID-Dokuments (180) bestätigt, oder

wobei es sich bei der zu sichernden Signatur (134), deren Hashwert (136) empfangen wird, um eine Signatur eines zu sichernden Zertifikats handelt.

11. Server (100) zur blockchain-basierten Sicherung von digitalen Signaturen mit einem Prozessor (102) und einem Speicher (108), wobei in dem Speicher (108) Programminstruktionen (104) gespeichert sind, wobei der Server (100) ferner eine Kommunikationsschnittstelle (112) zur Kommunikation über ein Netzwerk (117) umfasst, wobei ein Ausführen der Programminstruktionen (104) durch den Prozessor (102) den Prozessor (102) dazu veranlasst den Server (100) so zu steuern, dass der Server (100) ein Verfahren zur blockchain-basierten Sicherung von digitalen Signaturen ausführt, wobei das Verfahren umfasst:

- Bereitstellen einer Blockchain (110),
- Empfangen einer Eintragungsanfrage zur Eintragung eines Hashwerts (136) einer mittels der Blockchain (110) zu sichernden digitalen Signatur (134) über das Netzwerk (117),
- Erstellen eines zusätzlichen Blocks (106) für die Blockchain (110), in welchen der empfangene Hashwert (136) der Signatur (134) eingetragen wird,
- Hinzufügen des zusätzlichen Blocks (106) mit dem empfangenen Hashwert (136) der Signatur (134) zu der Blockchain (110).

12. Server nach Anspruch 11, wobei die zu sichernde digitale Signatur (134) zusätzlich mittels einer Hashfunktion gesichert ist, wobei die Sicherung der Signatur (134) mittels Hashfunktion eine Verwendung der Hashfunktion zur Erzeugung eines kryptographischen Schlüssels (124) umfasst, welcher der zu sichernden Signatur (134) zugeordnet ist, wobei es sich bei der mittels Hashfunktion gesicherten digitalen Signatur (134) um eine Merkle-Signatur handelt.

13. Blockchain (110) zur blockchain-basierten Sicherung von digitalen Signaturen, wobei die Blockchain durch ein Verfahren zur blockchain-basierten Sicherung von digitalen Signaturen erzeugbar ist, wobei das Verfahren umfasst:

- Empfangen einer Eintragungsanfrage zur Eintragung eines Hashwerts (136) einer mittels der Blockchain (110) zu sichernden digitalen Signatur (134),
- Erstellen eines zusätzlichen Blocks (106) für die Blockchain (110), in welchen der empfangene Hashwert (136) der zu sichernden Signatur (134) eingetragen wird,
- Hinzufügen des zusätzlichen Blocks (106) mit dem empfangenen Hashwert (136) der zu sichernden Signatur (134) zu der Blockchain (110).

14. Blockchain nach Anspruch 13, wobei die zu sichernde digitale Signatur (134) zusätzlich mittels einer Hashfunktion gesichert ist, wobei die Sicherung der Signatur (134) mittels Hashfunktion eine Verwendung der Hashfunktion zur Erzeugung eines kryptographischen Schlüssels (124) umfasst, welcher der zu sichernden Signatur (134) zugeordnet ist, wobei es sich bei der zusätzlich mittels Hashfunktion gesicherten digitalen Signatur (134) um eine Merkle-Signatur handelt.

15. Blockchain (110) zur blockchain-basierten Sicherung von digitalen Signaturen, wobei die Blockchain (110) eine Mehrzahl von Blöcken umfasst, wobei jeder nachfolgende Block der Blockchain (110) jeweils einen Hashwert des Inhalts eines unmittelbar vorangehenden Blocks der Blockchain (110) umfasst, wobei in den Blöcken der Blockchain (110) eine Mehrzahl von Hashwerten (136) der mittels der Blockchain (110) zu sichernden digitalen Signaturen (134) eingetragen ist.

16. Blockchain nach Anspruch 15, wobei die zu sichernden digitalen Signaturen (134) jeweils zusätzlich mittels einer Hashfunktion gesichert sind, wobei die Sicherung der Signaturen (134) mittels Hashfunktion eine Verwendung der Hashfunktion zur Erzeugung kryptographischer Schlüssel (124) umfasst, welche den zu sichernden Signaturen (134) zugeordnet sind, wobei es sich bei den mittels Hashfunktion gesicherten digitalen Signaturen (134) beispielsweise um Merkle-Signaturen handelt.

**Blockchainserver** — 100

**Prozessor** — 102
- Instruktionen — 104
- Hash — 136
- Qual. Zeitstempel — 166
- Block — 106

**Speicher** — 108
- Blockchain — 110

**Schnittstelle** — 112

**Zeitstempelserver** — 150

**Speicher** — 152
- Öfftl. Schlüssel — 154
- Priv. Schlüssel — 156 / 158

**Prozessor** — 160
- Instruktionen — 162
- Zeitangabe — 164
- Qual. Zeitstempel — 166

**Uhr** — 168

**Schnittstelle** — 170

115

**Netzwerk** — 117

**Computersystem** — 120

**Speicher** — 122
- Öfftl. Schlüssel — 124
- Dokument — 125
- Priv. Schlüssel — 126 / 128

**Prozessor** — 130
- Instruktionen — 132
- Signatur — 134
- Hash — 136

**Nutzerschnittstelle** — 138

**Schnittstelle** — 140

Fig. 1

**Blockchainserver** — 100

**Prozessor** — 102
- Instruktionen — 104
- Hash — 136
- Qual. Zeitstempel — 166
- Block — 106

**Speicher** — 108
- Blockchain — 110

**Schnittstelle** — 112

101

**Zeitstempelserver** — 150

**Speicher** — 152
- Öfftl. Schlüssel — 154
- Priv. Schlüssel — 156 / 158

**Prozessor** — 160
- Instruktionen — 162
- Zeitangabe — 164
- Qual. Zeitstempel — 166

**Uhr** — 168

**Schnittstelle** — 170

**Netzwerk** — 117

**Computersystem** — 120

**Speicher** — 122
- Öfftl. Schlüssel — 124
- Lesezertifikat — 142
- Priv. Schlüssel — 126 / 128

**Prozessor** — 130
- Instruktionen — 132
- Signatur — 134
- Hash — 136
- Prüfbericht — 137

**Nutzerschnittstelle** — 138

**Schnittstelle** — 140

**Schnittstelle** — 144

**ID -Dokument** — 180

**Speicher** — 182 / 184
- Nutzerattribute — 186

**Prozessor** — 188
- Instruktionen — 190

**Schnittstelle** — 192

Fig. 2

| Bereitstellen Blockchain | 200 |

| Empfangen Eintragungsanfrage mit Hashwert | 202 |

| Erstellen zusätzlicher Block mit Hashwert | 208 |

| Hinzufügen zusätzlicher Block | 210 |

Fig. 3

| | |
|---|---|
| Bereitstellen Blockchain | **200** |

↓

| | |
|---|---|
| Empfangen Eintragungsanfrage mit Hashwert | **202** |

↓

| | |
|---|---|
| Senden Ausstellanfrage | **204** |

↓

| | |
|---|---|
| Empfangen qualifizierter Zeitstempel | **206** |

↓

| | |
|---|---|
| Erstellen zusätzlicher Block mit Hashwert und qualifiziertem Zeitstempel | **208** |

↓

| | |
|---|---|
| Hinzufügen zusätzlicher Block | **210** |

Fig. 4

| Empfangen Validierungsanfrage | 220 |
|---|---|

| Prüfen Blockchain | 222 |
|---|---|

Eintragung mit Hashwert? — 224

NEIN

JA

| Senden Validierungsbestätigung | 226 |
|---|---|

| Senden Validierungsverneinung | 228 |
|---|---|

Fig. 5

| Empfangen Eintragungsanfrage mit öfftl. Schlüssel | <u>230</u> |
|---|---|

↓

| Eintragen öfftl. Schlüssel | <u>232</u> |
|---|---|

Fig. 6

| Empfangen Eintragungsanfrage mit Hashwert öfftl. Schlüssel | <u>234</u> |
|---|---|

↓

| Eintragen Hashwert öfftl. Schlüssel | <u>236</u> |
|---|---|

Fig. 7

| Empfangen Eintragungsanfrage mit Zertifikat | <u>240</u> |
|---|---|

↓

| Eintragen Zertifikat | <u>242</u> |
|---|---|

Fig. 8

| Empfangen Eintragungsanfrage mit Hashwert Zertifikat | <u>244</u> |
|---|---|

↓

| Eintragen mit Hashwert Zertifikat | <u>246</u> |
|---|---|

Fig. 9

| Prüfen Attribute ID-Dokument | 250 |
| Erstellen Prüfbericht | 252 |
| Erstellen Signatur Prüfbericht | 254 |
| Berechnen Hashwert Signatur | 256 |
| Senden Hashwert Signatur | 258 |

Fig. 10

| | |
|---|---|
| **Erstellen Zertifikat** | **260** |

| | |
|---|---|
| **Erstellen Signatur Zertifikat** | **262** |

| | |
|---|---|
| **Berechnen Hashwert Signatur** | **264** |

| | |
|---|---|
| **Senden Hashwert Signatur** | **266** |

Fig. 11

Fig. 12

Fig. 13

Fig. 14

Fig. 15

Europäisches
Patentamt

European
Patent Office

Office européen
des brevets

# EUROPÄISCHER RECHERCHENBERICHT

**Nummer der Anmeldung**

EP 24 16 7176

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | BULDAS AHTO ET AL: "A Blockchain-Assisted Hash-Based Signature Scheme", 2. November 2018 (2018-11-02), ADVANCES IN DATABASES AND INFORMATION SYSTEMS; [LECTURE NOTES IN COMPUTER SCIENCE; LECT.NOTES COMPUTER], SPRINGER INTERNATIONAL PUBLISHING, CHAM, PAGE(S) 138 - 153, XP047494850, ISBN: 978-3-319-10403-4 [gefunden am 2018-11-02] * sections 2-5, figures 2, 3, 4, 6 * ----- | 1-16 | INV. H04L9/32 H04L9/00 |
| A | ALGHAMDI SARAH ET AL: "The Future of Cryptocurrency Blockchains in the Quantum Era", 2021 IEEE INTERNATIONAL CONFERENCE ON BLOCKCHAIN (BLOCKCHAIN), IEEE, 6. Dezember 2021 (2021-12-06), Seiten 544-551, XP034046131, DOI: 10.1109/BLOCKCHAIN53845.2021.00082 [gefunden am 2022-01-12] * das ganze Dokument * ----- | 1-16 | |

**RECHERCHIERTE SACHGEBIETE (IPC)**

H04L

Der vorliegende Recherchenbericht wurde für alle Patentansprüche erstellt

| Recherchenort | Abschlußdatum der Recherche | Prüfer |
|---|---|---|
| München | 2. August 2024 | Spranger, Stephanie |

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- A certified digital signature. **Z.B. RALPH ; C. MERKLE.** CRYPTO. Springer, 1989, vol. 435, 218-238
- Hash based digital signature schemes. **CHRIS DODS et al.** Cryptography and Coding. Springer Verlag, November 2005, 96-115
- **Z.B. DANIEL BLEICHENBACHER ; UELI M. MAURER.** Directed acyclic graphs, one-way functions and digital signatures. *Lecture Notes in Computer Science,* 1994, vol. 839, 75-82
- **Z.B. ADRIAN PERRIG.** The BiBa one-time signature and broadcast authentication protocol. *ACM Conference on Computer and Communications Security,* 2001, 28-37
- Better than BiBa: Short One-time Signatures with Fast Signing and Verifying. **Z.B. LEONID REYZIN ; NATAN REYZIN.** Information Security and Privacy. Springer Berlin/Heidelberg, 2002, vol. 2384, 1-47